# EUROPÄISCHE PATENTSCHRIFT

(11) **EP 0 627 471 B1**
(45) Veröffentlichungstag und Bekanntmachung des Hinweises auf die Patenterteilung: **23.08.2000**
(21) Anmeldenummer: 94107916.2
(22) Anmeldetag: 24.05.1994
(51) Int. Cl.: C09B 62/006, C09B 62/026, C09B 62/507, D06P 3/14, D06P 3/24, D06P 3/66

(54) **Reaktivfarbstoffe**
Reactive dyes
Colorants reactifs

(30) Priorität: 04.06.1993 DE 4318620
(43) Veröffentlichungstag der Anmeldung: 07.12.1994
(73) Patentinhaber: BAYER AG, 51368 Leverkusen (DE)
(72) Erfinder: Bootz, Konrad, Dr., D-58300 Wetter (DE); Bock, Eckhard, D-51515 Kürten (DE); Hoppe, Manfred, Dr., D-51515 Kürten (DE); Reddig, Wolfram, Dr., D-51373 Leverkusen (DE)

(56) Entgegenhaltungen:
- EP-A- 0 126 026
- EP-A- 0 133 843
- EP-A- 0 167 490
- EP-A- 0 307 817
- EP-A- 0 443 165
- EP-A- 0 525 572

## Beschreibung

Die Erfindung betrifft neue trifunktionelle Reaktivfarbstoffe, ihre Herstellung und Verwendung.

Reaktivfarbstoffe sind bereits aus zahlreichen Veröffentlichungen bekannt, siehe DE-A 30 19 960 (US-A-4 515 598), DE-A-19 22 940, EP-A-132 223 (US-A-37 18 641), EP-A-167 490, EP-A-133 843 (US-A-4 746 732, US-A-4 935 501, US-A-4 996 304), EP-A-40 806 und EP-A-307 817 (US-A-4 649 193).

Der vorliegenden Erfindung liegt die Aufgabe zugrunde, verbesserte Reaktivfarbstoffe zur Verfügung zu stellen.

Die Erfindung betrifft Reaktivfarbstoffe der Formel 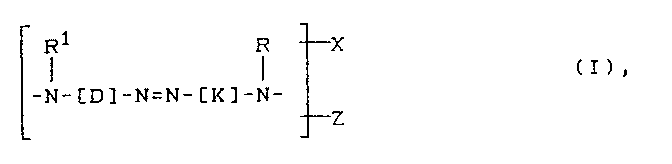 worin
- D =: Rest einer Diazokomponente der Benzol- oder Naphthalinreihe,
- K =: Rest einer Kupplungskomponente der Formel 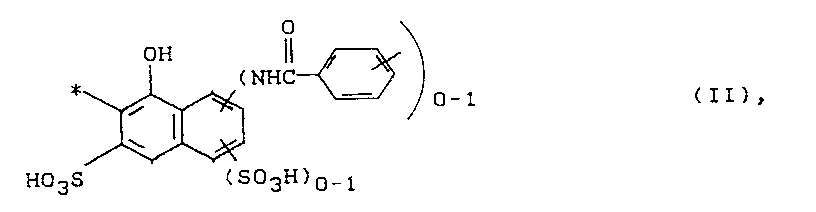 wobei der Rest der Formel II und die Azo-Gruppe über die mit * markierte Bindung miteinander verknüpft sind,
- X =: Rest der Formel 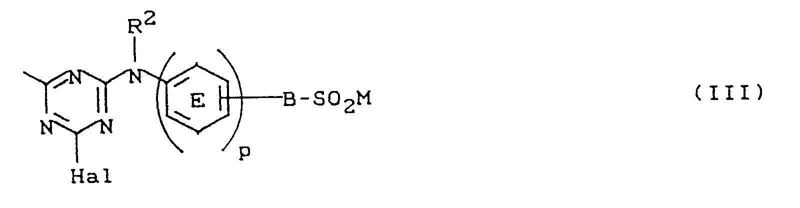 und der Benzolring E gegebenenfalls weiter substituiert ist, wobei als Substituenten Cl, Br, SO₃H, COOH, C₁-C₄-Alkyl und C₁-C₄-Alkoxy bevorzugt sind,
- Z =: heterocyclischer faserreaktiver Rest, der von X verschieden ist,
- R, R¹ =: unabhängig voneinander H, gegebenenfalls mit Substituenten wie bspw. Halogen, OH, COOH, SO₃H oder OSO₃H substituiertes C₁-C₆-Alkyl,
- R² =: C₁-C₄-Alkyl oder Phenyl, das gegebenenfalls durch beispielsweise C₁-C₄-Alkyl, SO₃H, COOH, C₁-C₄-Alkoxy, Cl oder Br substituiert ist,
- Hal =: Halogen, insbesondere F oder Cl,
- p =: 0 oder 1
- B =: -(CH₂)ₘ- oder -(CH₂)₂-O-(CH₂)₂-
- m =: eine Zahl von 1 bis 6 und
- M =: CH=CH₂ oder CH₂CH₂-V bedeutet, worin
- V =: OH oder alkalisch abspaltbarer Rest, z.B. OSO₃H, SSO₃H, OCOCH₃, OPO₃H₂, OSO₂CH₃, SCN, NHSO₂CH₃, Cl, Br, F, OCOC₆H₅, OSO₂-C₆H₄, [N(CH₃)₃]^{⊕}Anion^{⊖} oder gegebenenfalls substituierter Pyridinium-Rest (Substituenten am Pyridinium-Rest sind insbesondere gegebenenfalls substituiertes C₁-C₄-Alkyl, COOH, SO₃H, CN, Carbonamid), (Anion^{⊖} = z.B. Cl^{⊖}, HSO₄^{⊖}, HCO₃^{⊖} usw).

Geeignete faserreaktive Reste Z, d.h. solche die mit den OH-oder NH-Gruppen der Faser unter Färbebedingungen unter Ausbildung kovalenter Bindungen reagieren, sind vorzugsweise solche, die mindestens einen reaktiven Substituenten an einen 5- oder 6-gliedrigen aromatisch-heterocyclischen Ring gebunden enthalten, bspw. an einen Monoazin-, Diazin- oder Triazinring, insbesondere einen Pyridin-, Pyrimidin-, Pyridazin-, Pyrazin-, Thiazin-, Oxazin- oder asymmetrischen oder symmetrischen Triazin-ring, oder an ein derartiges Ringsystem, welches einen oder mehrere ankondensierte aromatisch-carbocyclische Ringe aufweist, bspw. ein Chinolin-, Phthalazin-, Cinnolin-, Chinazolin-, Chinoxalin-, Acridin-, Phenazin- oder Phenanthridin-Ring-System, und die an kein weiteres Chromophor gebunden sind.

Unter den reaktiven Substituenten am Heterocyclus sind beispielsweise zu erwähnen Halogen (Cl, Br oder F), Ammonium einschließlich Hydrazinium, Pyridinium, Picolinium, Carboxypyridinium, Sulfonium, Sulfonyl, Azido-(N₃), Rhodanido, Thiolether, Oxyether, Sulfinsäure und Sulfonsäure.

Im einzelnen sind beispielsweise folgende Reste für Z zu nennen:
2,4-Difluortriazinyl-6-, 2,4-Dichlortriazinyl-6-, Monohalogen-sym.-triazinylreste, insbesondere Monochlor- und Monofluortriazinylreste, die durch Alkyl, Aryl, Amino, Monoalkylamino, Dialkylamino, Aralkylamino, Arylamino, Morpholino, Piperidino, Pyrrolidino, Piperazino, Alkoxy, Aryloxy, Alkylthio, Arylthio substituiert sind, wobei Alkyl vorzugsweise gegebenenfalls substituiertes C₁-C₄-Alkyl, Aralkyl vorzugsweise gegebenenfalls substituiertes Phenyl-C₁-C₄-alkyl und Aryl vorzugsweise gegebenenfalls substituiertes Phenyl oder Naphthyl bedeutet und wobei bevorzugte Substituenten für Alkyl Halogen, Hydroxy, Cyan, Dialkylamino, Morpholino, C₁-C₄-Alkoxy, Carboxy, Sulfo oder Sulfato sind und für Phenyl und Naphthyl, Sulfo, C₁-C₄-Alkyl, C₁-C₄-Alkoxy, Carboxy, Halogen, Acylamino, Hydroxy und Amino. Weiter zu nennen sind 2-Amino-4-fluor-triazinyl-6, 2-Methylamino-4-fluortriazinyl-6, 2-Ethylamino-4-fluortriazinyl-6, 2-Isopropylamino-4-fluor-triazinyl-6, 2-Dimethylamino-4-fluortriazinyl-6, 2-Diethylamino-4-fluor-triazinyl-6, 2-β-Methoxy-ethylamino-4-fluor-triazinyl-6, 2-β-Hydroxyethylamino-4-fluor-triazinyl-6, 2-Di-(β-hydroxyethylamino)-4-fluor-triazinyl-6, 2-Carboxymethylamino-4-fluor-triazinyl-6, 2-Di-(carboxymethylamino)-4-fluor-triazinyl-6, 2-Sulfomethyl-methylamino-4-fluor-triazinyl-6, 2-β-Cyanethylamino-4-fluor-triazinyl-6, 2-Benzylamino-4-fluor-triazinyl-6, 2-β-Phenylethylamino-4-fluor-triazinyl-6, 2-Benzyl-methylamino-4-fluor-triazinyl-6, 2-(4'-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2',5'-Disulfophenyl)-amino-4-fluor-triazinyl-6, 2-(o-, m-, p-Chlorphenyl)-amino-4-fluor-triazinyl-6, 2-(o-, m-, p-Methoxyphenyl)-amino-4-fluor-triazinyl-6, 2-(2'-Methyl-4'-sulfophenyl)-amino-4-fluor-triazinyl-6, 2-(2'-Methyl-5'-sulfophenyl)-amino-4-fluor-triazinyl-6, 2-(2'-Chlor-4'-sulfophenyl)-amino-4-fluor-triazinyl-6, 2-(2'-Chlor-5'-sulfophenyl)-amino-4-fluor-triazinyl-6, 2-(2'-Methoxy-4'-sulfophenyl)-amino-4-fluor-triazinyl-6, 2-(o-, m-, p-Carboxyphenyl)-amino-4-fluor-triazinyl-6, 2-(2',4'-Disulfophenyl)-amino-4-fluor-triazinyl-6, 2-(3',5'-Disulfophenyl)-amino-4-fluor-triazinyl-6, 2-(2'-Carboxy-4'-sulfophenyl)-amino-4-fluor-triazinyl-6, 2-(2'-Carboxy-5'-sulfophenyl)-amino-4-fluor-triazinyl-6, 2-(6'-Sulfonaphthyl-(2'))-amino-4-fluor-triazinyl-6, 2-(4',8'-Disulfonaphthyl-(2'))-amino-4-fluor-triazinyl-6, 2-(6',8'-Disulfonaphthyl-(2'))-amino-4-fluor-triazinyl-6, 2-(N-Methyl-N-phenyl)-amino-4-fluor-triazinyl-6, 2-(N-Ethyl-N-phenyl)-amino-4-fluor-triazinyl-6, 2-(N-β-Hydroxyethyl-N-phenyl)-amino-4-fluor-triazinyl-6, 2-(N-iso-Propyl-N-phenyl)-amino-4-fluor-triazinyl-6, 2-Morpholino-4-fluor-triazinyl-6, 2-Piperidino-4-fluor-triazinyl-6, 2-(4',6',8'-Trisulfonaphthyl-(2'))-amino-4-fluor-triazinyl-6, 2-(3',6',8'-Trisulfonaphthyl-(2'))-amino-4-fluor-triazinyl-6, 2-(3',6'-Disulfonaphthyl-(1'))-amino-4-fluor-triazinyl-6, N-Methyl-N-(2,4-dichlortriazinyl-6)-carbamyl-, N-Methyl-N-(2-methylamino-4-chlortriazinyl-6)-carbamyl-, N-Methyl-N-(2-dimethylamino-4-chlortriazinyl-6)-carbamyl-, N-Methyl-bzw. N-Ethyl-N-(2,4-dichlortriazinyl-6)-aminoacetyl-, 2-Methoxy-4-fluor-triazinyl-6, 2-Ethoxy-4-fluor-triazinyl-6, 2-Phenoxy-4-fluor-triazinyl-6, 2-(o-, m- oder p-Sulfophenoxy)-4-fluor-triazinyl-6, 2-(o-, m-oder p-Methyl- oder -Methoxy-phenoxy)-4-fluor-triazinyl-6, 2-β-Hydroxyethylmercapto-4-fluor-triazinyl-6, 2-Phenylmercapto-4-fluor-triazinyl-6, 2-(4'-Methylphenyl)-mercapto-4-fluortriazinyl-6, 2-(2',4'-Dinitrophenyl)-mercapto-4-fluor-triazinyl-6, 2-Methyl-4-fluor-triazinyl-6, 2-Phenyl-4-fluor-triazinyl-6 sowie die entsprechenden 4-Chlor- bzw. 4-Brom-triazinyl-Reste und die entsprechenden durch Halogenaustausch mit tertiären Basen wie Trimethylamin, Triethylamin, Dimethyl-β-hydroxyethylamin, Triethanolamin, N,N-Dimethylhydrazin, Pyridin, α-, β- oder γ-Picolin, Nicotinsäure oder Isonicotinsäure, Sulfinaten insbesondere Benzolsulfinsäure oder Hydrogensulfit erhältlichen Reste sowie Di- oder Trihalogenpyrimidinylreste, wie 2,4-Dichlorpyrimidinyl-6, 2,4,5-Trichlor-pyrimidinyl-6, 4,5-Dichlorpyrimidinyl-6-, 2,4-Difluorpyrimidinyl-6-, 4,5-Difluor-pyrimidinyl-6-, 4-Fluor-5-chlorpyrimidinyl-6-, 2,4-Difluor-5-chlorpyrimidinyl, sowie 2,3-Dichlorchinoxalin-5-carbonyl und 2,3-Dichlorchinoxalin-6-carbonyl.

Die Reaktivfarbstoffe der Formel (I) besitzen zwei mögliche Formen

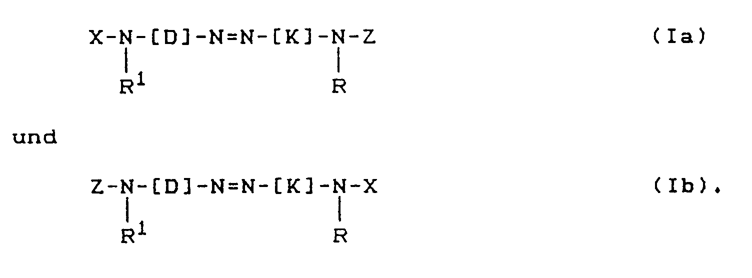

Bevorzugt sind Reaktivfarbstoffe der Formel I, worin
- K: einen bivalenten Rest einer Kupplungskomponente der allgemeinen Formel 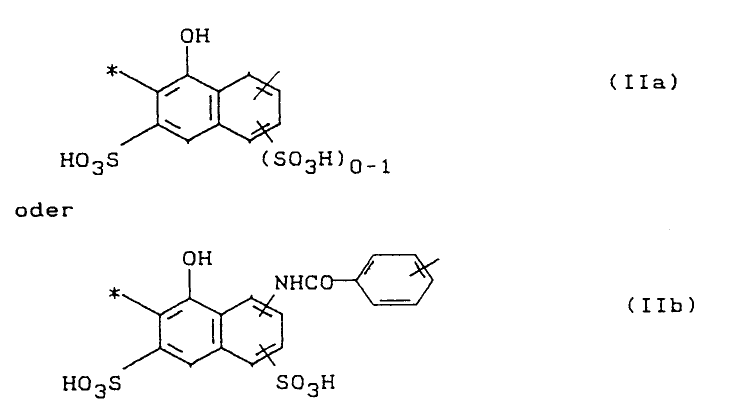 bedeutet, wobei der Rest (IIa) bzw. (IIb) und die Azogruppe über die mit * markierte Bindung miteinander verknüpft sind,
- D: einen Rest einer Diazokomponente der allgemeinen Formel 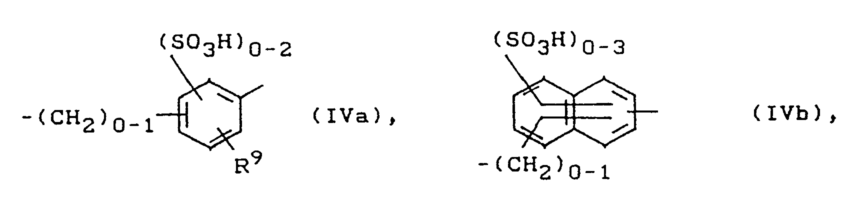 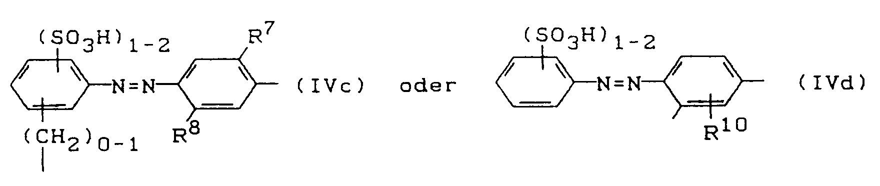 bedeutet, und
- R⁷ =: H, C₁-C₄-Alkyl, C₁-C₄-Alkoxy, OH oder SO₃H,
- R⁸ =: H, C₁-C₄-Alkyl, C₁-C₄-Alkoxy, Acylamino, insbesonder C₁-C₄-Alkylcarbonylamino, C₁-C₄-Alkylsulfonylamino oder Aminocarbonylamino,
- R⁹ und R¹⁰ =: unabhängig voneinander H, CH₃, C₂H₅ oder OCH₃
und X, R, Z und R¹ die oben angegebenen Bedeutungen besitzen.

Außerdem bevorzugt sind Reaktivfarbstoffe der Formel (Ia), 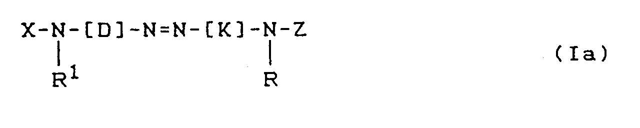 worin
- K: einen Rest der Formel (IIc) 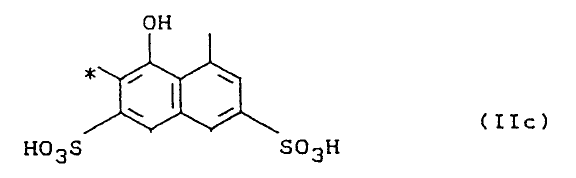
bedeutet: worin der Rest der Formel (IIc) und die Azogruppe über die mit * markierte Bindung miteinander verknüpft sind,
- R: für Wasserstoff steht,
- Z: einen Rest der Formel 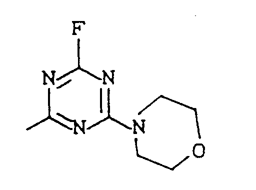
bedeutet und D, R¹ und X die oben angegebene Bedeutung besitzen.

In einer weiteren bevorzugten Ausführungsform sind Farbstoffe der Formel I bevorzugt, worin
- X: einen Rest der Formel 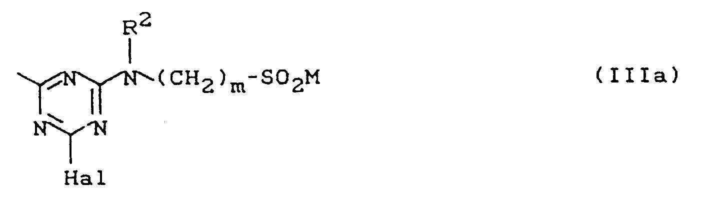 bedeutet, worin
- R² =: gegebenenfalls mit vorzugsweise CH₃, C₂H₅ oder SO₃H substituiertes Phenyl, insbesondere unsubstituiertes Phenyl,
- m =: 2 oder 3,
- Hal =: F oder Cl,
- M =: CH=CH₂ oder CH₂CH₂V mit
- V =: Cl oder OSO₃H.

Weiterhin bevorzugt sind erfindungsgemäße Reaktivfarbstoffe der Formel (I) bzw. (Ia) - (Ib), worin Z ein faserreaktiver fluorhaltiger Pyrimidinyl-6-Rest oder ein Rest der Formel 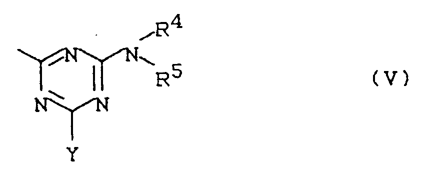 bedeutet, worin
- R⁴ und R⁵: unabhängig voneinander H, gegebenenfalls durch Substituenten wie beispielsweise Halogen, Cyano, C₁-C₄-Alkoxy, Hydroxy, Phenyl, Carboxy, Sulfo oder Sulfato substituiertes C₁-C₄-Alkyl und C₅-C₆-Cycloalkyl, beispielsweise Benzyl, Phenethyl oder Cyclohexyl, gegebenenfalls durch Substituenten wie Halogen, Nitro, Cyano, Trifluormethyl, Sulfamoyl, Carbamoyl, C₁-C₄-Alkyl, C₁-C₄-Alkoxy, C₁-C₄-Alkanoylamino, Benzoylamino, Ureido, Hydroxy, Carboxy, Sulfomethyl oder Sulfo substituiertes C₆-C₁₀-Aryl, insbesondere Phenyl oder Naphthyl bedeutet,
oder worin R⁴ und R⁵ zusammen mit dem Aminostickstoffatom einen Morpholino-, Piperidino- oder Piperazinorest bilden, und worin Y = Cl, F oder ein gegebenenfalls mit beispielsweise COOH oder SO₃H substituierter Pyridiniumrest ist.

Besonders bevorzugt sind Reaktivfarbstoffe der Formel (I), worin
- X=: 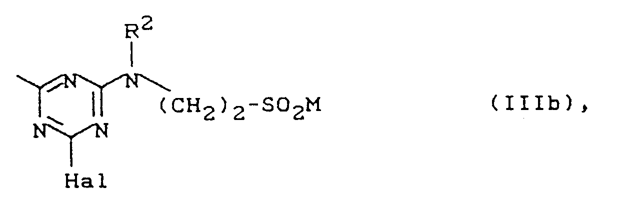
mit
- R² =: Phenyl,
- Hal =: F oder Cl,
- M =: CH=CH₂ oder CH₂CH₂OSO₃H und
- D, K, Z, R und R¹: die oben genannte Bedeutung haben.

Als besonders bevorzugt gelten Reaktivfarbstoffe der Formeln (2)-(12) 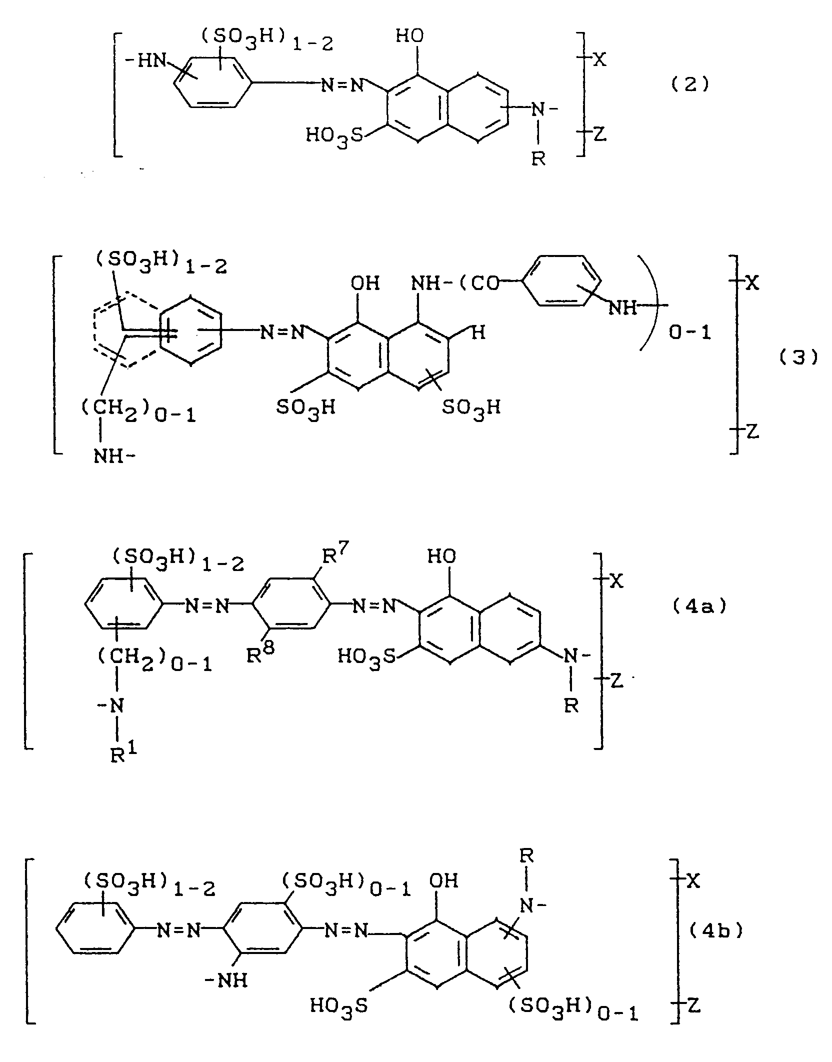 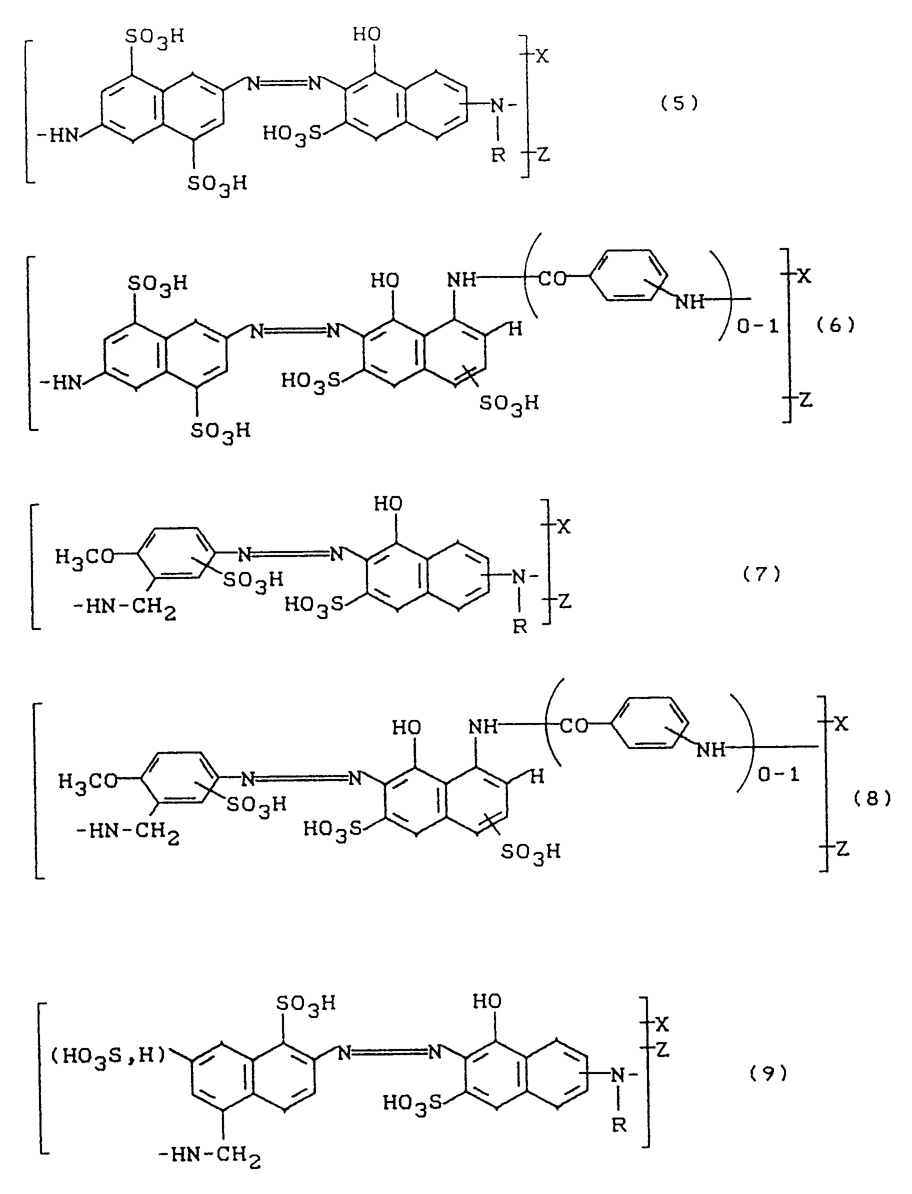 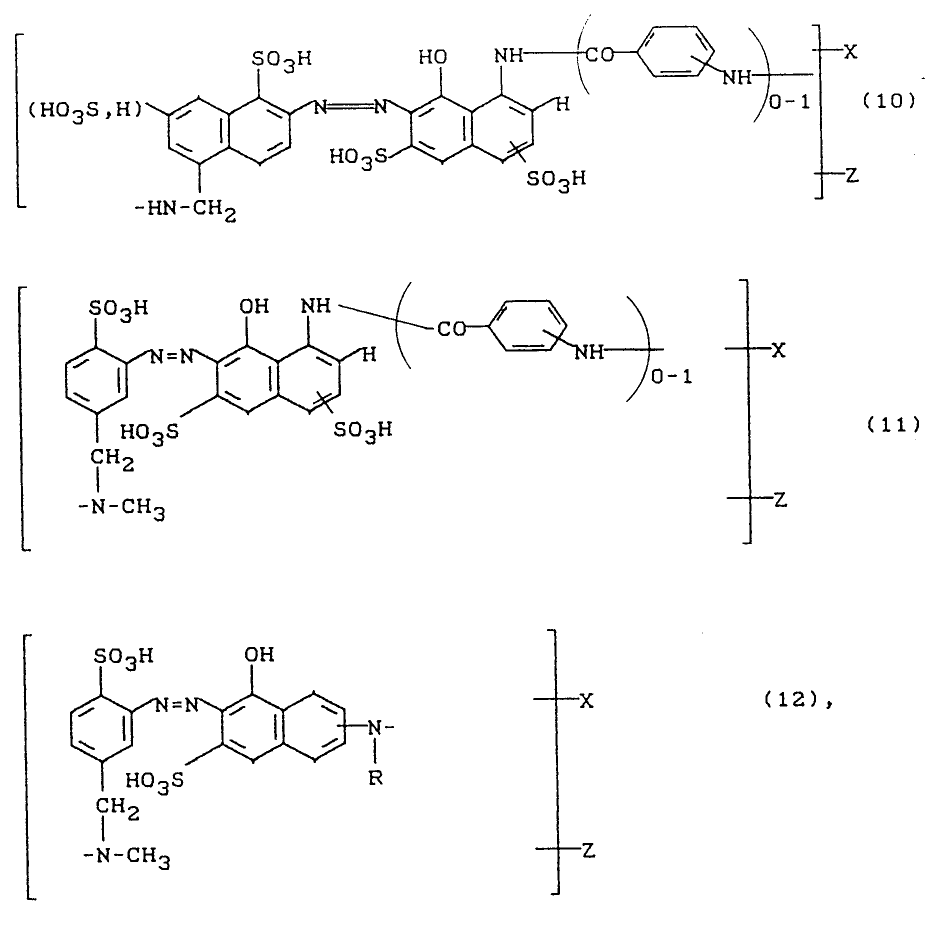 worin
- R =: H, CH₃ oder Ethyl und
- R¹, R⁷, R⁸, X und Z: die obengenannte Bedeutung besitzen.

Ganz besonders bevorzugt sind Reaktivfarbstoffe der Formel (13) 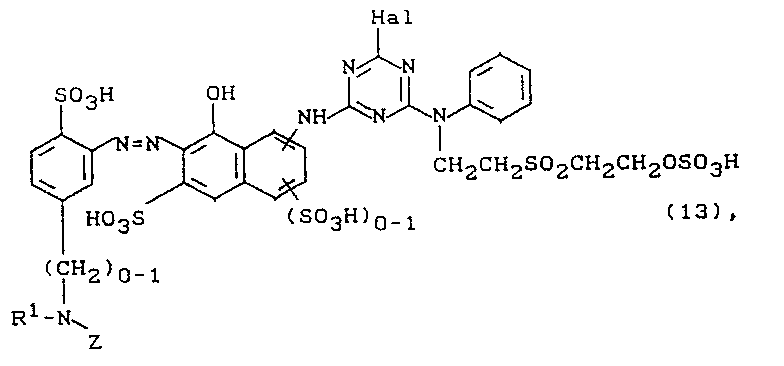 worin
- Z =: einen faserreativer Pyrimidinyl-Rest ist,
- R¹ =: H, CH₃ oder C₂H₅ ist und
- Hal: für F oder Cl steht.

Ganz besonders bevorzugt sind aber vor allem Reaktivfarbstoffe der Formel (14) 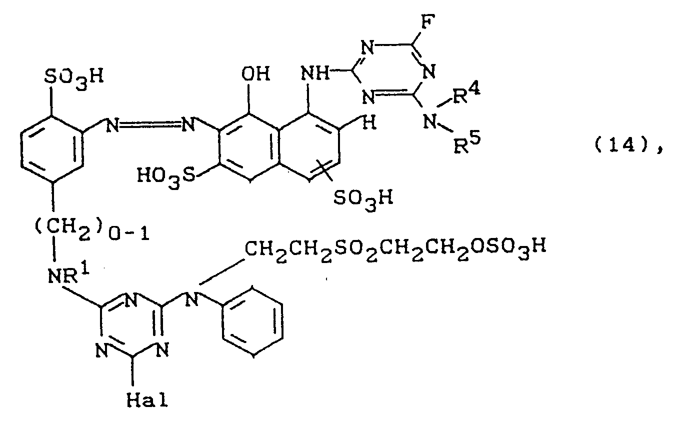 worin
- Hal =: Cl oder F,
- R¹ =: H, CH₃ oder C₂H₅ und
- R⁴ und R⁵: die oben genannte Bedeutung haben.

Besonders bevorzugt sind vor allem Reaktivfarbstoffe der Formel (2) bis (14), worin Z ein mit -NR₄R₅ substituierter Fluor-s-triazin-Rest ist, wobei -NR₄R₅ vorzugsweise steht für : -NH₂, Morpholino, N-β-Hydroxyethylamino, N,N-Di-β-hydroxyethylamino, β-Sulfoethylamino, Phenylamino, das gegebenenfalls am Phenylkern substituiert ist durch Chlor, Methyl, Ethyl, Methoxy, Ethoxy, Acetylamino, Hydroxy, Carboxy, Sulfomethyl oder Sulfo, N-C₁₋₄-Alkyl-phenylamino, das gegebenenfalls am Phenylkern substituiert ist durch Chlor, Methyl oder Ethyl, N-(Sulfo-C₁₋₄-alkyl)-phenylamino, das gegebenenfalls am Phenylkern substituiert ist durch Chlor, Methyl oder Ethyl, N-(Hydroxy-C₁₋₄-alkyl-)-phenylamino oder Sulfonaphthylamino ist.

Weiterer Gegenstand der Erfindung ist ein Verfahren zur Herstellung von Reaktivfarbstoffen der Formel (I), dadurch gekennzeichnet, daß man Farbstoffe der Formel 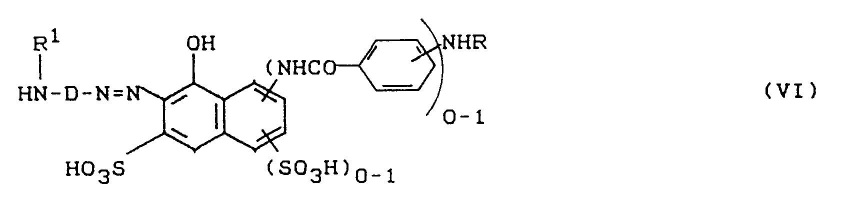 in beliebiger Reihenfolge mit je einem Mol-Equivalent der Reaktivkomponente der Formel 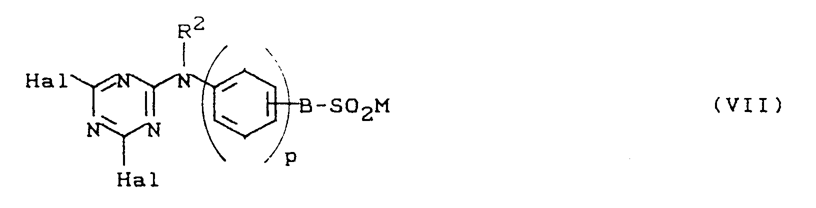 und der Reaktivkomponente der Formel

Z-Hal (VIII)

umsetzt,
oder daß man die entsprechenden Farbstoffvorprodukte der Formeln

R¹-NH-D-NH₂ und

H-K-NHR

jeweils mit je einem Mol-Equivalent der Reaktivkomponente der Formel (VII) oder (VIII) umsetzt und durch Diazotierung und Kupplung und gegebenenfalls weiteren Umwandlungsreaktionen in die Reaktivfarbstoffe der Formel (I) überführt, wobei die Bedeutung der Reste R, R¹, R², Hal, B, p und M der oben angegebenen entspricht.

Bei der Herstellung der bevorzugten Azofarbstoffe besitzen die Diazokomponente und die Kupplungskomponente zusammen zwei Aminogruppen -N(R)H und -N(R¹)H, und gegebenenfalls weitere acylierbare Aminogruppen. Gegebenenfalls verwendet man entsprechende Acetylamino- oder Nitroverbindungen, worin die Acetylamino- bzw. Nitrogruppe vor der Kondensation mit einem Halogentriazin, Halogenpyrimidin oder dergleichen durch Verseifen bzw. Reduktion in die NH₂-Gruppe übergeführt wird. Die Einführung der Reaktivreste X und Z erfolgt durch Kondensation von Farbstoffen oder Farbstoffvorprodukten, welche acylierbare Aminogruppen enthalten, mit faserreaktiven halogenierten Acylierungsmitteln.

Da die einzelnen oben angegebenen Verfahrensschritte in unterschiedlicher Reihenfolge ausgeführt werden können, sind verschiedene Verfahrensvarianten möglich. Im allgemeinen führt man die Umsetzungen schrittweise nacheinander aus, wobei die Reihenfolge der einfachen Reaktionen zwischen den einzelnen Reaktionskomponenten vorteilhafterweise sich nach den besonderen Bedingungen richtet.

Da unter bestimmten Voraussetzungen Hydrolyse eines Halogentriazin- oder Halogenpyrimidinrestes etc. eintritt, muß ein Zwischenprodukt, welches Acetylaminogruppen enthält, zwecks Abspaltung der Acetylgruppen verseift werden, bevor mit einem Aminodifluortriazin oder Trifluortriazin etc. kondensiert wird. Als weitere Umwandlungsreaktion kommt z.B. die nachträgliche Umsetzung eines Dihalogentriazinylrestes mit einem Amin in Betracht, Welche Reaktion bei der Herstellung eines sekundären Kondensationsproduktes aus Amin HNR₄R₅, 2,4,6-Trihalogen-s-triazin und Diaminobenzolsulfonsäure zweckmäßigerweise zuerst ausgeführt wird, die des Trihalogentriazins mit dem Amin oder mit der Diaminobenzolsulfonsäure, ist von Fall zu Fall verschieden und richtet sich vor allem nach der Löslichkeit der beteiligten Aminoverbindungen und der Basizität der zu acylierenden Aminogruppen, Die wichtigsten Verfahrensvarianten sind in den Ausführungsbeispielen dargestellt.

Geeignete Ausgangsverbindungen für die Herstellung von Mono- oder Polyazofarbstoffen (I) sind beispielsweise:

### Diazokomponenten (R¹-NH-D-NH₂)

1,3-Diaminobenzol, 1,4-Diaminobenzol, 1,3-Diamino-4-methylbenzol, 1,3-Diamino-4-ethylbenzol, 1,3-Diamino-4-methoxybenzol, 1,3-Diamino-4-ethoxybenzol, 1,4-Diamino-2-methylbenzol, 1,4-Diamino-2-methoxybenzol, 1,4-Diamino-2-ethoxybenzol, 1,4-Diamino-2,5-dimethylbenzol, 1,4-Diamino-2,5-diethylbenzol, 1,4-Diamino-2-methyl-5-methoxybenzol, 1,4-Diamino-2,5-dimethoxybenzol, 1,4-Diamino-2,5-diethoxybenzol, 2,6-Diamino-naphthalin, 1,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'- bzw. 4'-Aminobenzoylamino)-1-aminobenzol-6-sulfonsäure, 1-(4'-Aminobenzoylamino)-4-aminobenzol-2,5-disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diamino-2-methylbenzol, 4,4'-Diaminodiphenyloxid, 4,4'-Diaminodiphenylharnstoff-2,2'-disulfonsäure, 4,4'-Diaminodiphenyloxyethan-2,2'-disulfonsäure, 4,4'-Diaminostilben-2,2'-disulfonsäure, 4,4'-Diaminodiphenylethan-2,2'-disulfonsäure, 2-Amino-5-aminomethylnaphthalin-1-sulfonsäure, 2-Amino-5-aminomethylnaphthalin-1,7-disulfonsäure, 1-Amino-4-methoxy-5-aminomethylbenzol-6-sulfonsäure, 1-Amino-3-(N-methyl)aminomethylbenzol-6-sulfonsäure, 1-Amino-4-(N-methyl)aminomethylbenzol-3-sulfonsäure, 1-Amino-4-aminomethylbenzol-3-sulfonsäure, 1,3-Diaminobenzol-4-(azophenyl-4'-sulfonsäure), 1,3-Diaminobenzol-4-(azophenyl-2',4'-disulfonäsure), 1,3-Diaminobenzol-6-sulfonsäure-4-(azophenyl-4'-sulfonsäure), 1,3-Diaminobenzol-6-sulfonsäure-4-(azophenyl-3',6'-disulfonsäure).

Wenn als Diazokomponente statt eines Diamins eine Aminoacetylamino-Verbindung eingesetzt werden soll, aus welcher nachträglich die Acetylgruppe durch Verseifen wieder abgespalten wird, wie dies oben in den Erläuterungen der Verfahrensvarianten beschrieben ist, kommen die Monoacetylverbindungen der obengenannten Diazokomponenten in Frage, z.B. 1-Acetylamino-3-aminobenzol-4-sulfonsäure oder 1-Acetylamino-4-aminobenzol-3-sulfonsäure.

### Kupplungskomponenten (H-K-NRH)

1-Amino-8-hydroxynapahthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 2-Amino-5-hydroxynaphthalin-7-sulfonsäure, 2-Methyl- bzw. 2-Ethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. 2-Ethyl-amino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-Acetylamino-8-hydroxynaphthalin-3,6- bzw. -4,6-disulfonsäure, 1-(4'-Aminobenzoylamino)-8-hydroxynaphthalin-3,6- bzw. -4,6-disulfonsäure, 1-(4'-Nitrobenzoylamino)-8-hydroxynaphthalin-3,6- bzw. -4,6-disulfonsäure, 1-(3'-Aminobenzoylamino)-8-hydroxynaphthalin-3,6- bzw. -4,6-disulfonsäure, 1-(3'-Nitrobenzoylamino)-8-hydroxynaphthalin-3,6- bzw. -4,6-disulfonsäure, 1-Amino-8-hydroxynaphthalin-4-sulfonsäure.

Die Diazotierung der Diazokomponenten bzw. der eine diazotierbare Aminogruppe enthaltenden Zwischenprodukte erfolgt in der Regel durch Einwirkung salpetriger Säure in wäßrig-mineralsaurer Lösung bei tiefer Temperatur. Die Kupplung auf die Kupplungskomponente erfolgt bei schwach sauren, neutralen bis schwach alkalischen pH-Werten.

Die Kondensation der Reaktivkomponenten mit den Diazokomponenten und den Kupplungskomponenten und mit den Aminen bzw. mit acylierbaren Monoazo- oder Disazo-Zwischenprodukten bzw. mit den aminogruppenhaltigen Farbstoffen erfolgt vorzugsweise in wäßriger Lösung oder Suspension, bei niedriger Temperatur und bei schwach saurem, neutralem bis schwach alkalischem pH-Wert. Vorteilhaft wird der bei der Kondensation freiwerdende Halogenwasserstoff laufend durch Zugabe wäßriger Alkalihydroxide, -carbonat oder -bicarbonate neutralisiert.

Die angegebenen Formeln sind die der freien Säuren. Bei der Herstellung werden im allgemeinen die Salze erhalten, insbesondere die Alkalisalze wie Natrium-, Kalium- oder Lithiumsalze. Die durch Quarternierung mit Pyridinen entstehende Ladung wird, in Abhängigkeit der Isolierungsbedingungen, durch ein Gegenion z.B. Chlorid, Fluorid oder Sulfat ausgeglichen; oder die Farbstoffe bilden innere Salze mit Sulfo- oder Carboxylgruppen. Die Farbstoffe können auch als konzentrierte Lösungen eingesetzt werden.

Die Reaktivfarbstoffe der Formel (I) eignen sich zum Färben und Bedrucken von natürlichen oder synthetischen hydroxy- oder amidgruppenhaltigen Materialien wie Seide, Leder, Wolle, synthetischen Polyamidfasern, insbesondere aber cellulosehaltiger Materialien faseriger Struktur wie Leinen, Zellstoff, regenerierte Zellulose und vor allem Baumwolle. Sie eignen sich sowohl für das Ausziehverfahren als auch zum Färben nach den üblichen Foulardfärbeverfahren, wonach die Ware mit wäßrigen und gegebenenfalls auch salzhaltigen Farbstofflösungen imprägniert wird, um die Farbstoffe nach einer Alkalibehandlung oder in Gegenwart von Alkali, gegebenenfalls unter Wärmeeinwirkung fixiert werden.

Die Reaktivfarbstoffe der Formel (I) zeichnen sich durch hohe Reaktivität und ausgezeichnetes Fixiervermögen aus. Aufgrund ihrer Trifunktionalität ergeben sie auch aus langer Flotte hohe Fixierausbeuten. Sie sind charakterisiert durch relative Unabhängigkeit der Ergiebigkeit von der Färbetemperatur und können daher nach dem Ausziehverfahren bei niedrigen bis mittleren Färbetemperaturen eingesetzt werden. Beim Klotz-Dämpf-Verfahren erfordern sie nur kurze Dämpfzeiten. Sie ergeben Färbungen hoher Farbstärke mit guten Licht- und Naßechtheiten.

Die in den folgenden Beispielen angegebenen Färbungen werden unter folgenden Bedingungen durchgeführt. Soweit nicht anders angegeben bedeuten Prozente Gewichtsprozente und Teile Gewichtsteile. Die in den Beispielen verwendeten Abkürzungen bedeuten: Ph = Phenyl, Et = Ethyl, Me = Methyl.

### Färbevorschrift 1

2 Teile des Farbstoffes werden in 100 ml Wasser gelöst. Die Lösung gibt man zu 1900 Teilen kaltem Wasser, fügt 60 Teile Natriumchlorid zu und geht mit 100 Teilen eines Baumwollgewebes in dieses Färbebad ein.

Man steigert die Temperatur auf 50°C wobei nach 30 Minuten 40 Teile kalzinierte Soda und nochmals 60 Teile Natriumchlorid zugegeben werden. Man hält die Temperatur 30 Minuten auf 50°C, spült und seift dann die Färbung während 15 Minuten in einer 0,3 %igen kochenden Lösung eines ionenfreien Waschmittels, spült und trocknet.

### Färbevorschrift 2

4 Teile des Reaktivfarbstoffes werden in 50 Teilen Wasser gelöst. Dazu gibt man 50 Teile einer Lösung die pro Liter 5 g Natriumhydroxid und 10 g kalziniertes Soda enthält. Mit der erhaltenen Lösung wird ein Baumwollgewebe foulardiert, so daß es um 70 % seines Gewichtes zunimmt, und dann auf eine Kaule aufgewickelt. Das Baumwollgewebe wird so während 3 bis 12 h bei Raumtemperatur gelagert. Danach wird die gefärbte Ware gespült, während einer Viertelstunde mit einem nichtionogenen Waschmittel kochend geseift, nochmals gespült und getrocknet.

### Beispiel 1

A) 0,15 Mol der Verbindung der Formel 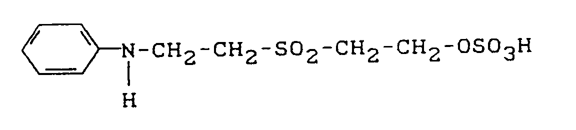 werden in 100 Teilen Wasser und 100 Teilen Eis verrührt und neutral gelöst. Innerhalb von 10 Minuten tropft man bei 0°C und pH 4-4,5 0,165 Mol 2,4,6-Trifluor-1,3,5-triazin zu. Man erhält ca. 250 Teile einer wäßrigen Kondensationslösung (Lösung A) des Kondensationsproduktes mit folgender Struktur: 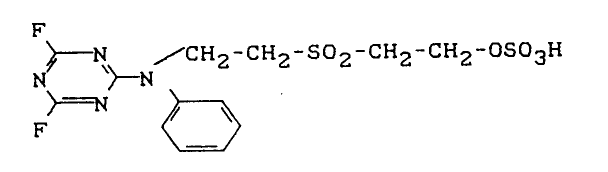
B) 0,13 Mol 2,4-Diaminobenzolsulfonsäure werden in 150 ml Wasser suspendiert und mit Sodalösung bei pH 7-8 gelöst. Diese Lösung läßt man zur obigen Kondenstionslösung (Lösung A) bei pH 6-6,5 tropfen, dabei steigt die Temperatur auf 15-18°C an. Man erhält ca. 450 Teile einer wäßrigen Kondensationslösung (Lösung B) des Kondensationsproduktes mit folgender Struktur 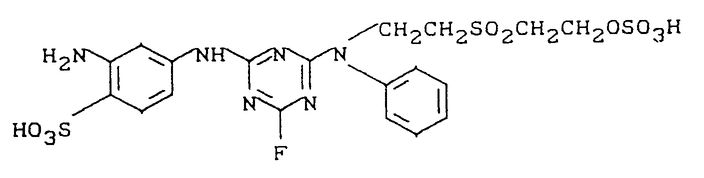
C) 0,15 Mol 1-Amino-8-hydroxynaphthalin-3,6-disulfonsäure werden in 250 ml Wasser bei pH 6,5 gelöst und mit 250 g Eis auf 0° C abgekühlt. 0,16 Mol 2,4,6-Trifluor-1,3,5-triazin (Cyanurfluorid) werden zugegeben und der pH mit Na₂CO₃-Lösung zwischen 3,5 und 4 gehalten. Nach 5 Minuten setzt man 0,15 Mol Morpholin zu und stellt den pH mit Sodalösung auf 7 ein. Die Temperatur steigt dabei auf ca. 10° C an.
D) Das Kondensationsprodukt aus B) (Lösung B) wird bei 0°C und pH 3-3,5 diazotiert und zur Lösung der Kupplungskomponente C) gegeben. Mit Sodalösung wird ein pH von 6-7 eingestellt.
   Nach beendeter Kupplung wird der Farbstoff ausgesalzen, isoliert, getrocknet und gemahlen. Der so erhaltene Farbstoff der Formel 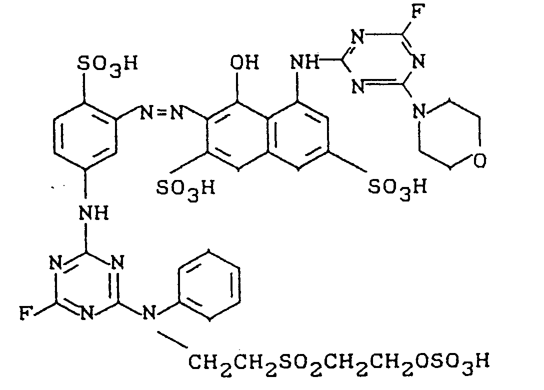 färbt Baumwolle in klaren roten Tönen.

### Beispiel 2

A) 0,15 Mol der Verbindung der Formel 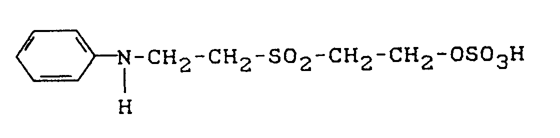 werden in 150 Teilen Wasser und 150 Teilen Eis verrührt und neutral gelöst. Innerhalb von 10 Minuten tropft man bei 0°C und pH 5-5,5 0,155 Mol 2,4,6-Trichlor-1,3,5-triazin zu. Man erhält ca. 350 Teile einer wäßrigen Lösung des Kondensationsprodukte mit folgender Struktur: 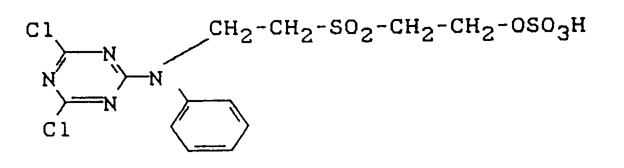
B) Zu dieser Kondensationslösung läßt man eine neutrale Lösung von 0,13 Mol 2,4-Diaminobenzolsulfonsäure tropfen, wobei mit Sodalösung pH 6,5-7,0 gehalten wird. Man erhält eine Diazokomponente der Struktur: 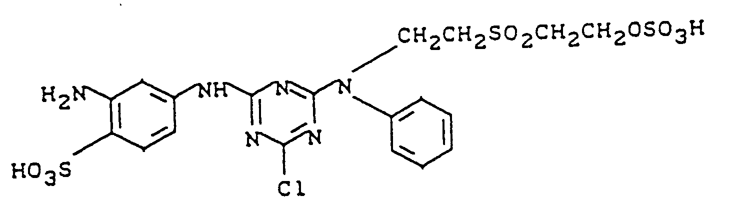
   Diese Diazokomponente wird bei 0°C und pH 3-3,5 diazotiert und zur Lösung der Kupplungskomponente aus Bsp. 1C gegeben, wobei mit Sodalösung ein pH von 6-7 eingestellt und gehalten wird.
   Nach beendeter Kupplung salzt man mit 15 % NaCl aus, isoliert und trocknet. Man erhält 141 g salzhaltigen Farbstoff der Formel 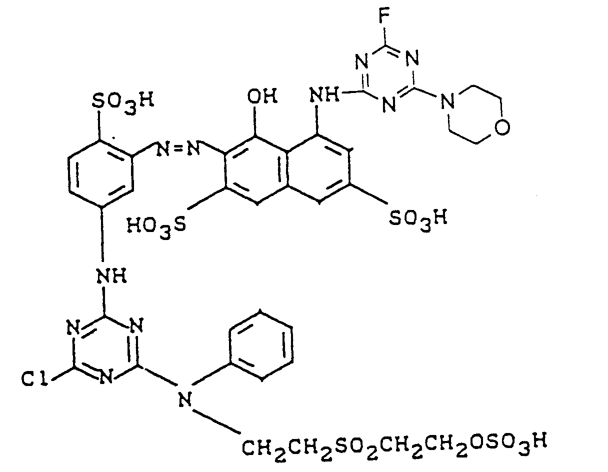
als Pulver, der Baumwolle in klaren roten Tönen färbt.

### Beispiel 3

A) 0,15 Mol 1-Amino-8-hydroxynaphthalin-3,6-disulfonsäure werden in 250 ml Wasser bei pH 6,5 gelöst und mit 200 g Eis auf 0-5°C abgekühlt. Diese Lösung wird auf eine Suspension von 0,16 Mol 2,4,6-Trichlor-1,3,5-triazin (Cyanurchlorid) in 50 ml Wasser und 50 g Eis gegeben und der pH mit NaHCO₃-Lösung zwischen 3,5 und 4 gehalten. Anschließend setzt man 0,15 Mol Morpholin zu und stellt mit Sodalösung pH 7 ein.
B) Zu dieser Lösung gibt man 0,14 Mol einer Lösung, die durch direkte Diazotierung des Kondensationsprodukts aus Beispiel 2B hergestellt wird, und kuppelt bei pH 7-7,5. Nach Aussalzen, Isolieren und Trocknen erhält man einen salzhaltigen Farbstoff, dem die Struktur 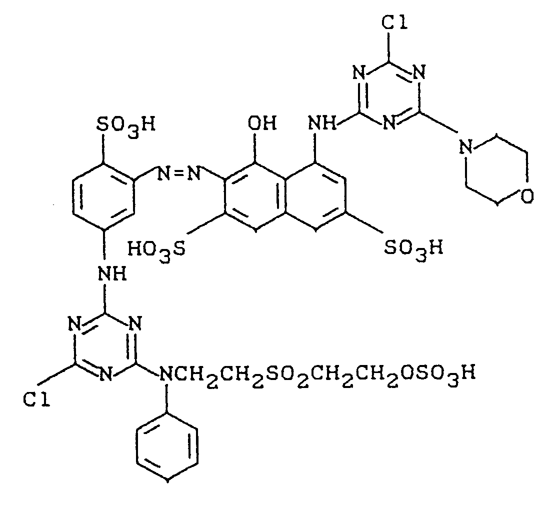
zukommt als Pulver und der Baumwolle in klaren roten Farbtönen färbt.

Die Farbstoffe der folgenden Beispiele 4-45 lassen sich auf analoge Weise herstellen unter Verwendung der aufgeführten Diazo- bzw. Kupplungskomponenten und Amine.

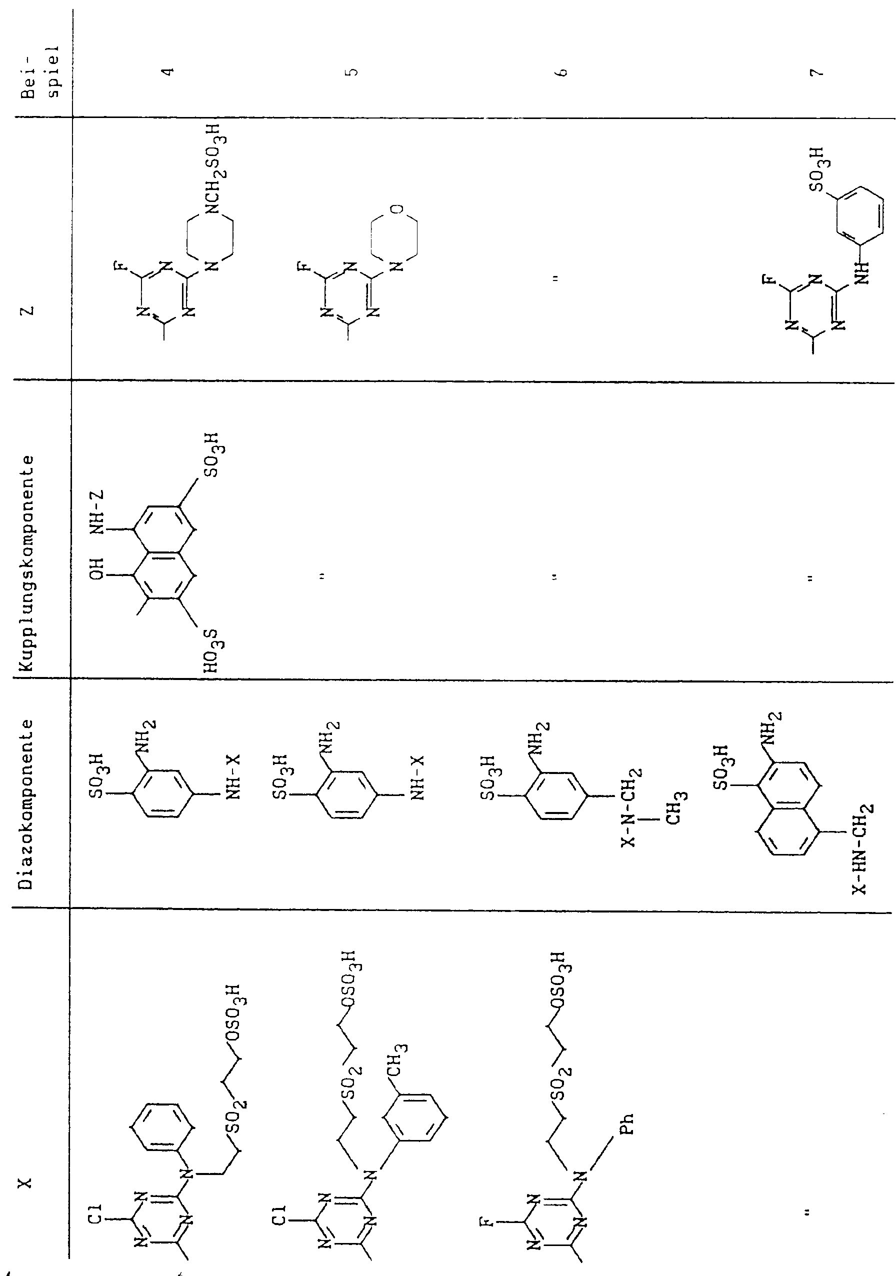

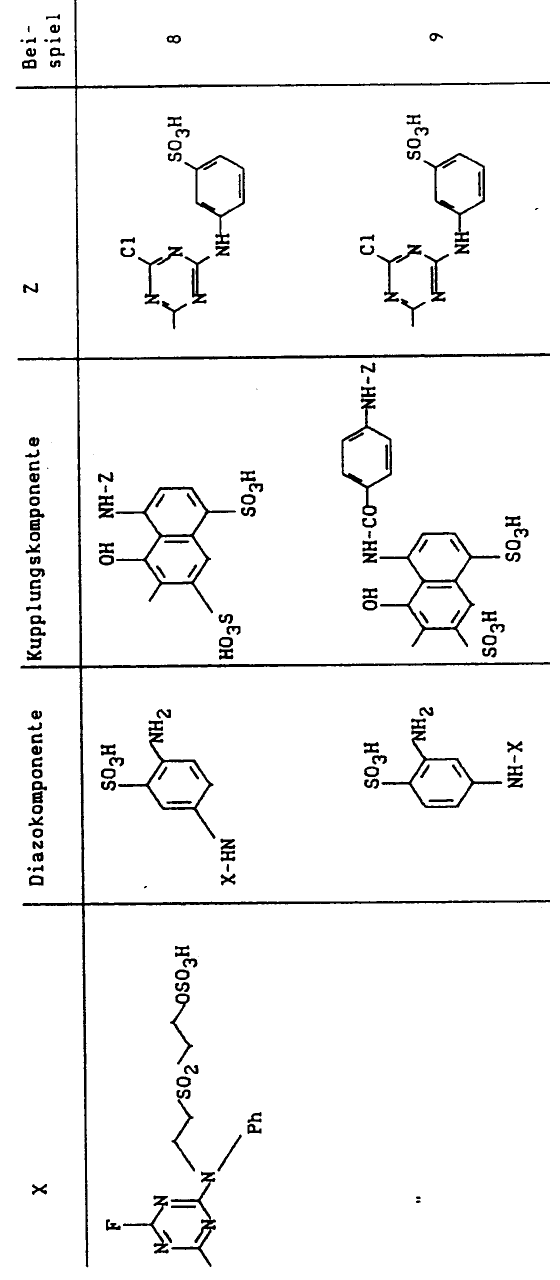

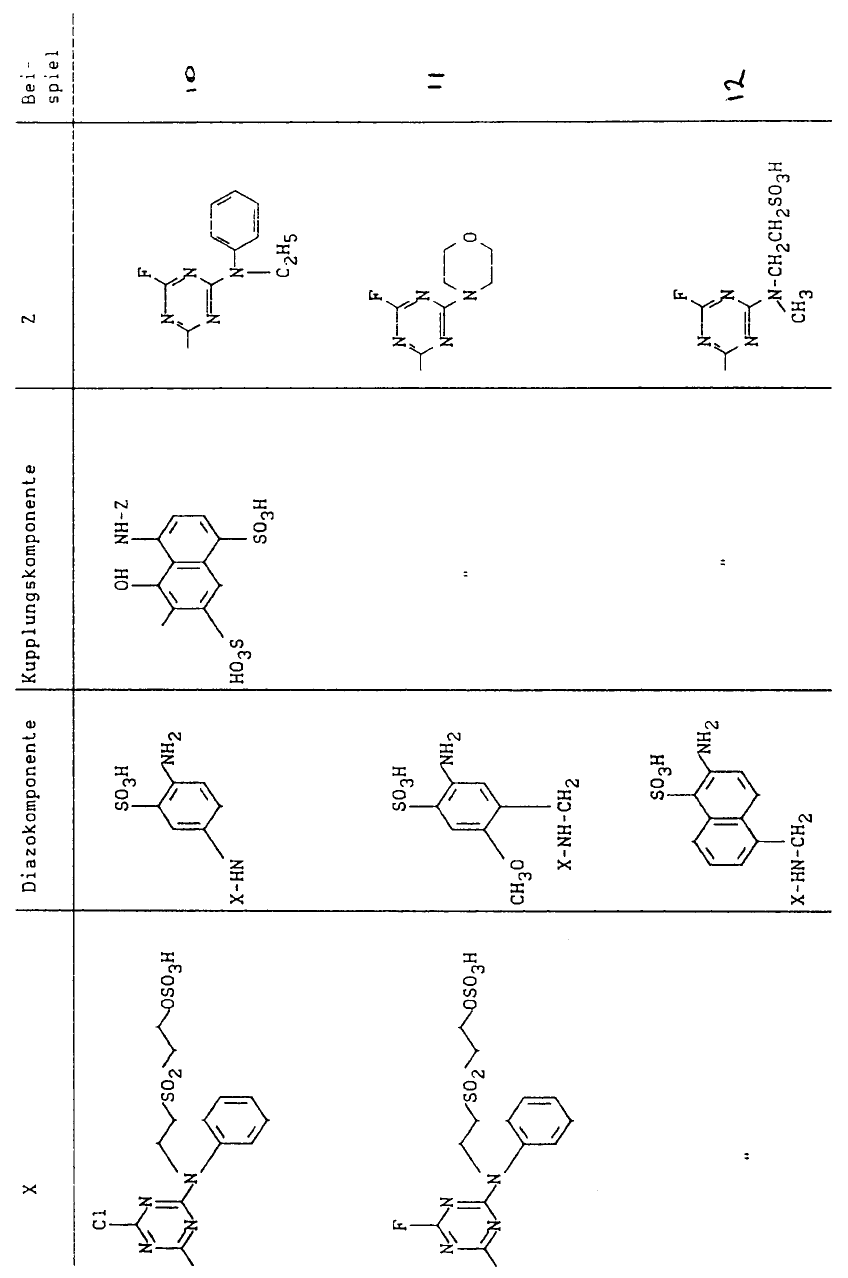

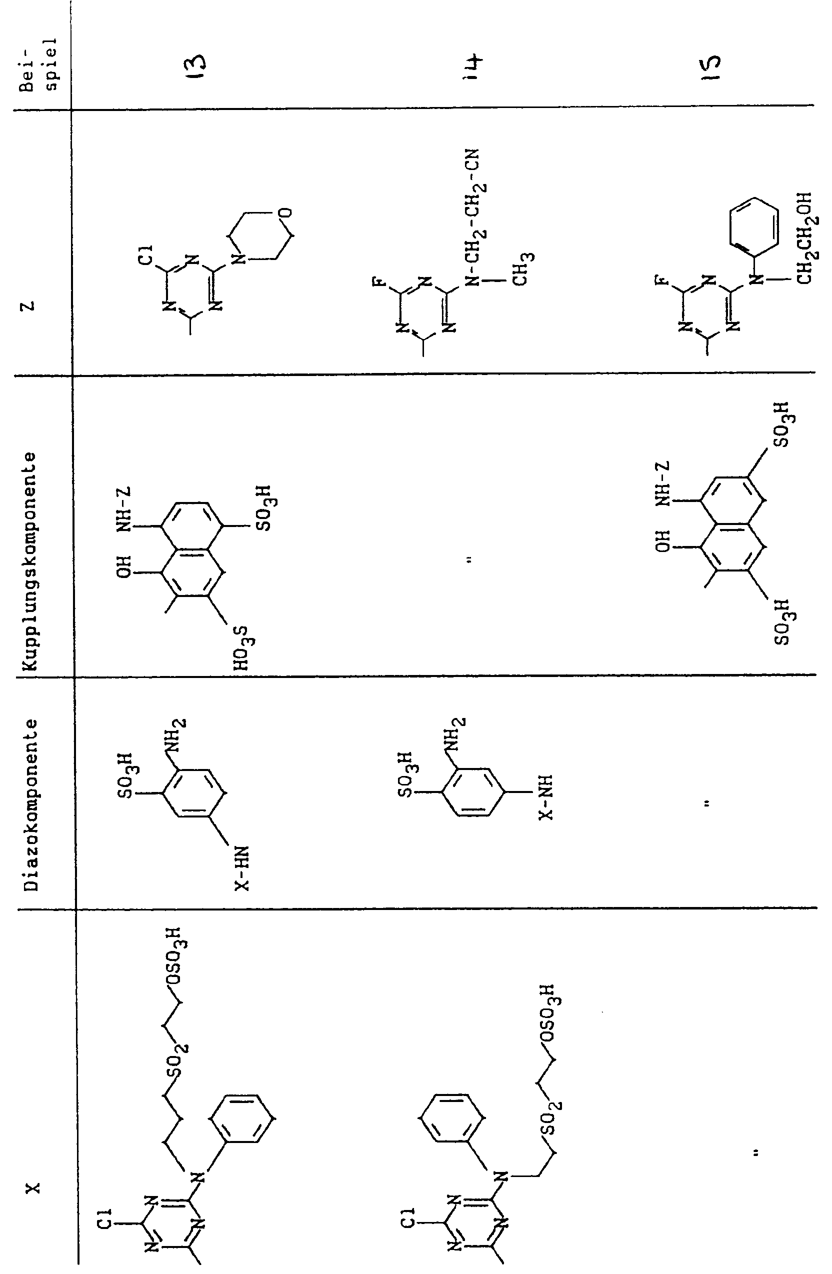

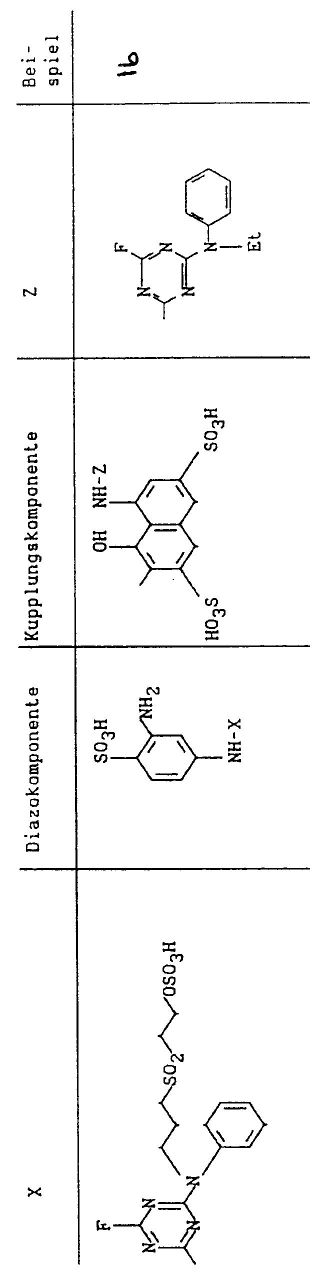

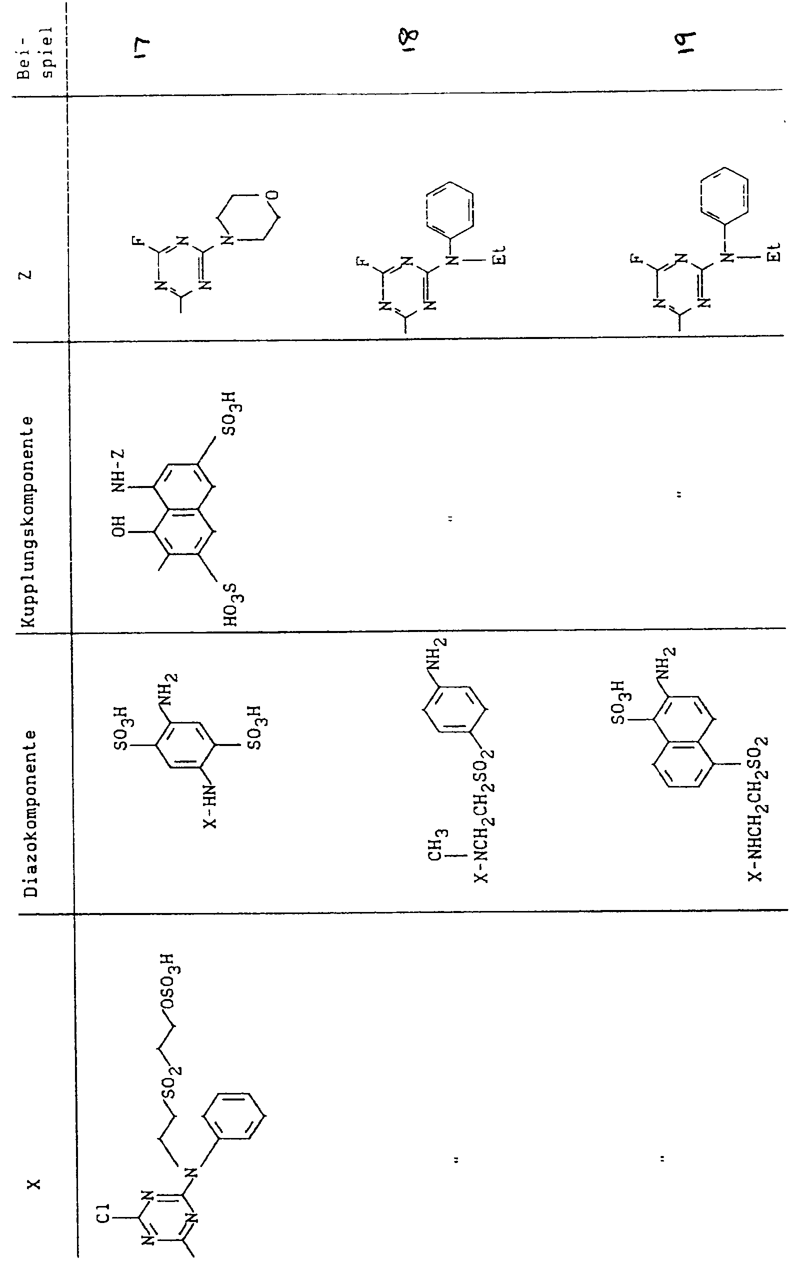

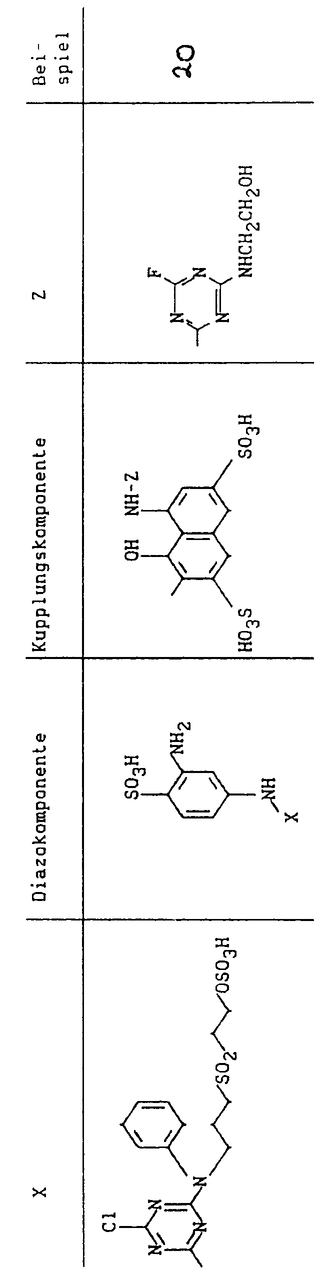

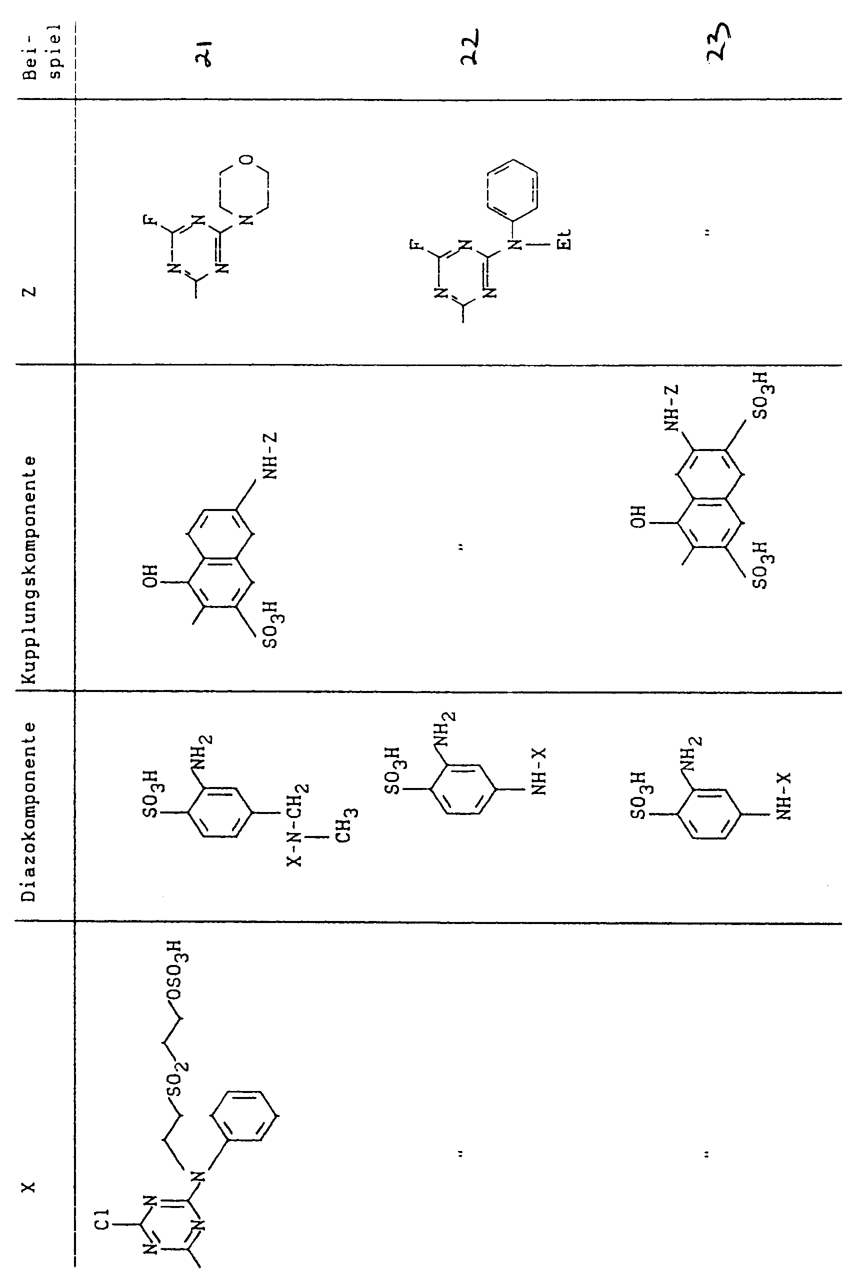

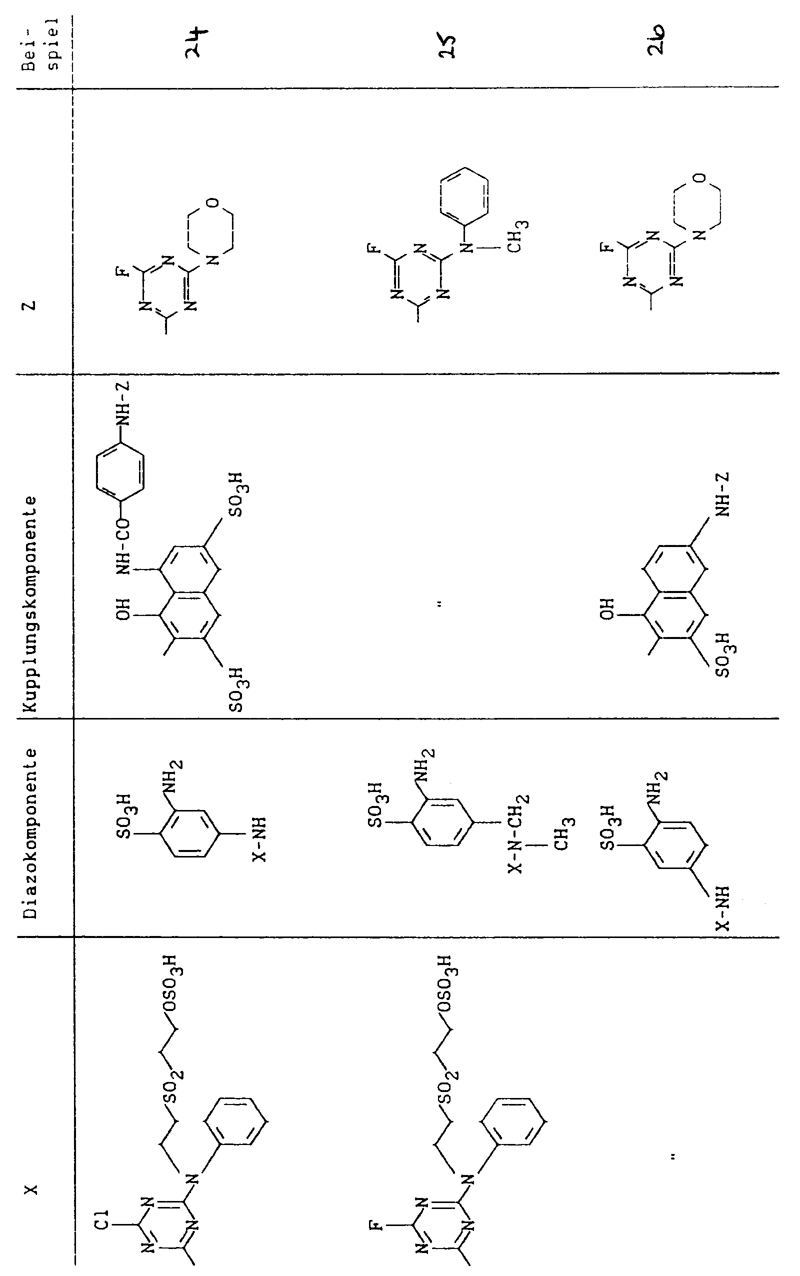

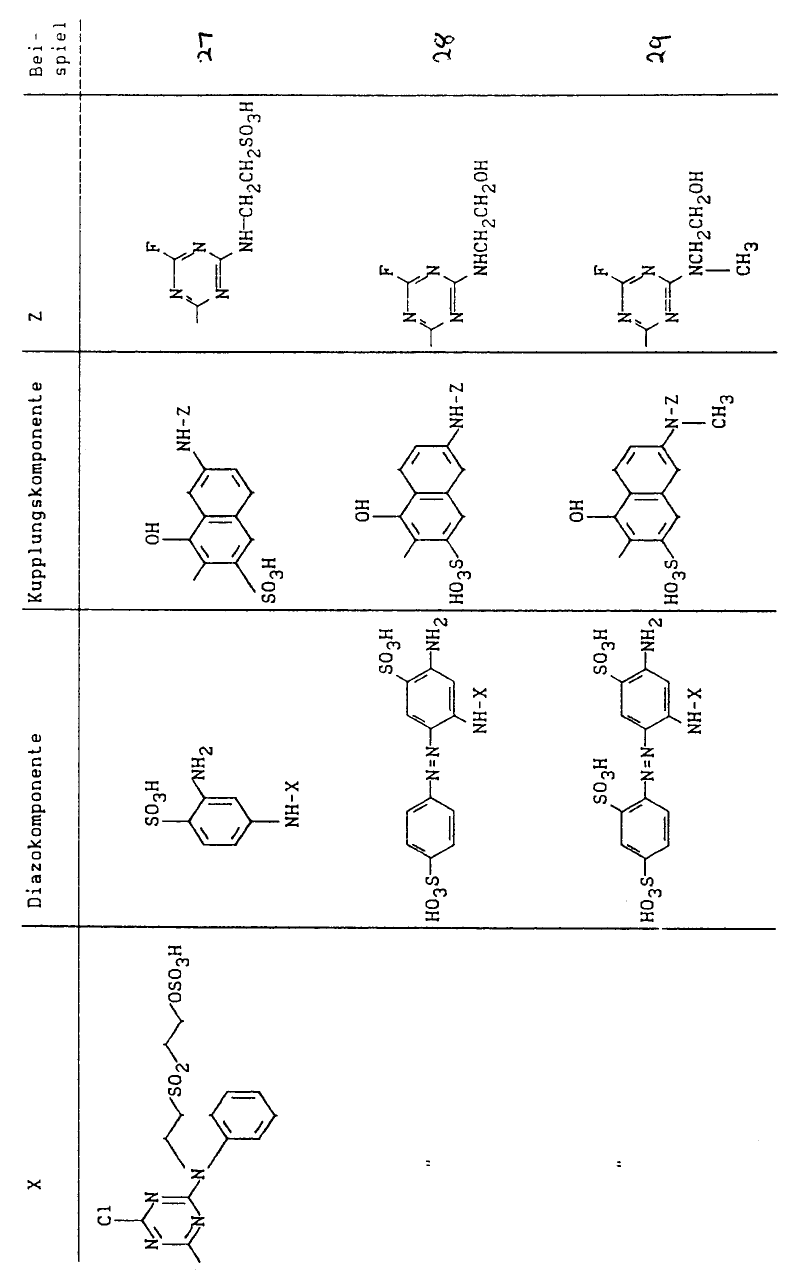

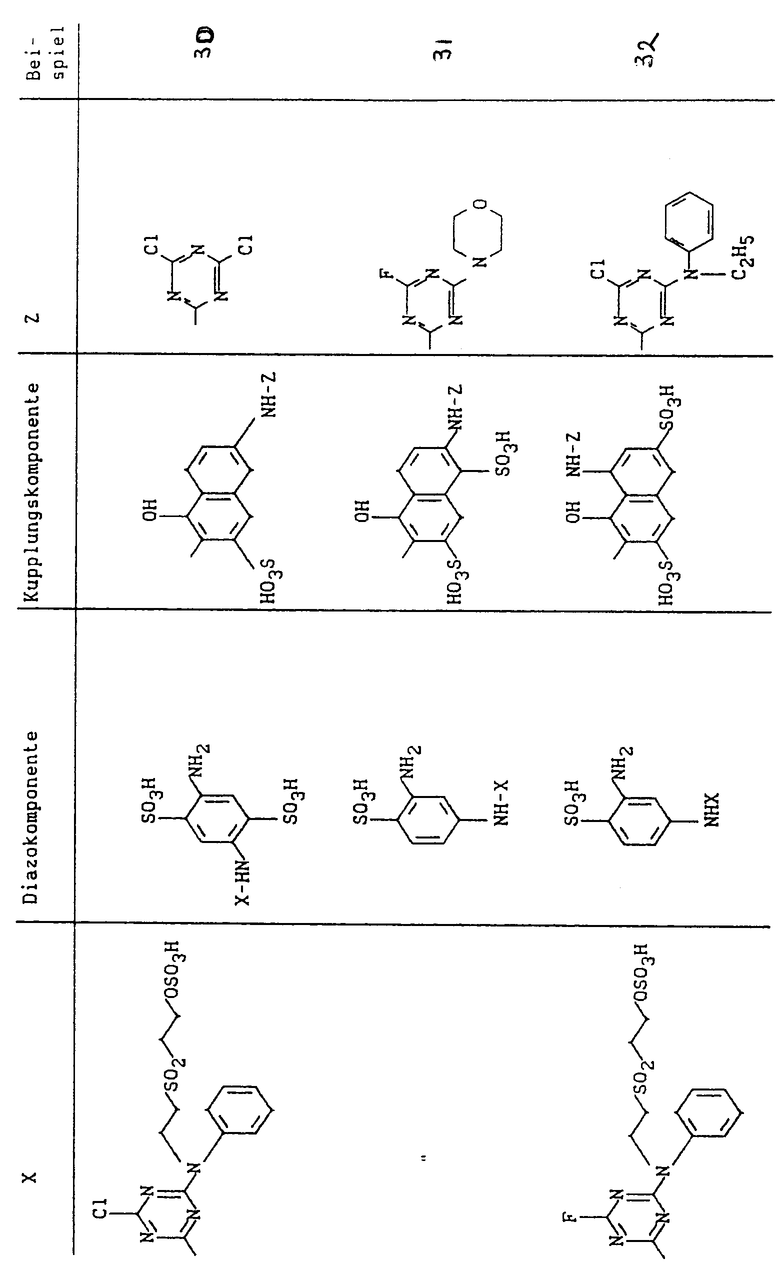

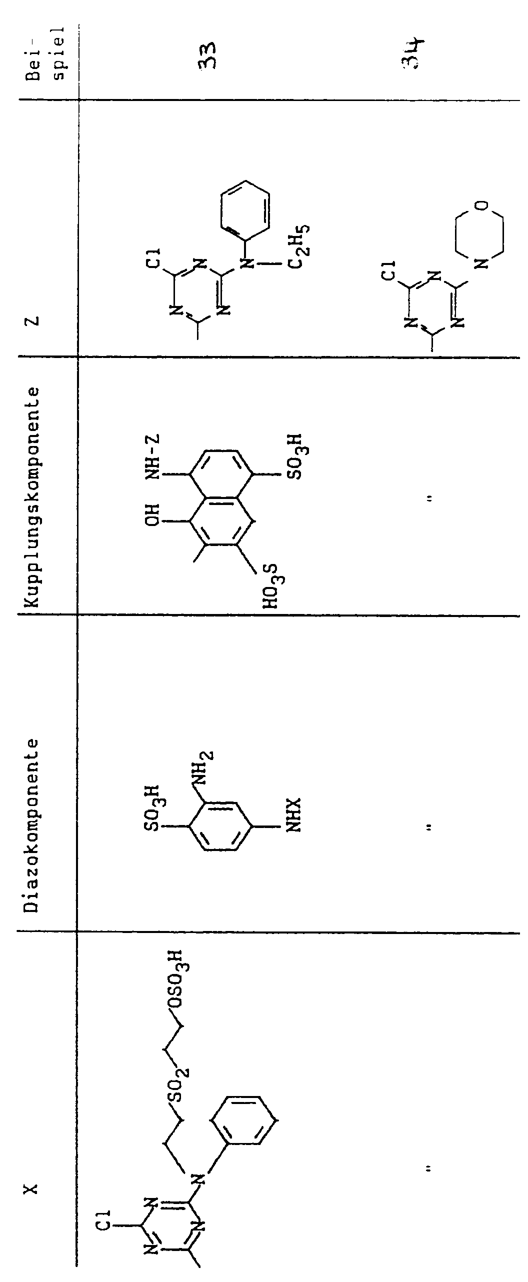

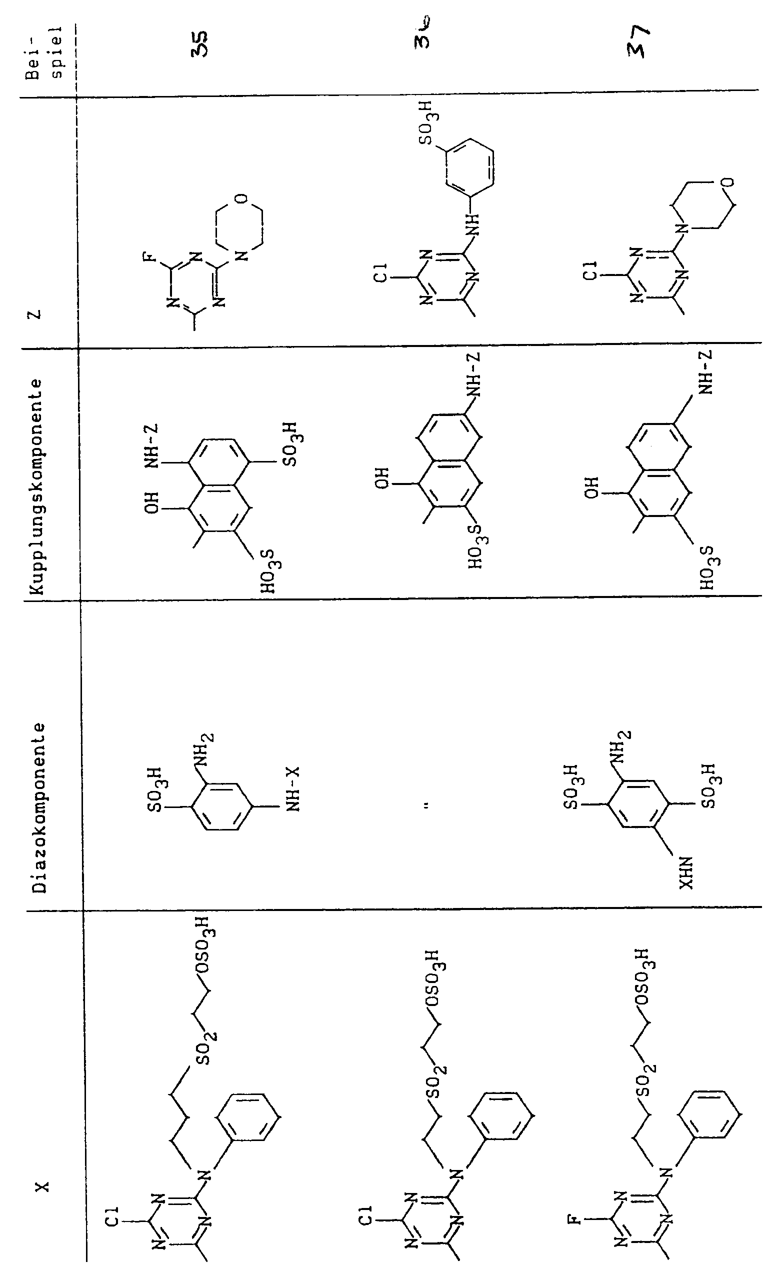

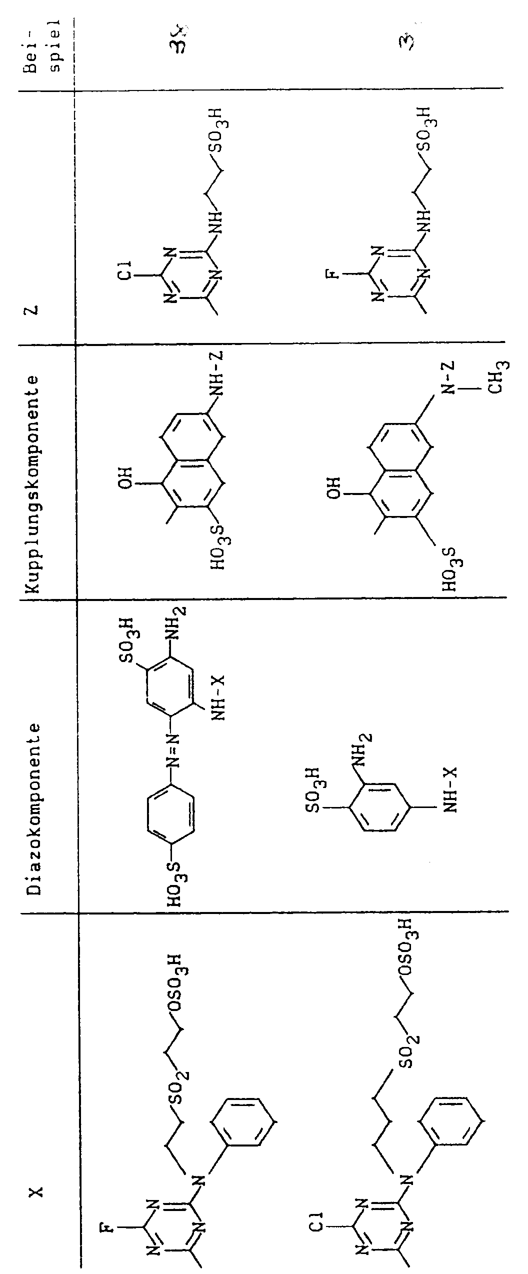

### Beispiel 40

0,2 Mol 1-Amino-8-hydroxynaphthalin-3,6-disulfonsäure werden in 450 ml Wasser mit Natronlauge bei pH 8-9 gelöst und mit 0,22 Mol 2,4,6-Trifluorpyrimidin versetzt. Die Kondensation erfolgt bei 35-40°C, wobei pH 4,0-5,0 mit Sodalösung gehalten wird.

Kuppelt man mit dem Diazoniumsalz aus Beispiel 1B, so erhält man nach Aussalzen, Isolieren, Trocknen den Farbstoff der Formel 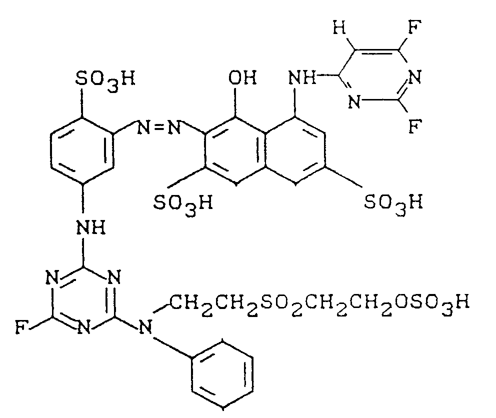 der Baumwolle in roten Tönen färbt.

### Beispiel 41

0,2 Mol 8-(4'-Amino-benzoylamino)-1-naphthol-3,6-disulfonsäure werden in 800 ml Wasser mit Sodalösung (20 g/100 ml) bei einem pH-Wert von 7 gelöst. Mit 10 %iger HCl-Lösung wird pH 4,5 eingestellt. Man gibt 0,2 Mol 2,4,6-Trifluorpyrimidin zu und heizt auf 30°C auf. Mit Sodalösung (20 g/100 ml) wird ein pH-Wert von 4,5-6 gehalten. Die Umsetzung ist nach 4 Stunden beendet.

Man gibt nun 0,2 Mol des Diazoniumsalzes aus Beispiel 1 zu und hält gleichzeitig durch Zutropfen von Sodalösung (20 g/100 ml) einen pH-Wert von 7,5-8. Nach beendeter Kupplung salzt man mit NaCl aus, isoliert und trocknet. Der Farbstoff der Formel 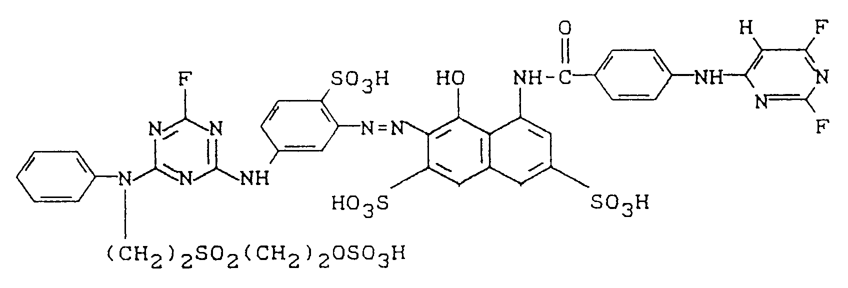 färbt Baumwolle in roten Tönen.

Die Beispiele 42-71 lassen sich wie in Beispiel 40 bzw. 41 beschrieben herstellen, wenn die entsprechenden Zwischenprodukte eingesetzt werden.

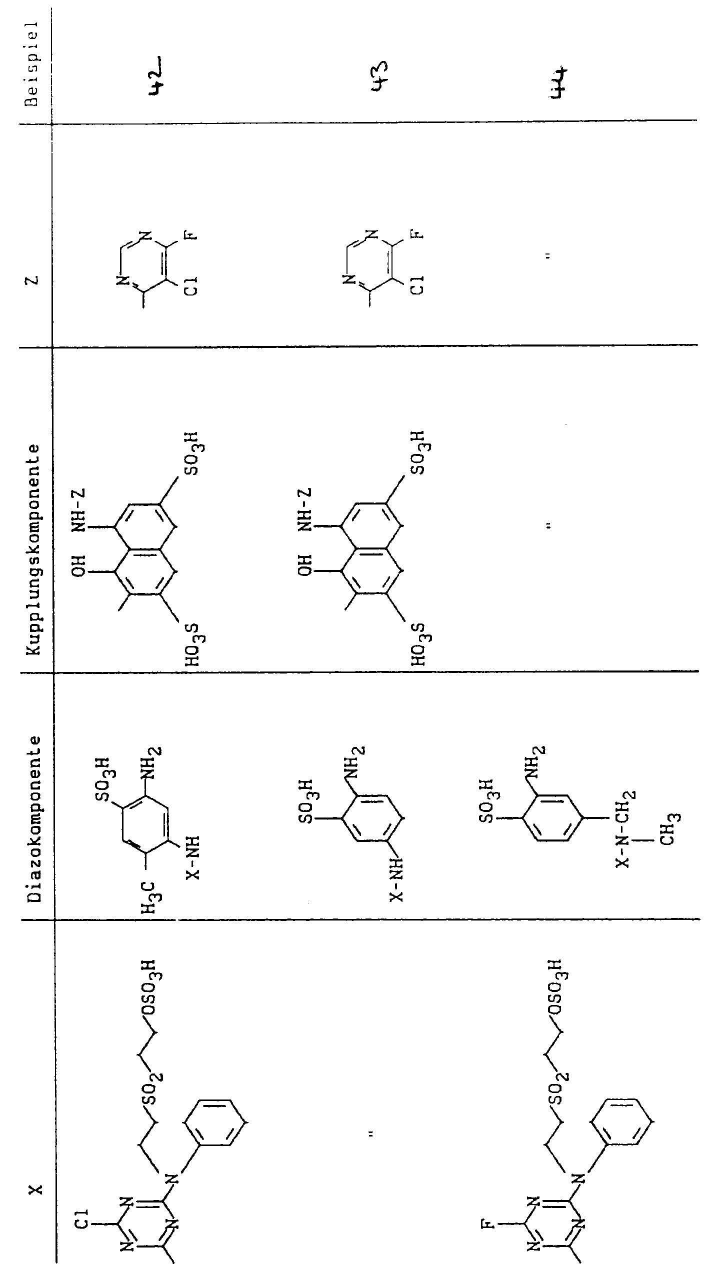

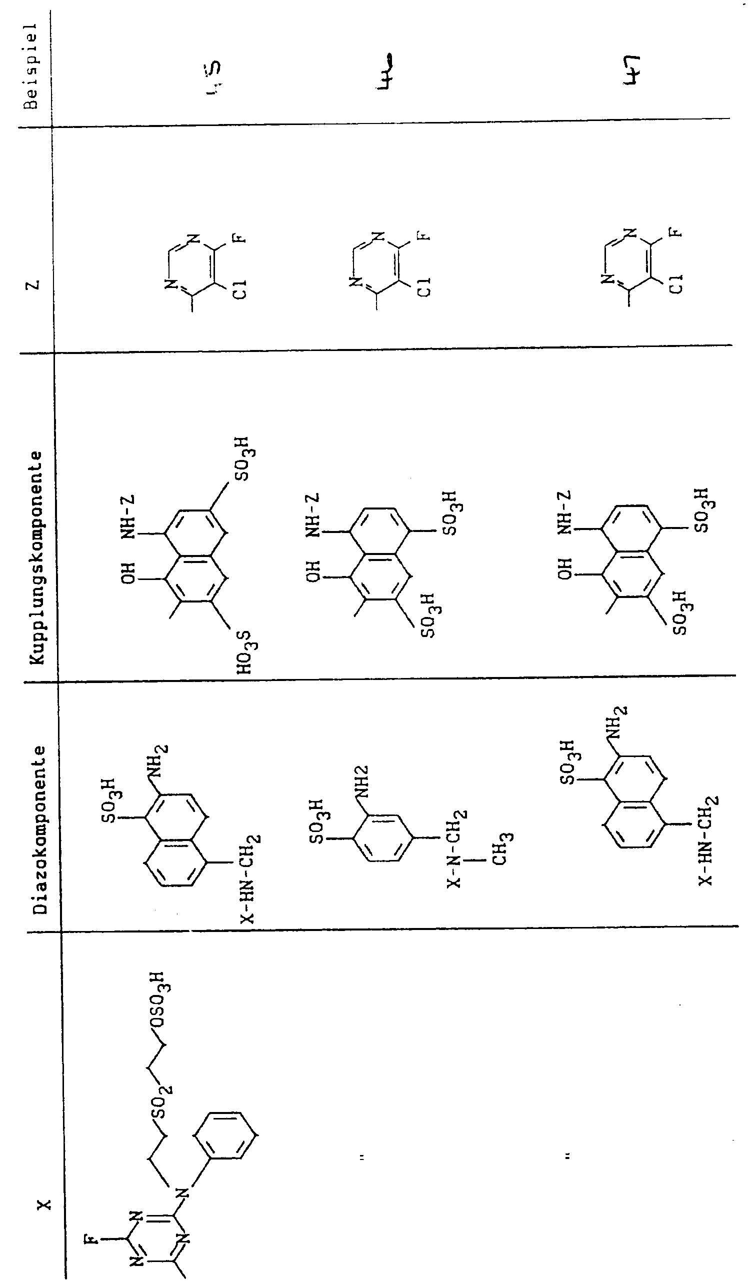

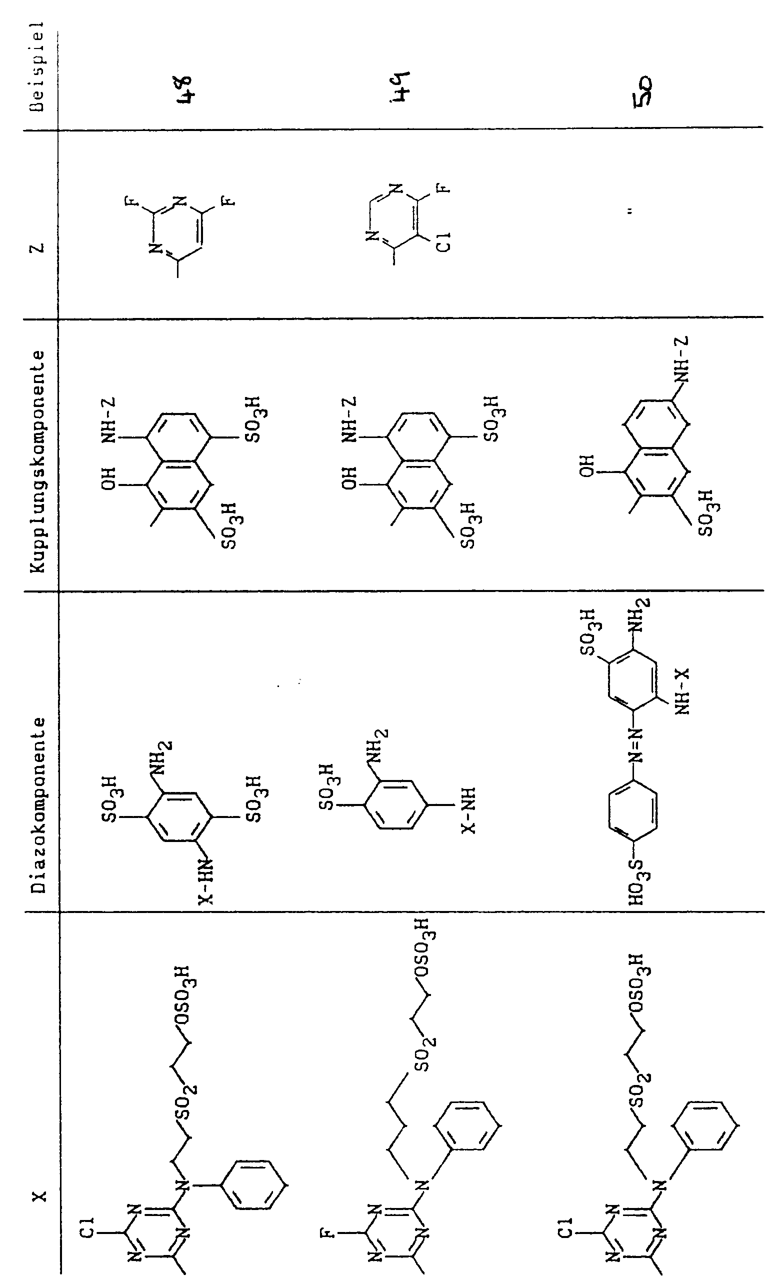

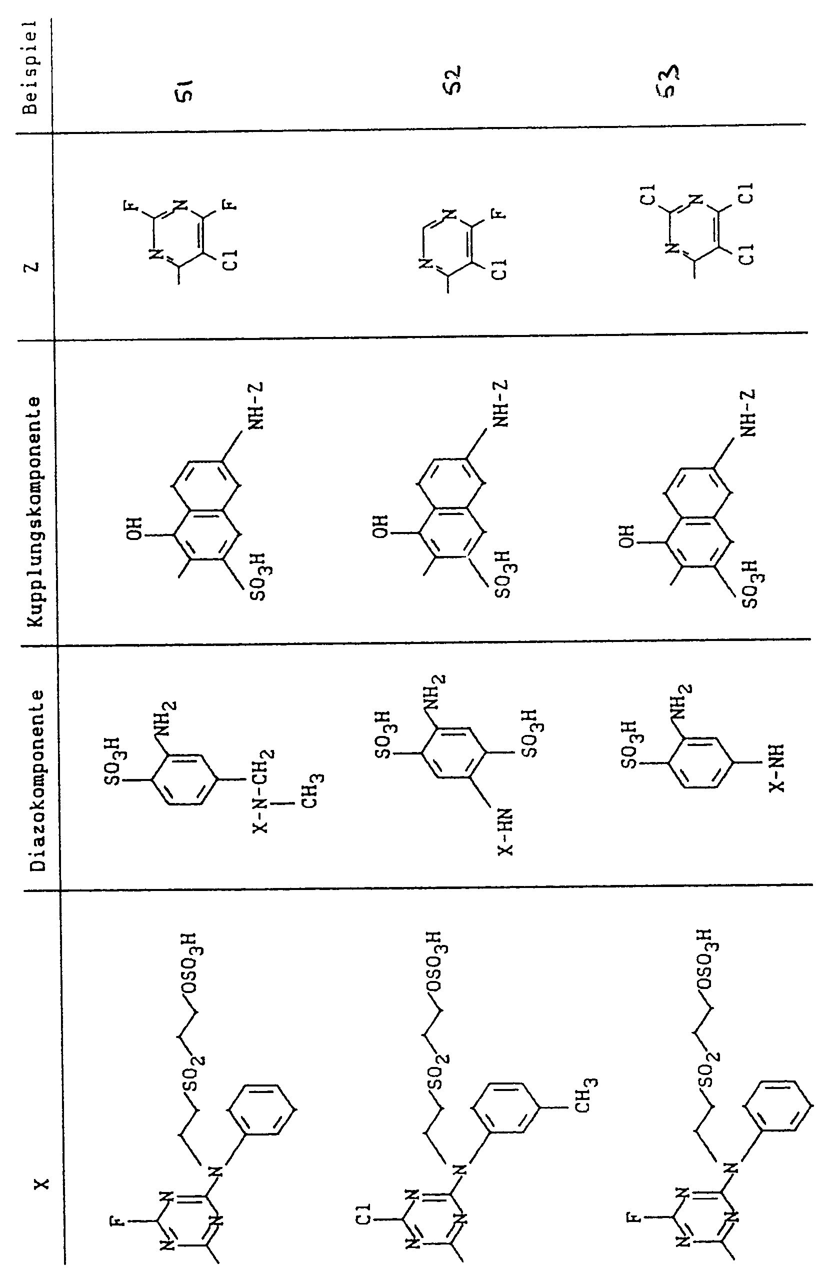

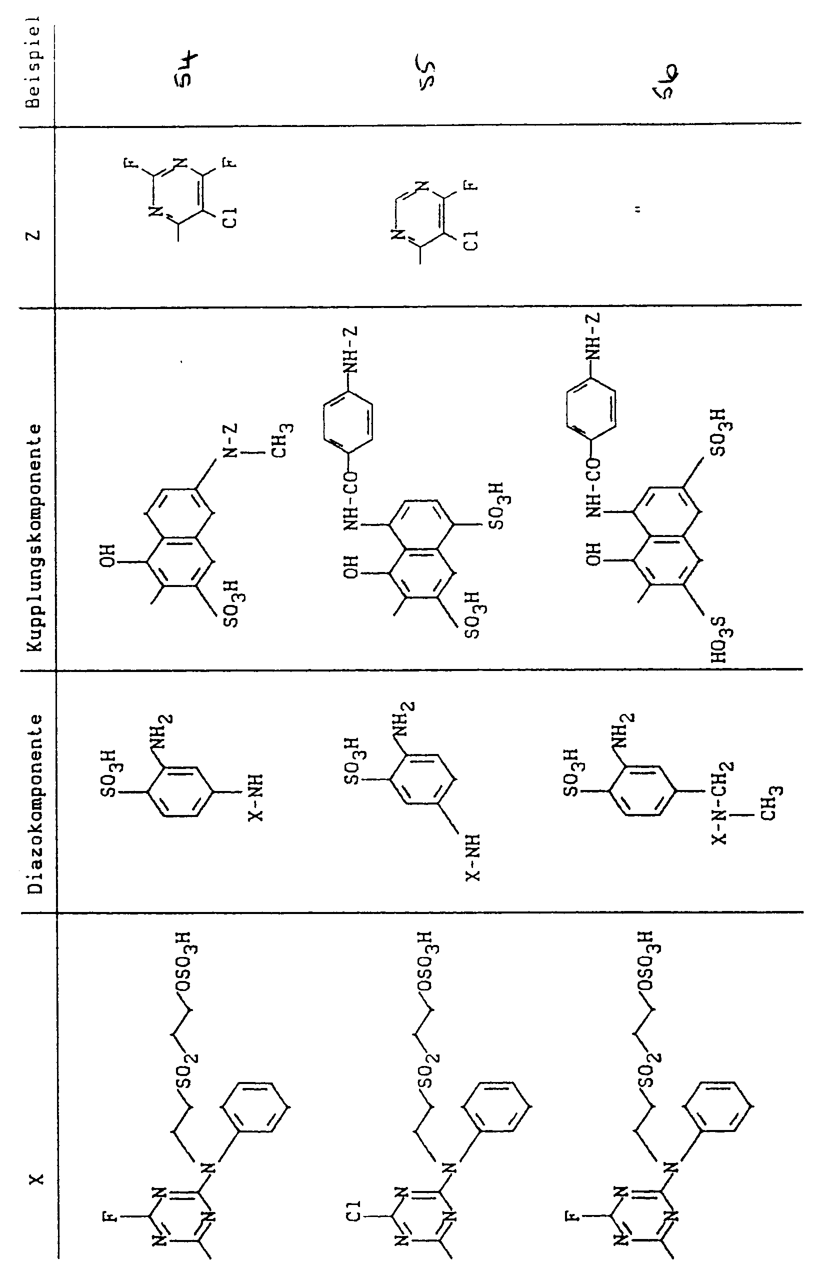

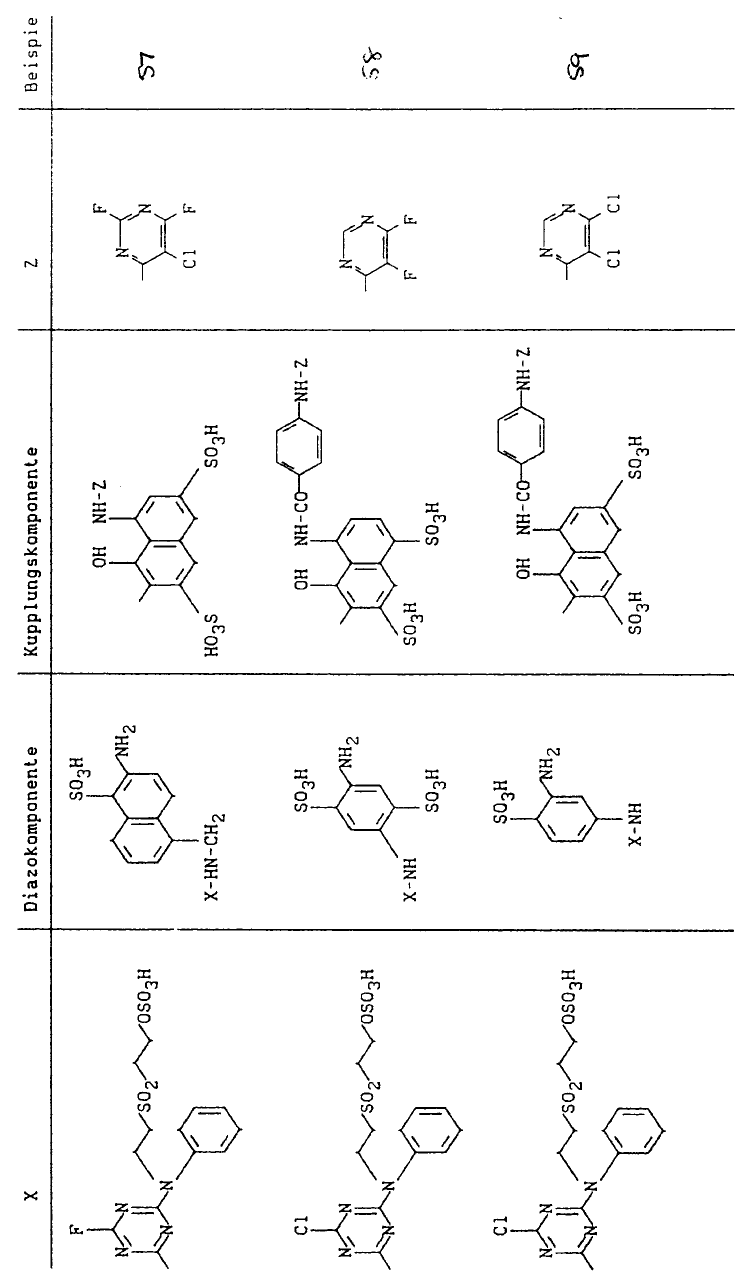

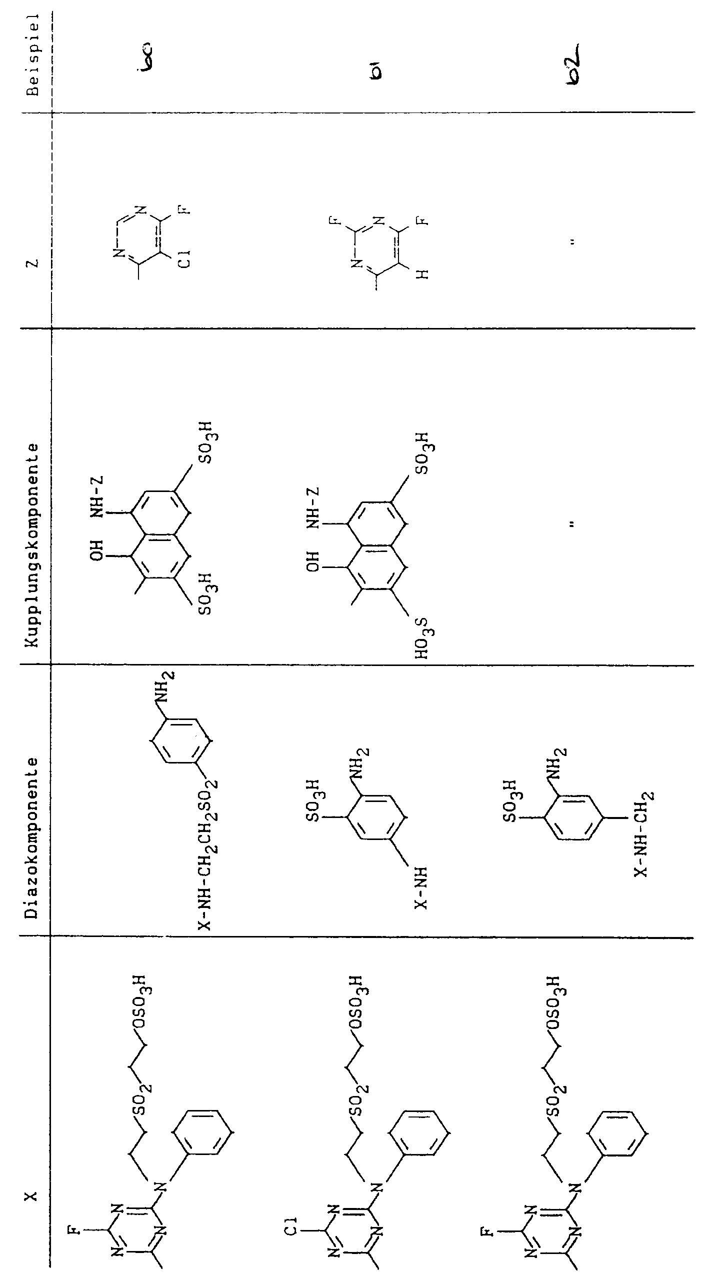

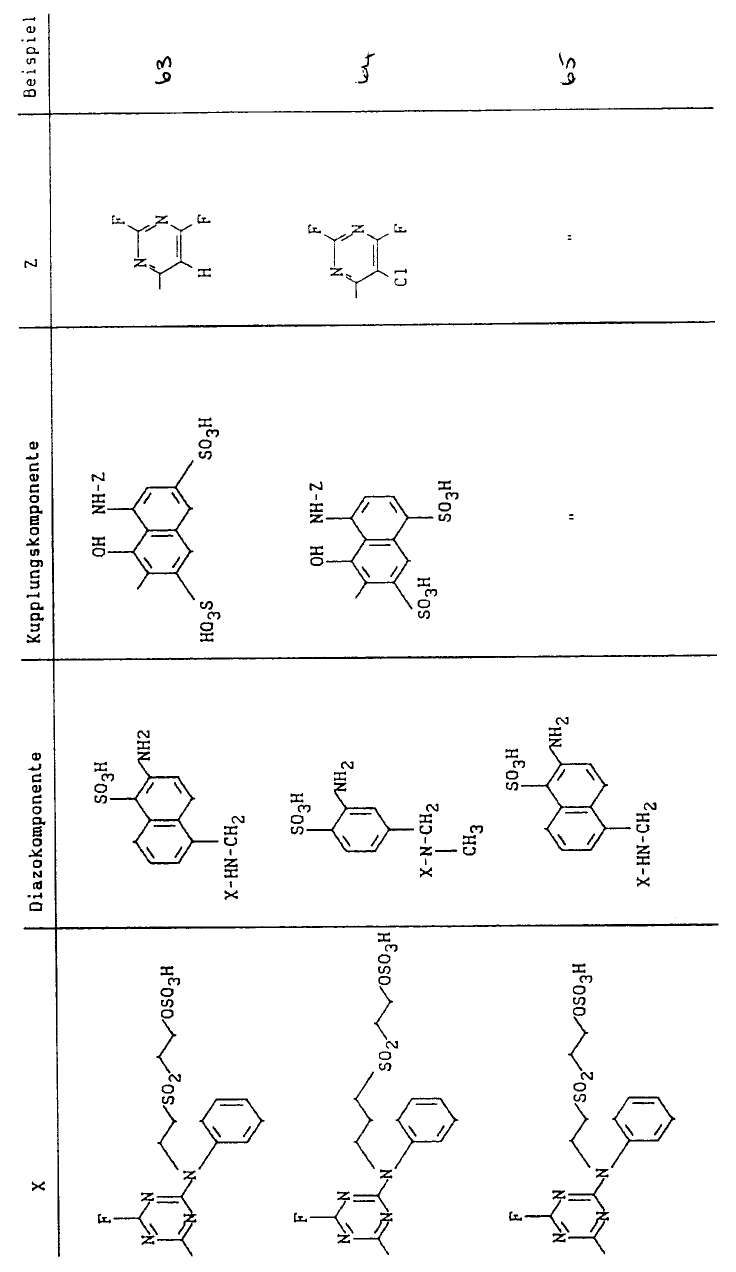

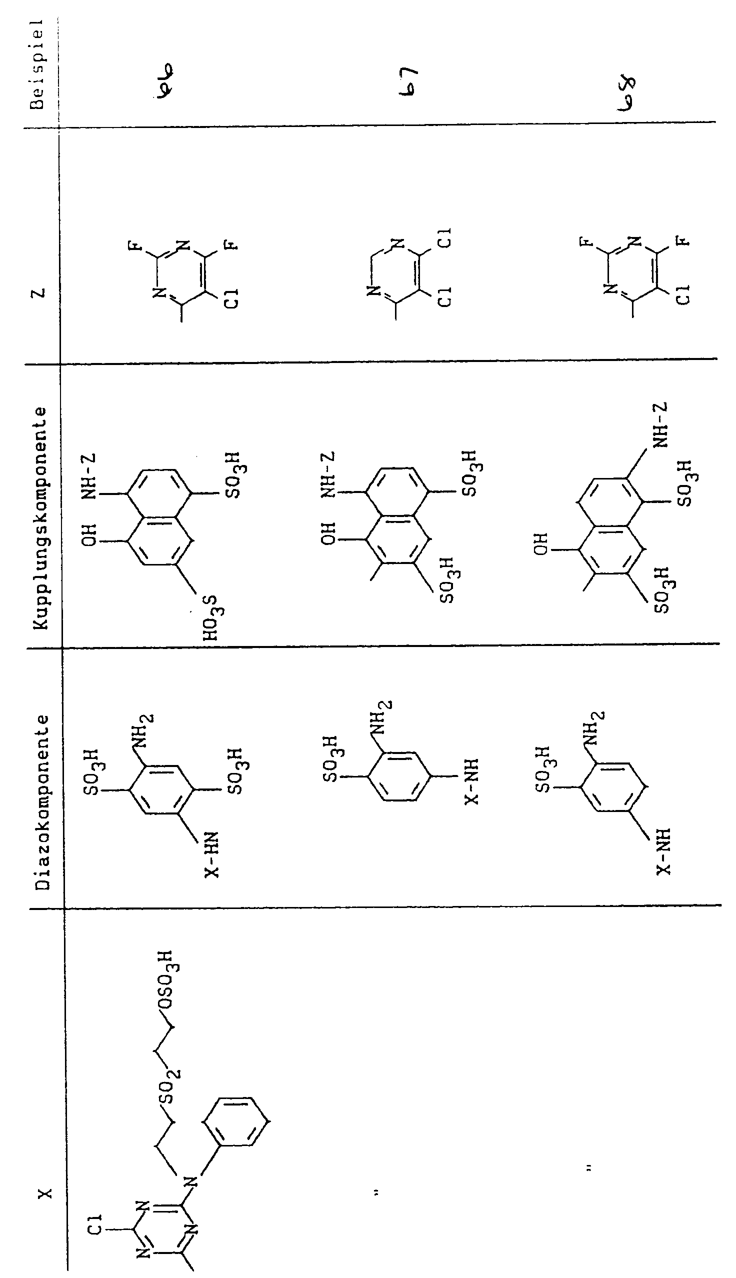

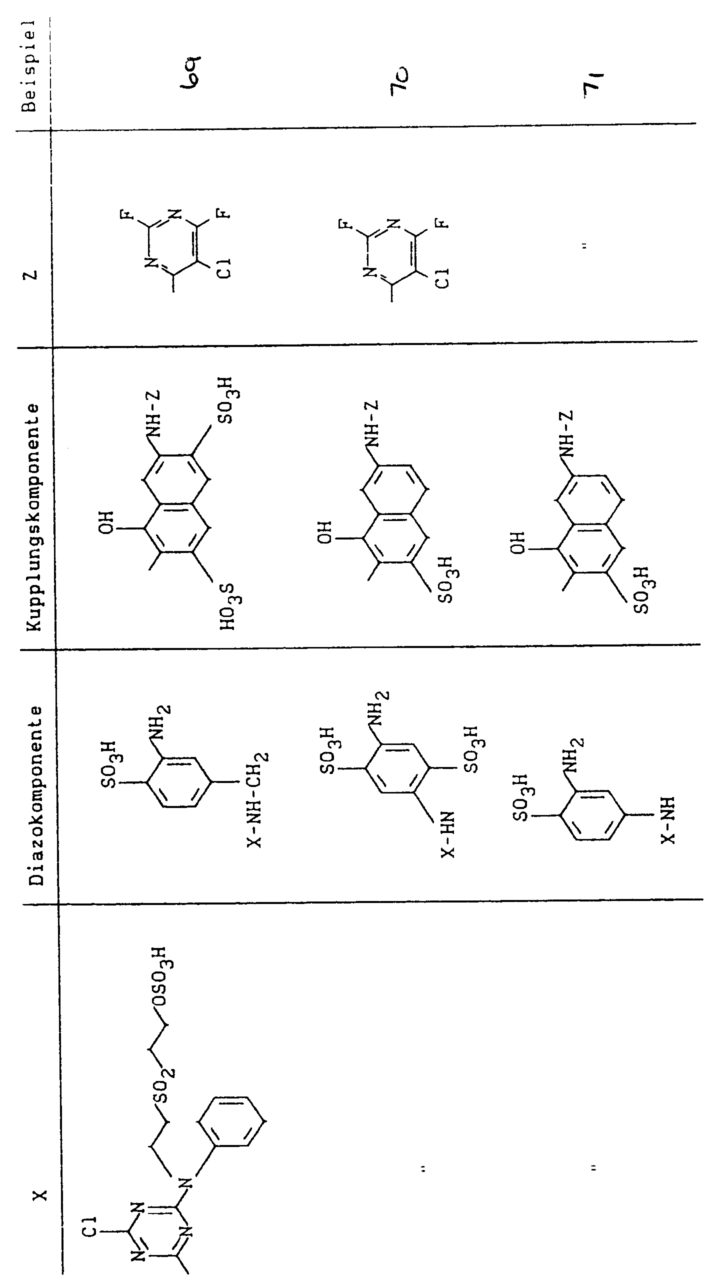

### Beispiel 72

0,2 Mol 1-Amino-8-hydroxynaphthalin-3,6-disulfonsäure werden in 650 ml Wasser mit Natronlauge bei pH 6,5 gelöst und auf 35°C erwärmt. Zu dieser Lösung werden 0,21 Mol 2,3-Dichlorchinoxalin-6-carbonsäurechlorid hinzugefügt und der pH mit Sodalösung auf 6-7 eingestellt und ca. 6 h bei 35°C kondensiert.

Analog zu Beispiel 1 wird die Verbindung aus Beispiel 1B diazotiert und mit obiger Kupplungslösung zur Reaktion gebracht.

Der Farbstoff wird ausgesalzen, isoliert, getrocknet und gemahlen. Er hat folgende Struktur 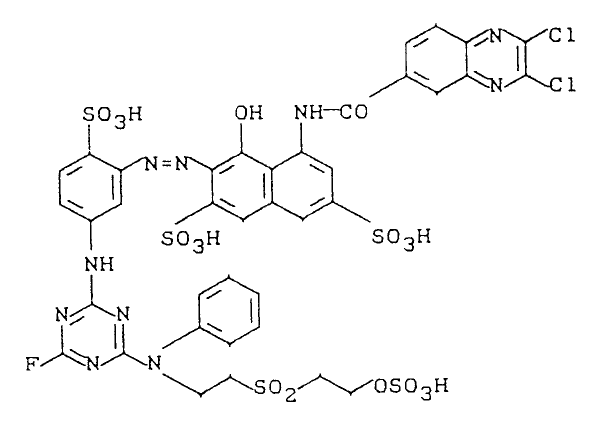 und färbt Baumwolle in roten Tönen.

Wie oben beschrieben, können die Farbstoffe der Beispiele 73-83 mit den angeführten Diazo- und Kupplungskomponenten herstellt werden, wobei
- Z =: 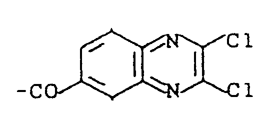 und X die jeweils
angegebene Bedeutung hat.

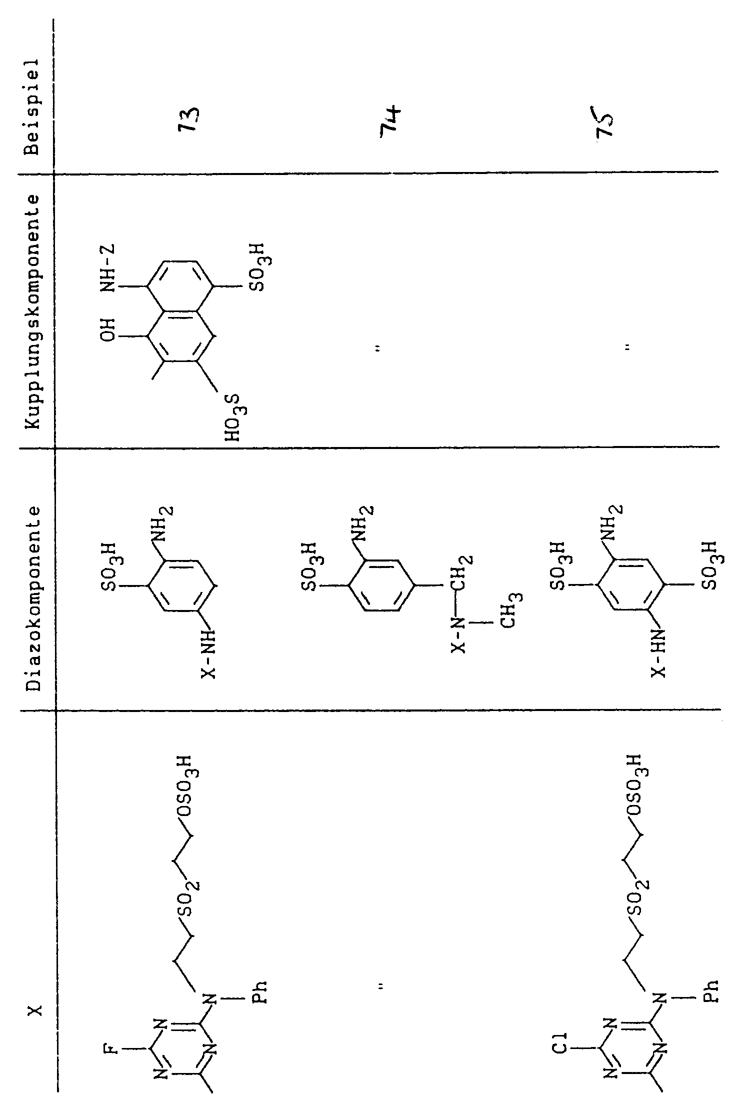

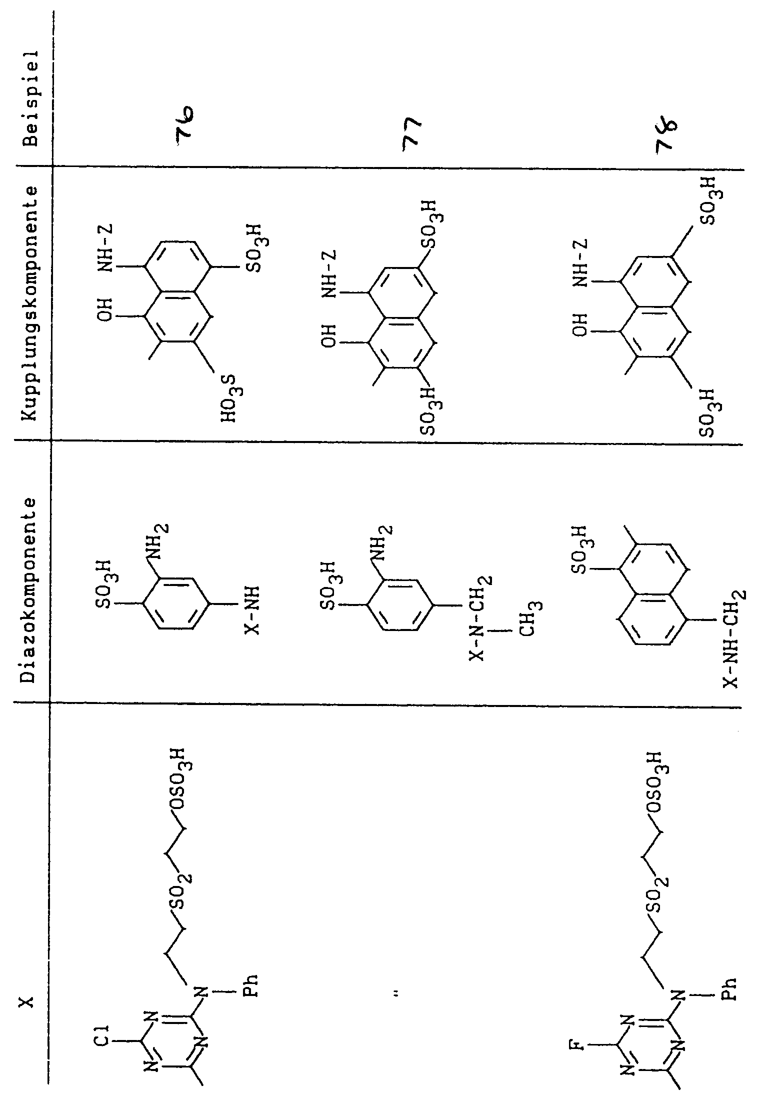

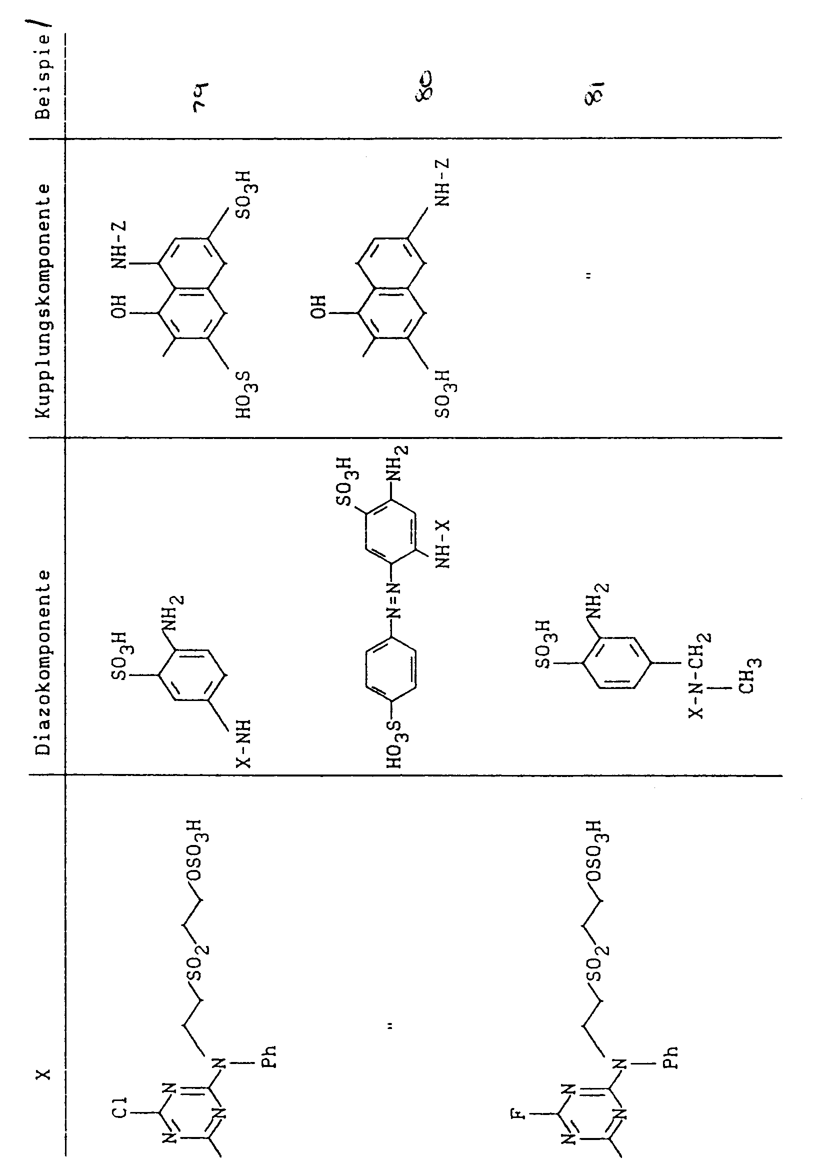

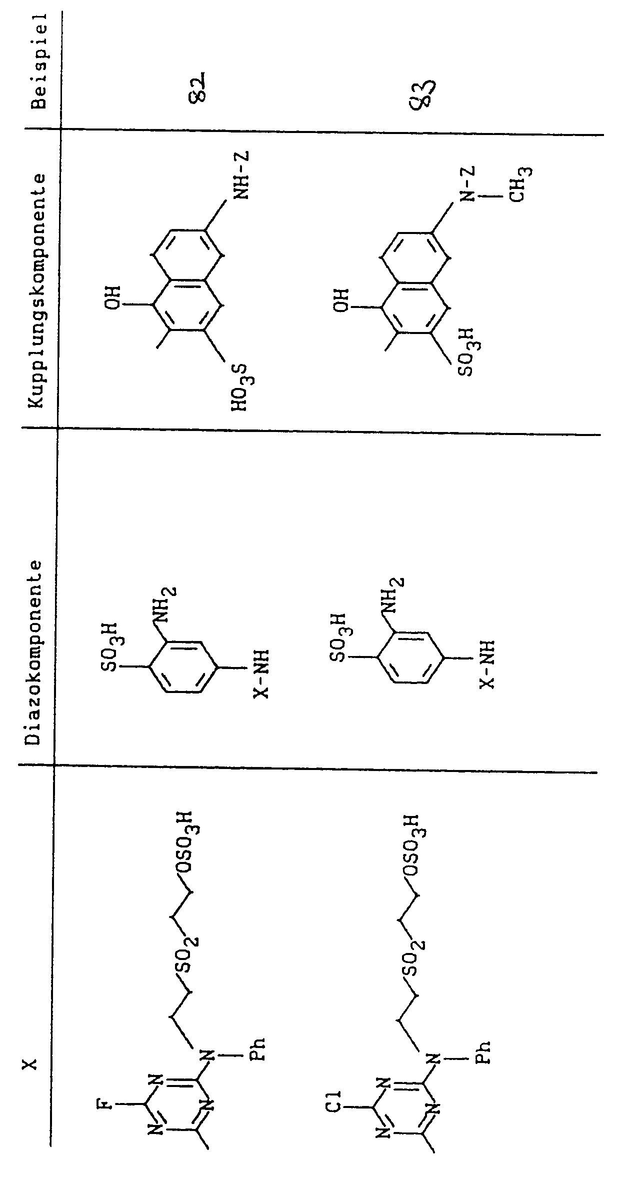

### Beispiel 84

a) 0,3 Mol der Verbindung der Formel 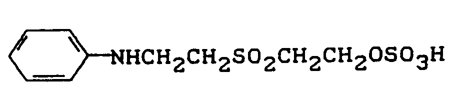 werden in 300 Teilen Wasser und 200 Teilen Eis verrührt. Durch Zugabe von Natriumhydrogencarbonat wird pH 6-7 eingestellt.
   Diese Lösung gibt man zu einer Suspension aus 0,3 Mol Cyanurchlorid, 150 Teile Wasser und 100 g Eis, wobei mit Sodalösung (20 %) pH 5-6 gehalten wird. Durch portionsweise Zugabe von Eis wird eine Temperatur von 0-1°C gehalten. Nach zwei Stunden ist die Reaktion beendet und das Kondensationsprodukt vollständig ausgefallen.
   Diese Suspension wird zu einer Lösung aus 0,2 Mol 1-Amino-8-hydroxy-3,6-naphthalindisulfonsäure in 500 ml Wasser (durch Lithiumhydroxidlösung (10 %) auf pH 5,5-6 eingestellt) gegeben. Man erwärmt auf 40°C und hält durch Zugabe von Sodalösung (20 %) pH = 4,5 konstant. Nach zweistündigen Rühren ist die Reaktion beendet.
b) 0,2 Mol 3-Aminobenzolsulfonsäure werden in 280 ml Wasser mit Lithiumhydroxyd bei pH 7 gelöst und 250 g Eis zugegeben. Danach werden 0,21 Mol Cyanurfluorid zugegeben und der pH mit Sodalösung bei ca. 4 gehalten. Zu der so entstandenen Suspension wird eine neutrale Lösung von 2,4-Diaminobenzolsulfonsäure gegeben und der pH auf 7-7,5 angehoben. Die Reaktionstemperatur wird auf 20°C angehoben und ca. 1 Stunde gerührt. Die Reaktionsmischung wird auf 0°C gekühlt und mit HCl und Natriumnitritlösung bei pH 2-2,2 diazotiert Nach dem Vernichten des Nitritüberschußes mit Amidosulfonsäure kuppelt man auf die obige Kondensationslösung a) bei pH 5-6 und 10-15°C. Aussalzen, Isolieren und Trocknen ergibt den Farbstoff der Formel 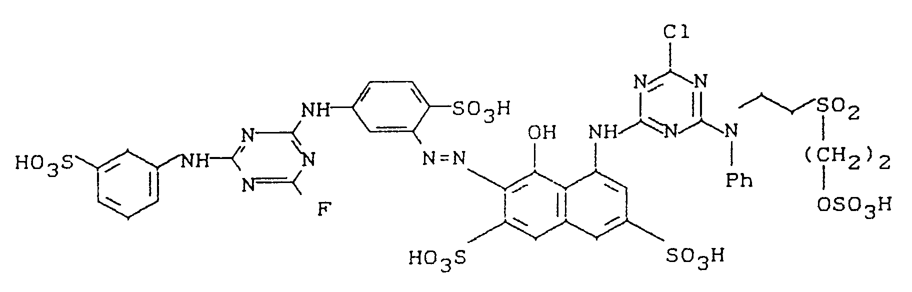
der Baumwolle in roten Tönen färbt.

Die Farbstoffe der Beispiele 85-96 lassen sich auf analoge Weise herstellen unter Verwendung der angegebenen Diazo- und Kupplungskomponenten.

In einigen Fällen ist es jedoch günstiger, zunächst das - X beinhaltende - Azochromophor zu synthetisieren und dann die Reaktivkomponenten (Z) anzukondensieren.

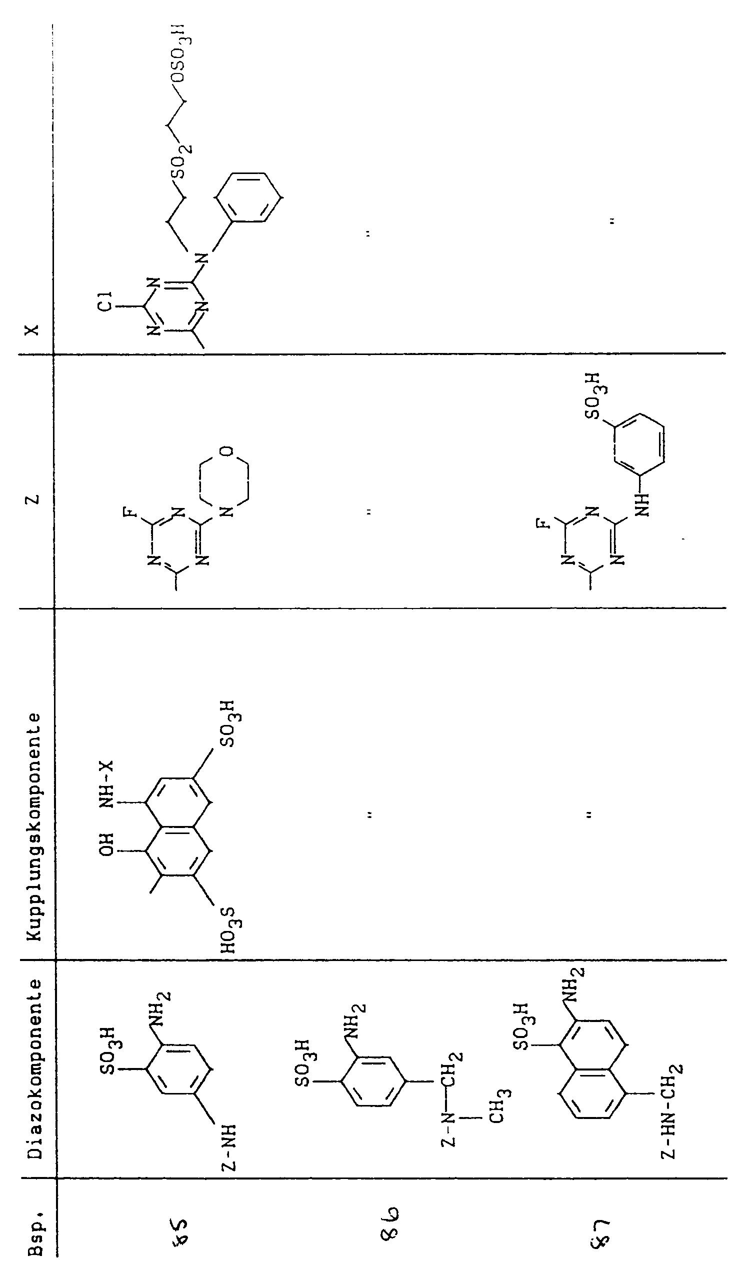

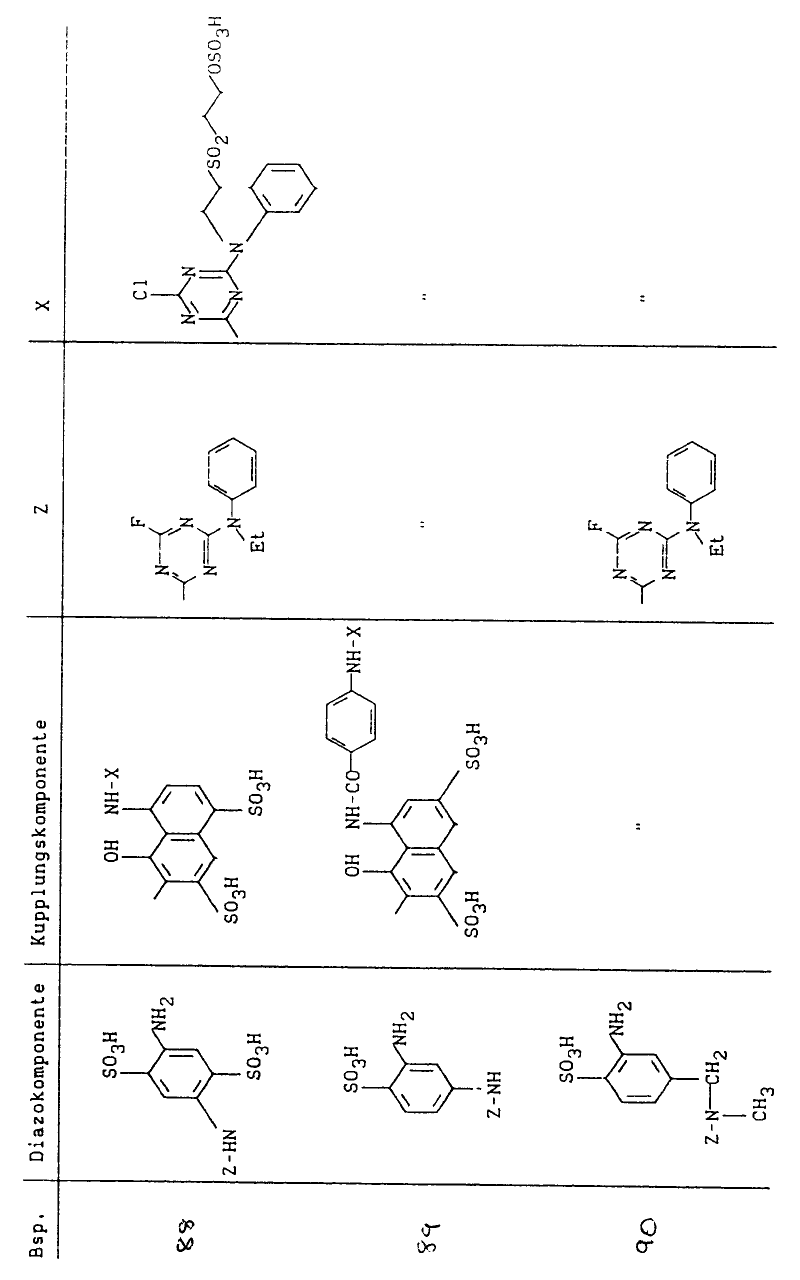

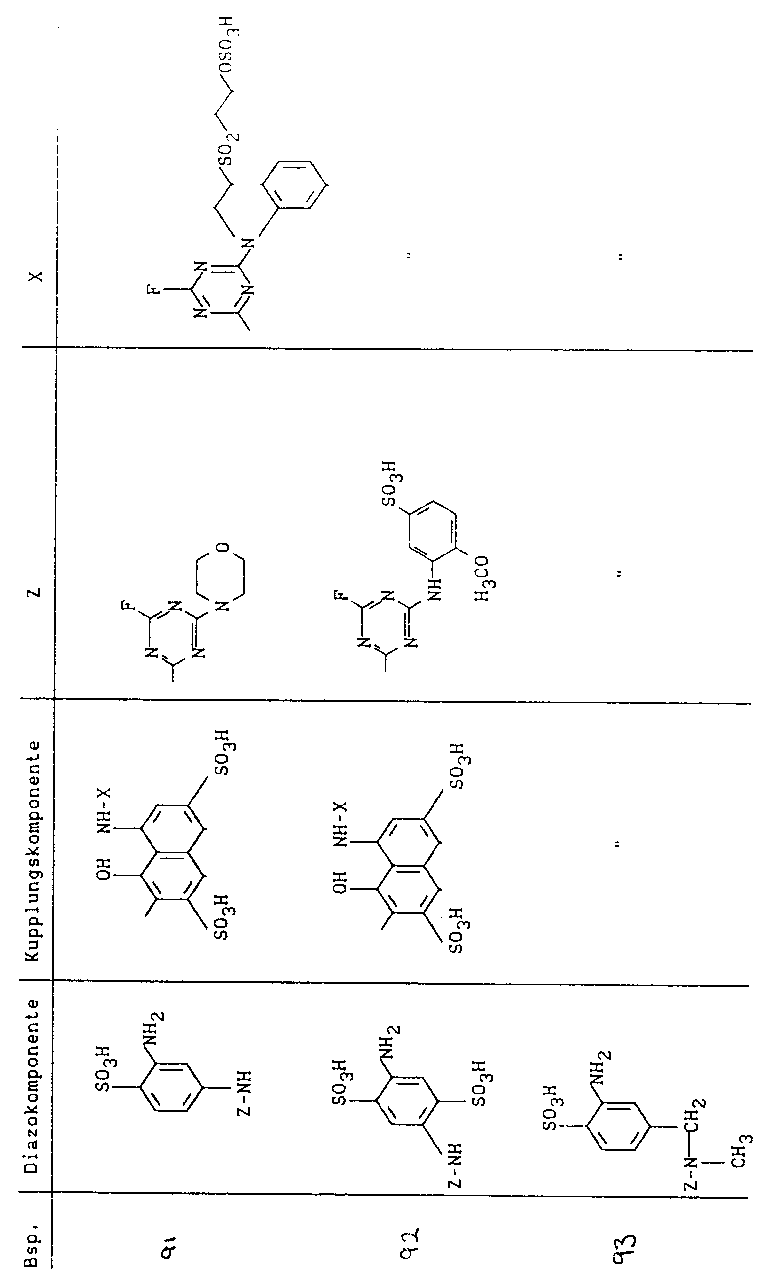

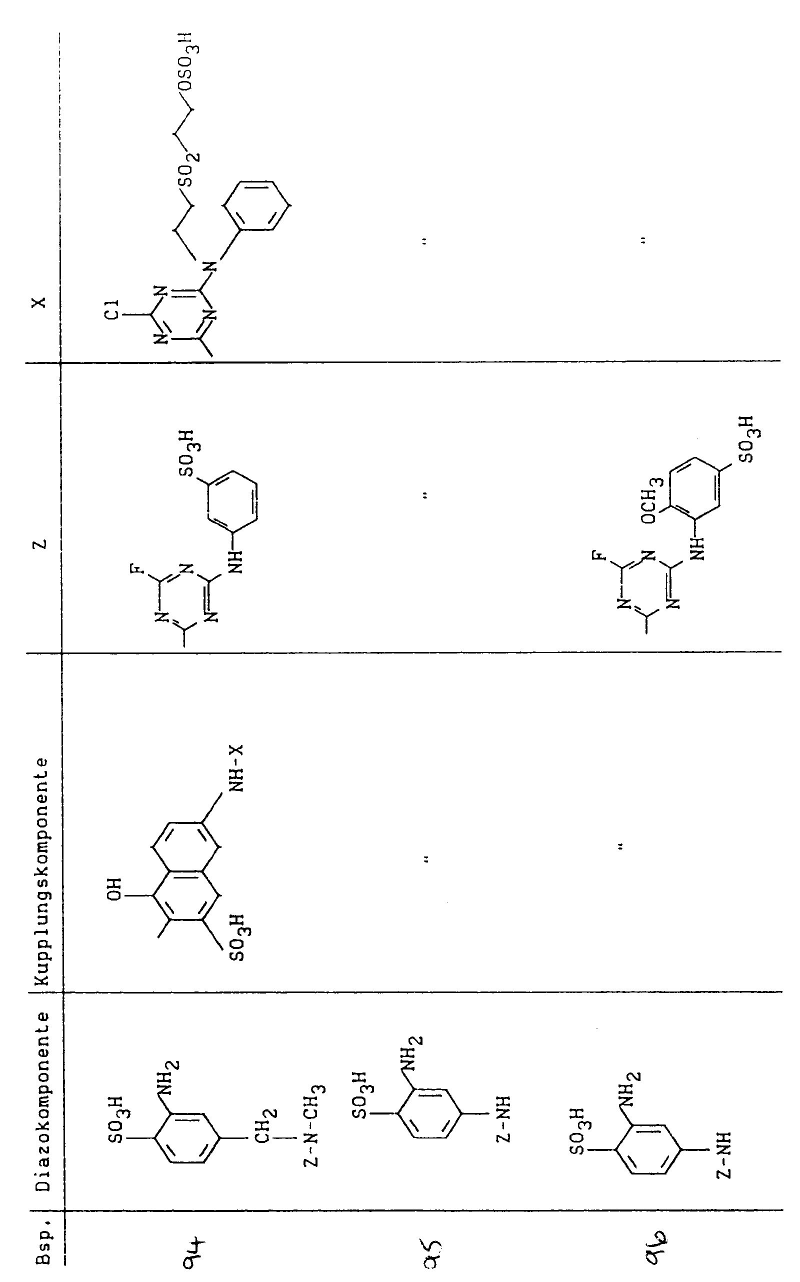

### Beispiel 97

0,22 Mol N-Ethylanilin werden in 200 ml Wasser bei pH 7 gelöst. Man gibt 200 g Eis zu und streut 0,24 Mol Cyanurchlorid ein. Mit Sodalösung (20 g/100 ml) hält man einen pH-Wert von 6-7. Nach ca. 1 Stunde bei 0°C ist die Kondensation beendet. 0,2 Mol 2,4-Diamino-benzolsulfonsäure werden in 250 ml Wasser durch Zugabe von konz. Natronlauge gelöst und zu 1 Stufe der Kondensation zugesetzt. Mit Sodalösung (20 g/100 ml) wird ein pH-Wert von 6-7 gehalten. Man heizt auf 25-35°C auf. Nach beendeter Kondensation kühlt man auf 0°C ab. Es werden 56 ml 30 %iger Salzsäure zugegeben. Man tropft 47 ml Natriumnitritlösung (30 9/100 ml) zu und rührt 1 Stunde bei 0°C. Natriumnitrit wird mit Amidosulfonsäure vernichtet und die so erhaltene Diazotierung zur Kupplungskomponente aus Beispiel 84 gegeben. Mit Sodalösung (20 g/100 ml) wird ein pH-Wert von 7-8 gehalten. T = 10-15°C. Nach beendeter Kupplung salzt man mit NaCl aus, isoliert und trocknet. Der erhaltene Farbstoff der Formel 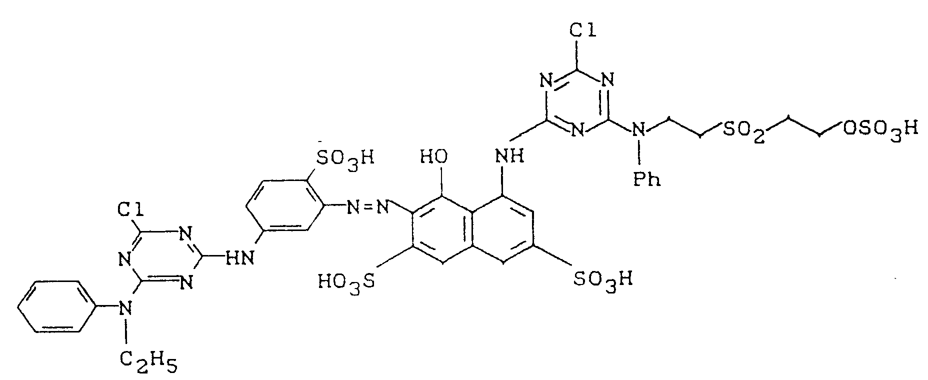 färbt Baumwolle in roten Tönen.

Die Farbstoffe der Beispiele 98-103 lassen sich unter Verwendung der entsprechenden Diazo-, Kupplungskomponenten und Amine analog herstellen. In einigen Fällen ist es günstiger die Kondensation mit Cyanurchlorid und Amin an den Schluß der Synthese-Sequenz zu stellen.

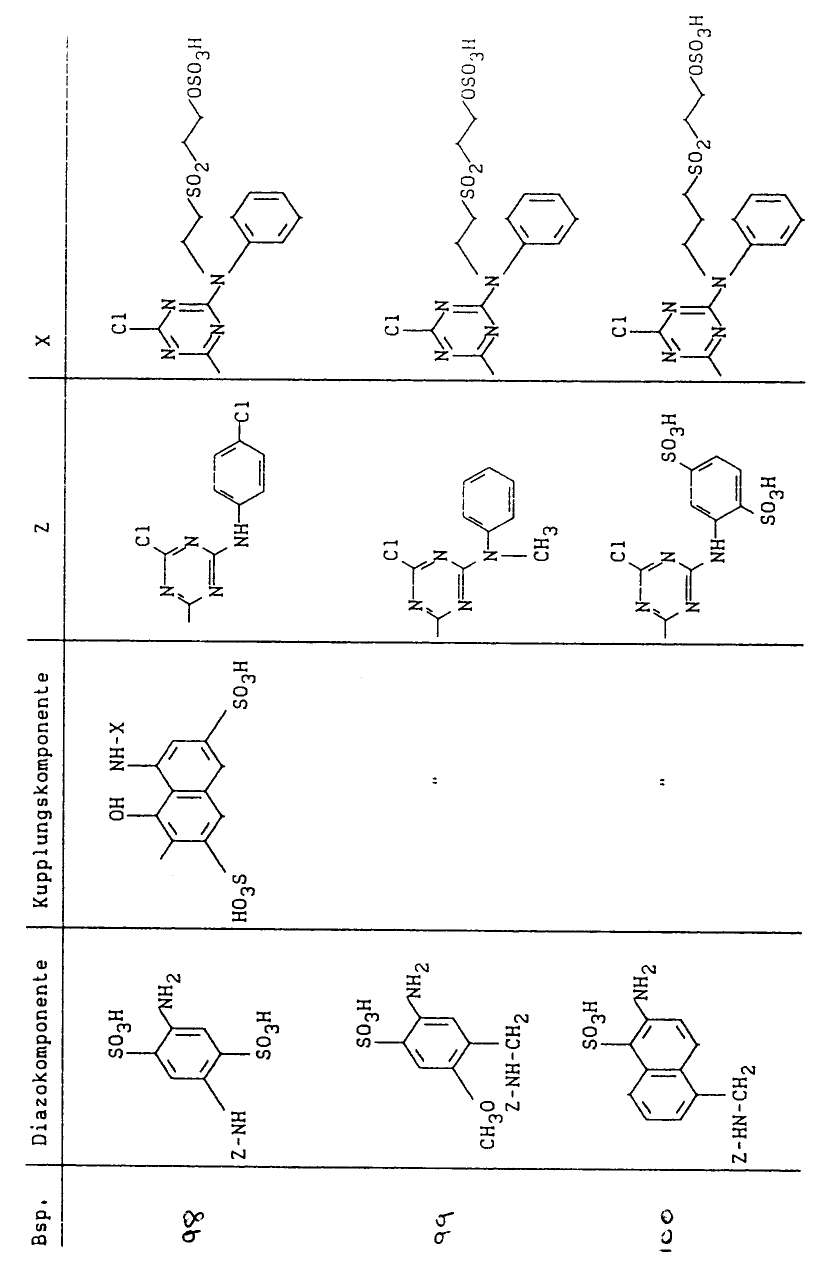

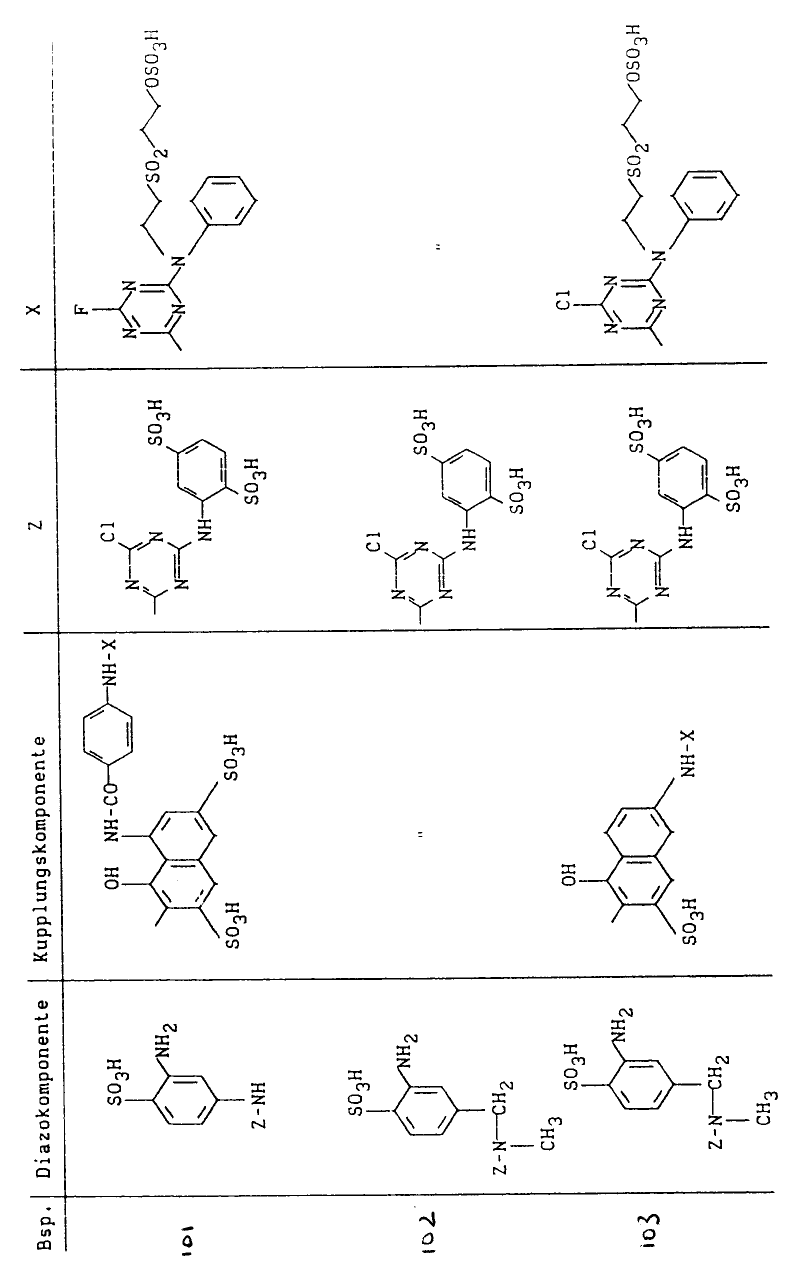

### Beispiel 104

0,2 Mol 6-Fluor-5-chlor-4-(3'-amino-4'-sulfophenyl)amino-pyrimidin (aus 2,4-Diaminobenzolsulfonsäure und 4,6-Difluor-5-chlorpyrimidin hergestellt) werden in Wasser suspendiert und mit 65 ml 30 %iger Salzsäure und 300 g Eis versetzt. Danach werden 46 ml 30 %ige Natriumnitritlösung zugegeben und 1 Stunde bei 0°C gerührt. Überschüssiges Natriumnitrit wird mit Amidosulfonsäure vernichtet und die so erhaltene Diazotierung zur Lösung der Kupplungskomponente aus Beispiel 84 gegeben. Mit Sodalösung (20 g/100 ml) wird ein pH-Wert von 7-8 gehalten. T = 10-15°C. Nach beendeter Kupplung salzt man mit NaCl aus, isoliert und trocknet. Der erhaltene Farbstoff der Formel 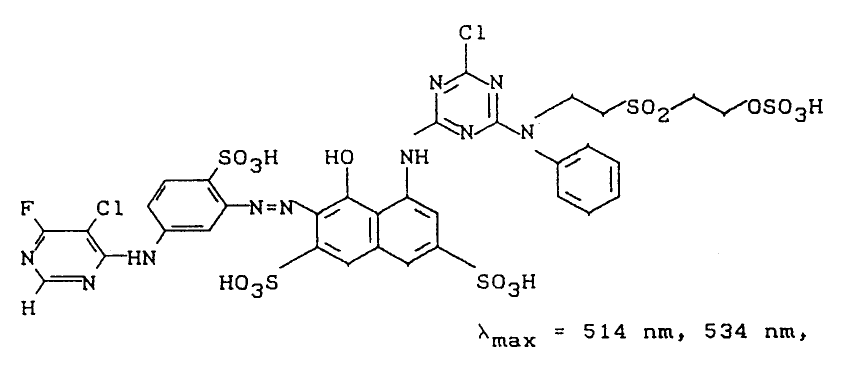 färbt Baumwolle in roten Tönen.

Die Farbstoffe der Beispiele 105-122 der allgemeinen Formel 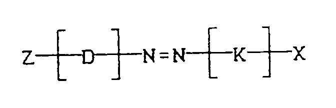 lassen sich unter Verwendung der entsprechenden Diazo- und Kupplungskomponenten und Amine analog herstellen.

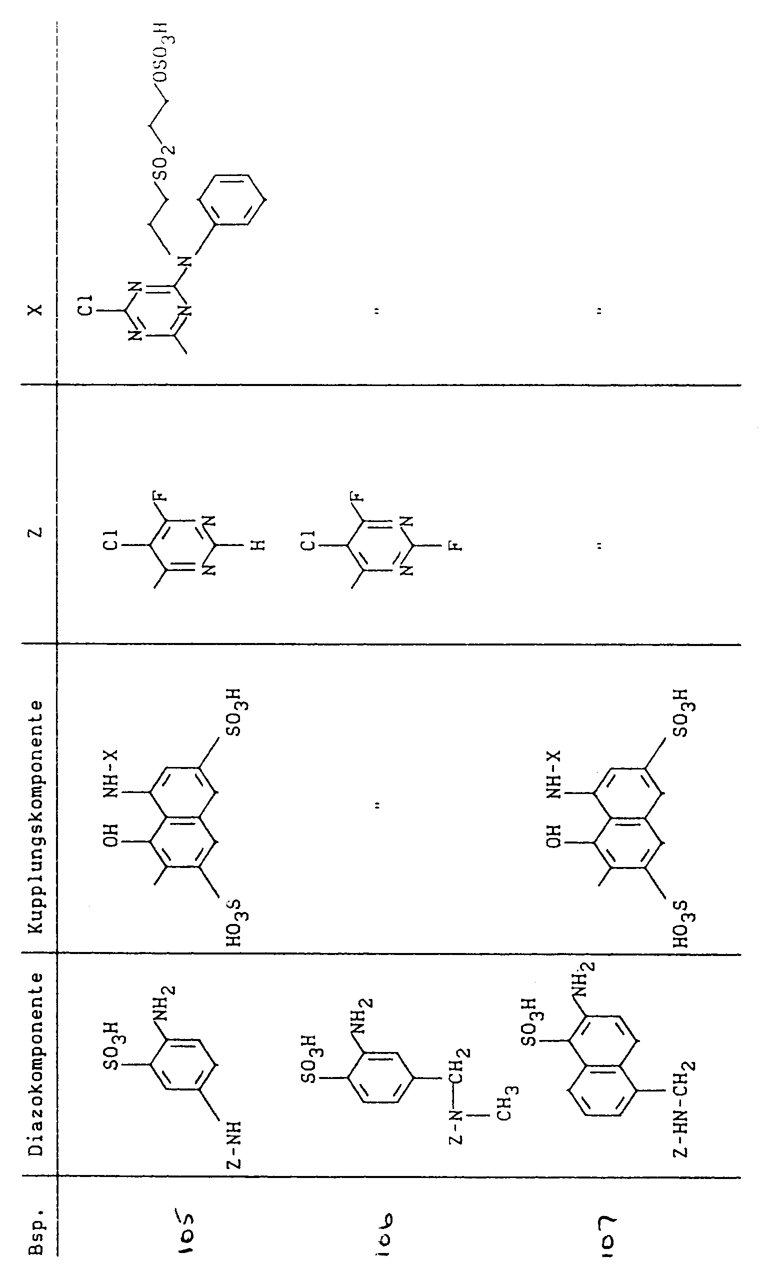

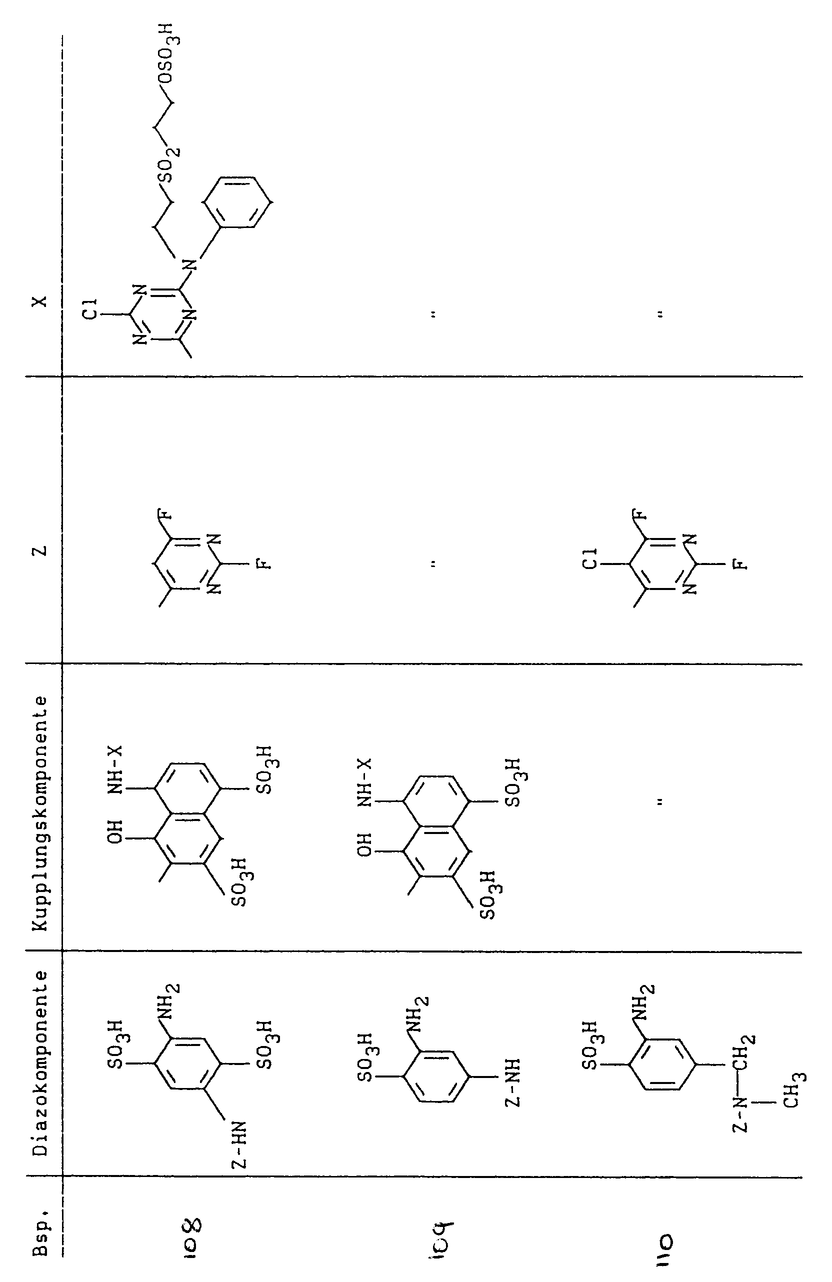

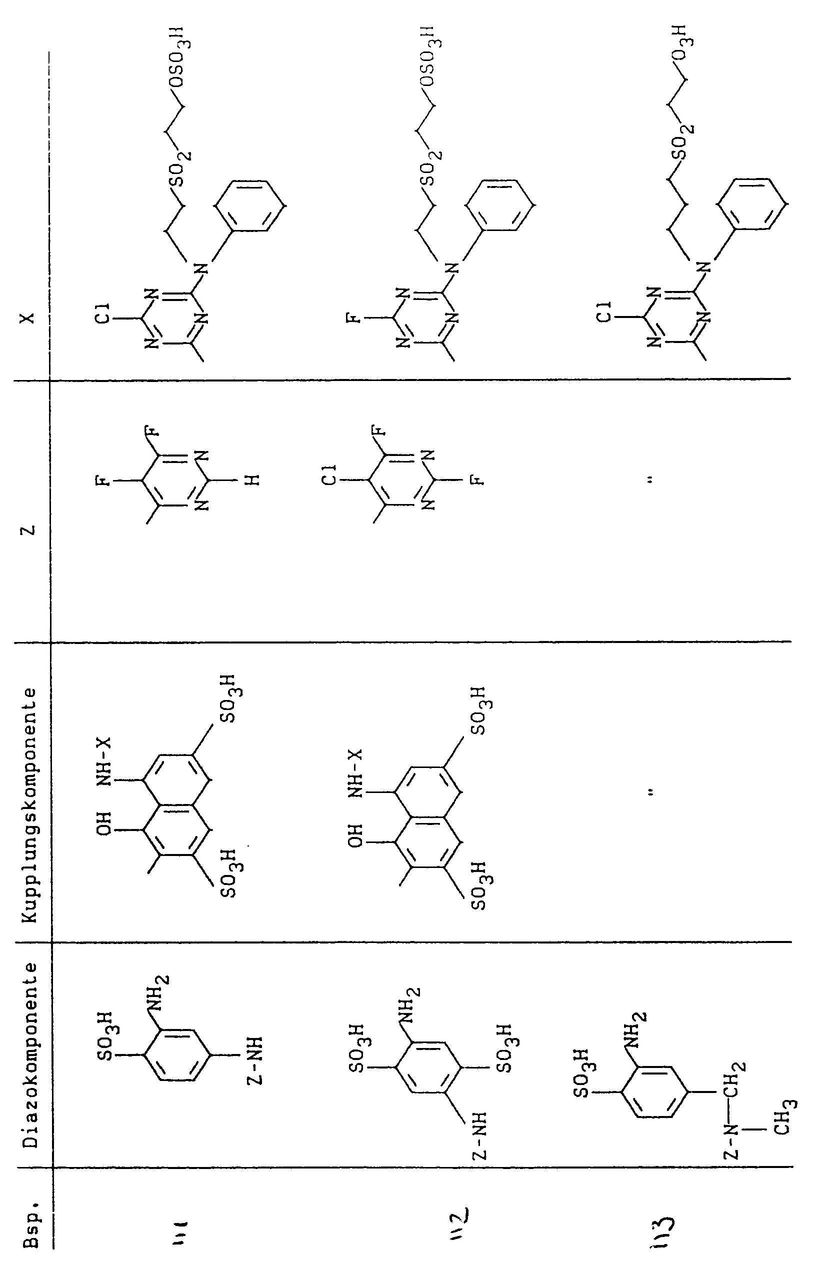

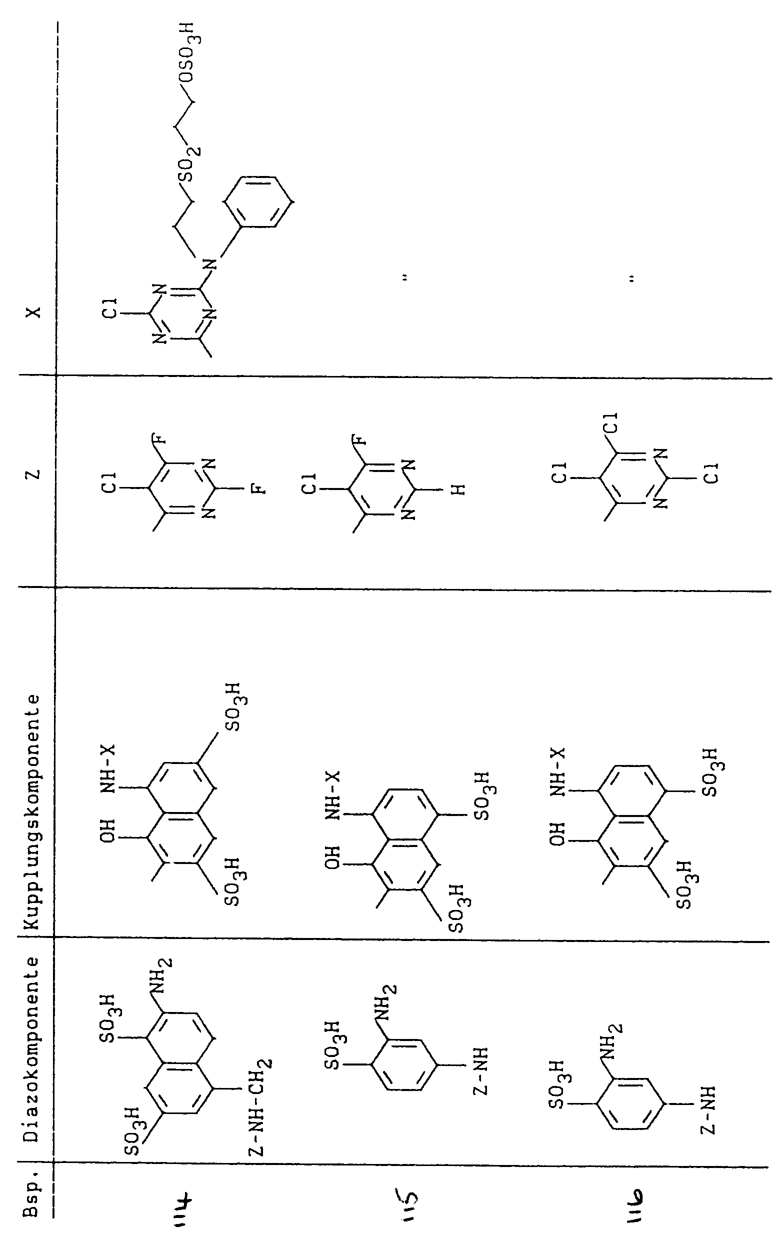

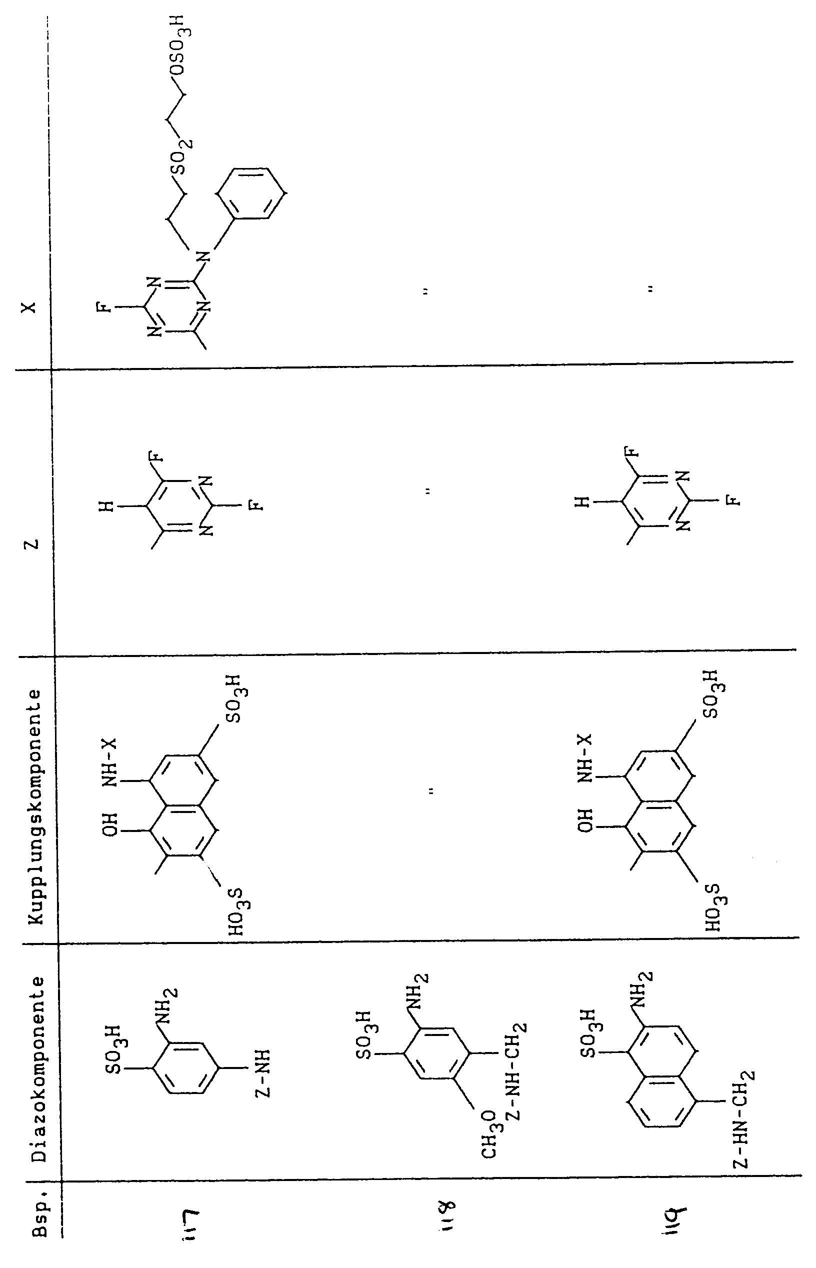

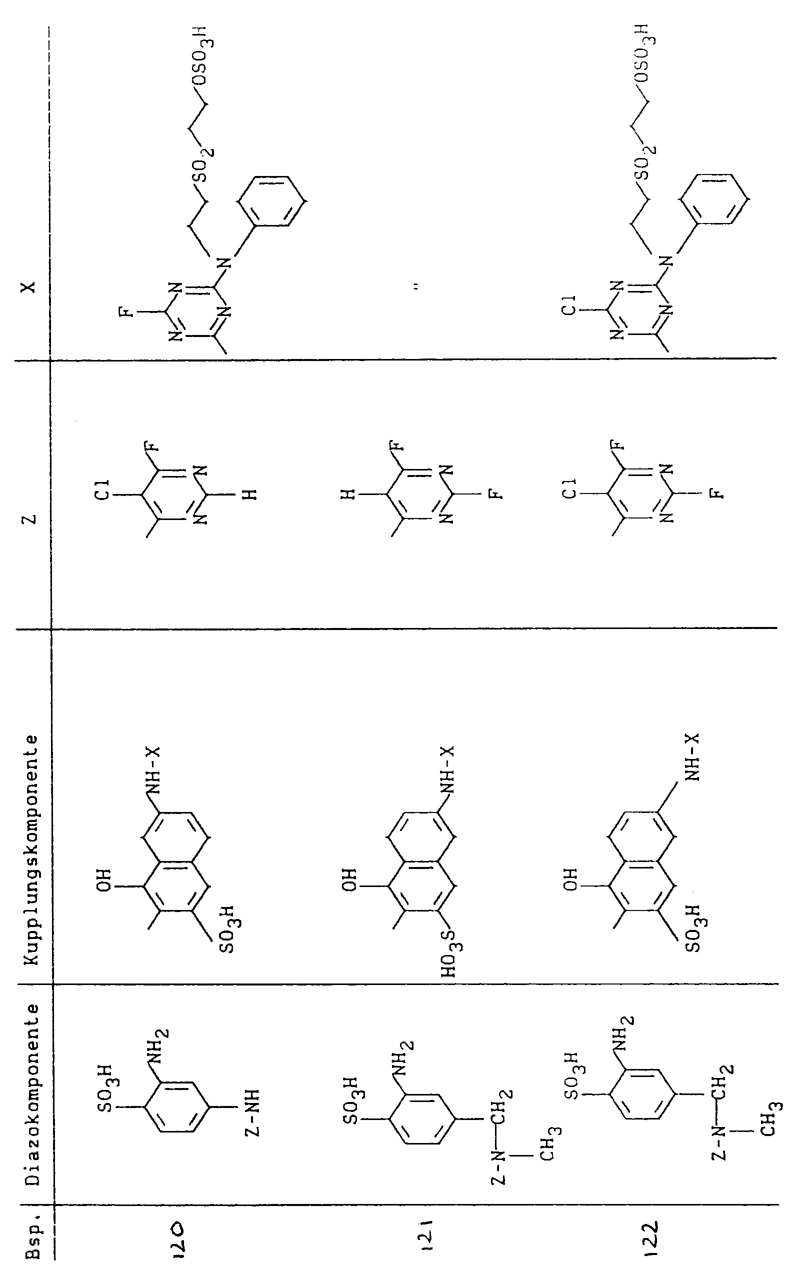

## Patentansprüche

1. Reaktivfarbstoffe der Formel 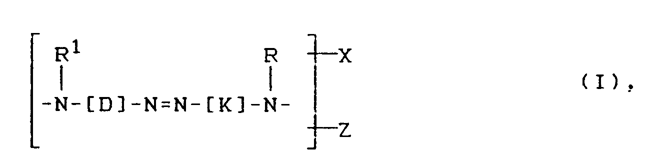 worin
D = Rest einer Diazokomponente der Benzol- oder Naphthalinreihe.
K = Rest einer Kupplungskomponente der Formel 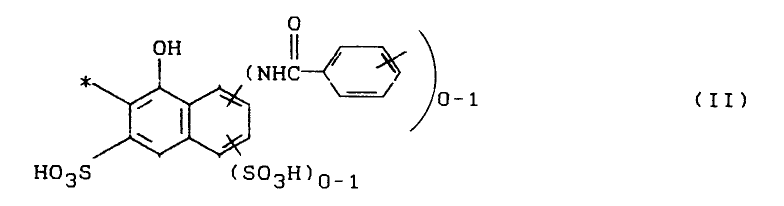 wobei der Rest der Formel II und die Azo-Gruppe über die mit * markierte Bindung miteinander verknüpft sind.
X = Rest der Formel 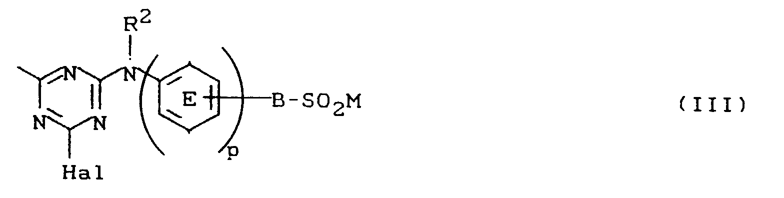 und der Benzolring E gegebenenfalls weiter substituiert ist,
Z = heterocyclischer faserreaktiver Rest, der von X verschieden ist,
R, R¹ = unabhängig voneinander H, gegebenenfalls substituiertes C₁-C₆-Alkyl,
R² = C₁-C₄-Alkyl oder gegebenenfalls substituiertes Phenyl,
Hal = Halogen,
p = 0 oder 1.
B = -(CH₂)ₘ- oder-(CH₂)₂-O-(CH₂)₂-,
m = eine Zahl von 1 bis 6
M = CH=CH₂ oder CH₂CH₂-V
V = OH oder alkalisch abspaltbarer Rest.

2. Reaktivfarbstoffe gemäß Anspruch 1, dadurch gekennzeichnet, daß
K einen bivalenten Rest einer Kupplungskomponente der allgemeinen Formel 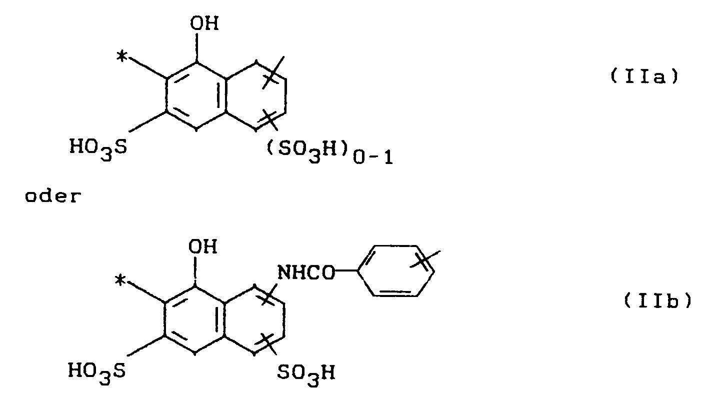 bedeutet, wobei der Rest (IIa) bzw. (IIb) und die Azogruppe über die mit * markierte Bindung miteinander verknüpft sind,
D einen Rest einer Diazokomponente der allgemeinen Formel 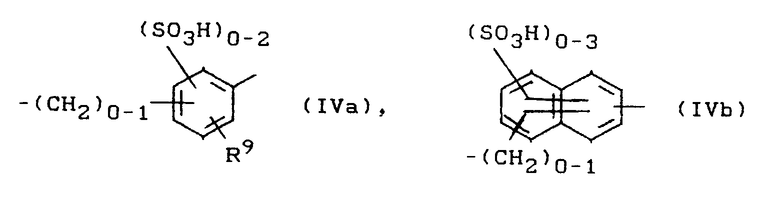 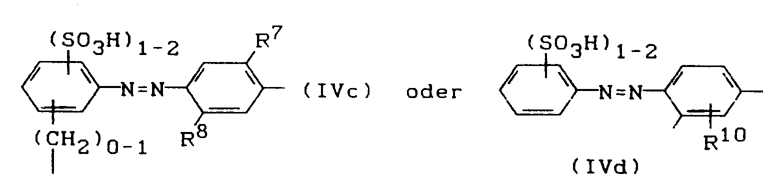 bedeutet, und
R⁷ = H, C₁-C₄-Alkyl, C₁-C₄-Alkoxy, OH oder SO₃H.
R⁸ = für H, C₁-C₄-Alkyl, C₁-C₄-Alkoxy oder Acylamino und
R⁹ und R¹⁰ unabhängig voneinander für H, CH₃, C₂H₅ oder OCH₃ stehen.

3. Reaktivfarbstoffe gemäß Anspruch 1 der Formel (Ia), 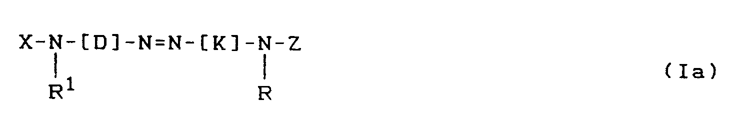 worin
K einen Rest der Formel (IIc) 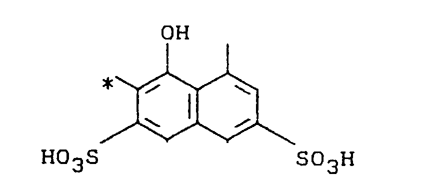 bedeutet, worin der Rest der Formel (IIc) und die Azogruppe über die mit * markierte Bindung miteinander verknüpft sind.
R für Wasserstoff steht.
Z einen Rest der Formel 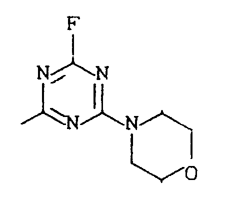
bedeutet, und D, R¹ und X die Bedeutungen gemäß Anspruch 1 besitzen.

4. Reaktivfarbstoffe gemäß Anspruch 1, dadurch gekennzeichnet, daß
X einen Rest der Formel 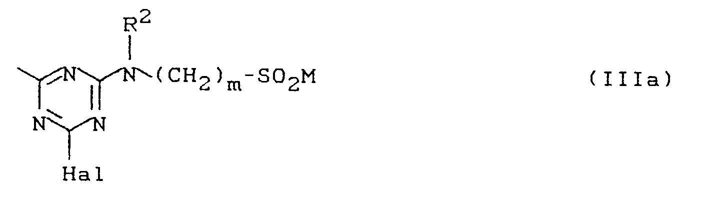
bedeutet, worin
R² = gegebenenfalls substituiertes Phenyl,
m = 2 oder 3,
Hal = F oder Cl
M = CH=CH₂ oder CH₂CH₂V und
V = Cl oder OSO₃H.

5. Reaktivfarbstoffe gemäß Anspruch 1, worin
Z einen faserreaktiven fluorhaltigen Pyrimidinyl-6-Rest oder einen Rest der Formel 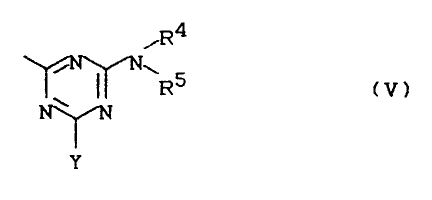
bedeutet, worin
Y für Cl, F oder einen gegebenenfalls substituierten Pyridiniumrest steht,
R⁴ und R⁵ unabhängig voneinander H, gegebenenfalls substituiertes C₁-C₄-Alkyl, C₆-C₁₀-Aryl und C₅-C₆-Cycloalkyl bedeutet oder zusammen mit dem Aminstickstoffatom den Rest eines Morpholino-. Piperidino- oder Piperazinoringes bilden.

6. Reaktivfarbstoffe gemäß Anspruch 4, worin
m = 2.
M = CH=CH₂ oder CH₂CH₂OSO₃H und
R² = Phenyl.

7. Reaktivfarbstoffe gemäß Anspruch 1 der Formeln (2) - (12) 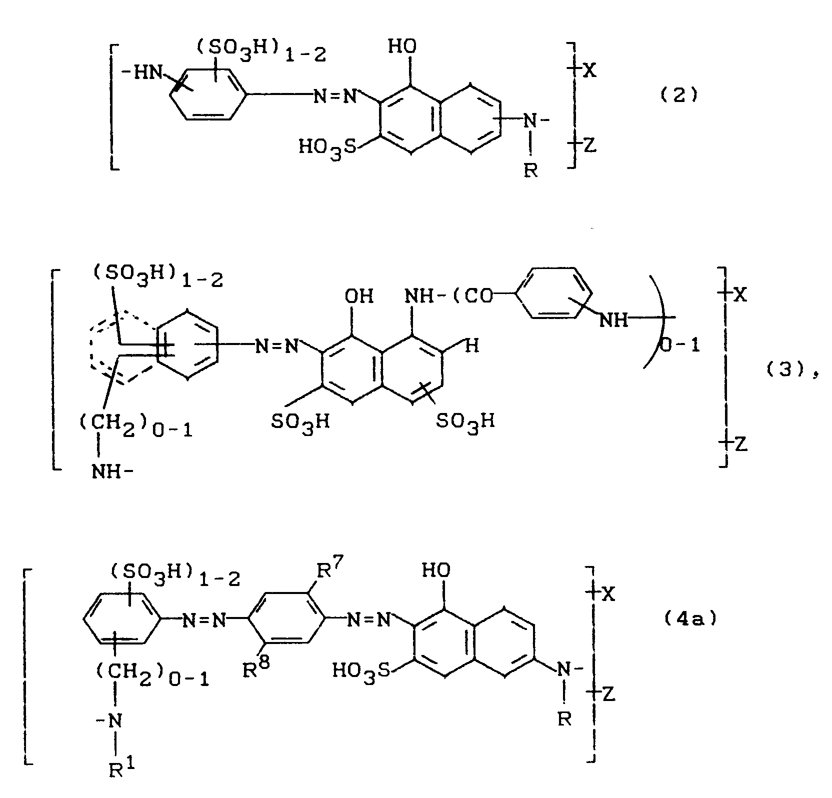 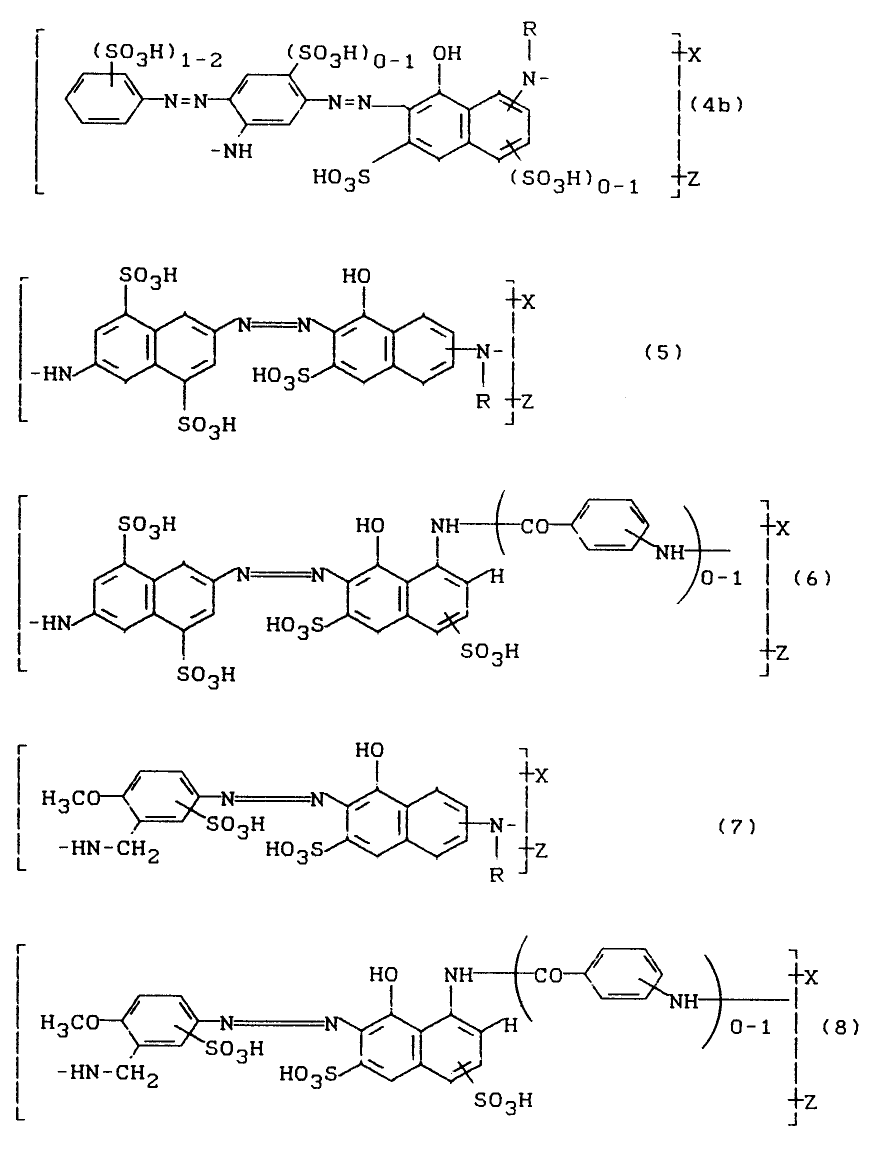 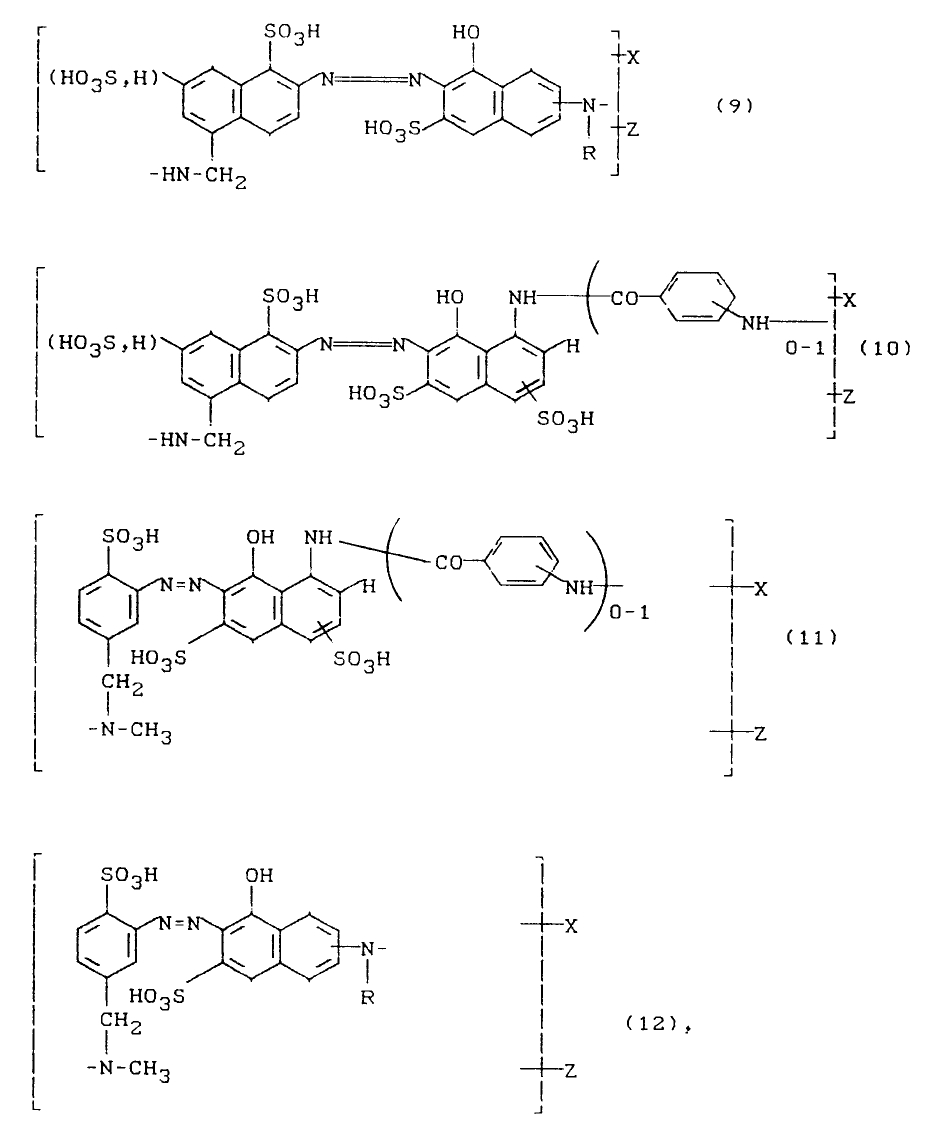 worin
R = H, CH₃ oder C₂H₅,
R⁷ = H, C₁-C₄-Alkyl, C₁-C₄-Alkoxy, OH oder SO₃H,
R⁸ = H, C₁-C₄-Alkyl, C₁-C₄-Alkoxy oder Acylamino bedeutet und X und Z die in Anspruch 1 angegebene Bedeutung besitzt.

8. Reaktivfarbstoffe gemäß Anspruch 1 der Formel 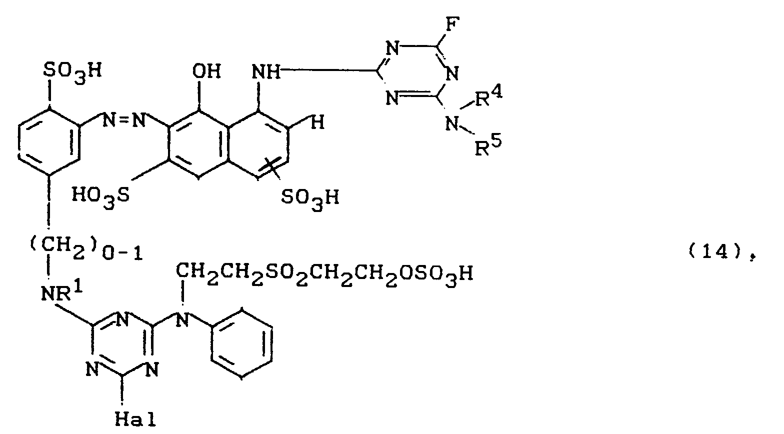 worin
Hal = Cl oder F
R¹ = H, CH₃ oder C₂H₅ und
R⁴ und R⁵ die Bedeutung gemäß Anspruch 5 haben.

9. Verfahren zur Herstellung von Reaktivfarbstoffen der Formel (I) gemäß Anspruch 1, dadurch gekennzeichnet, daß man Farbstoffe der Formel 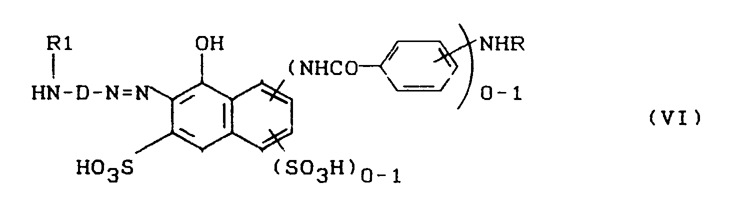 in beliebiger Reihenfolge mit je einem Mol-Equivalent der Reaktivkomponente der Formel 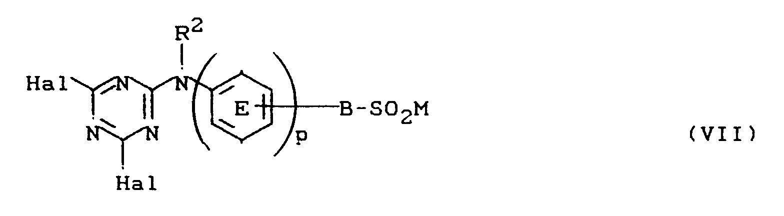 und der Reaktivkomponente der Formel
Z-Hal (VIII),
umsetzt, oder daß man die entsprechenden Farbstoffvorprodukte der Formeln
R¹-NH-D-NH₂ und
H-K-NHR
jeweils mit je einem Mol-Equivalent der Reaktivkomponente der Formel (VII) oder (VIII) umsetzt und durch Diazotierung und Kupplung und gegebenenfalls weiteren Umwandlungsreaktionen in die Reaktivfarbstoffe der Formel (I) überführt, wobei Z, X, D, K, R, R¹, Hal, E, p, B und M die in Anspruch 1 angegebene Bedeutung besitzen.

10. Verwendung der Reaktivfarbstoffe gemäß Anspruch 1 zum Färben und Bedrucken von natürlichen oder synthetischen hydroxy- oder amidgruppenhaltigen Materialien.

11. Textilprodukte. die mit Farbstoffen der Formel I gemäß Anspruch 1 gefärbt oder bedruckt sind.

## Claims

1. Reactive dyestuffs of the formula 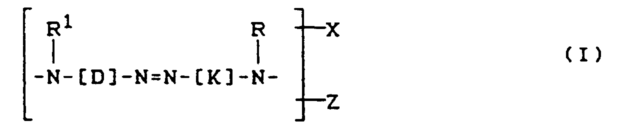 wherein
D = the radical of a diazo component of the benzene or naphthalene series,
K = the radical of a coupling component of the formula 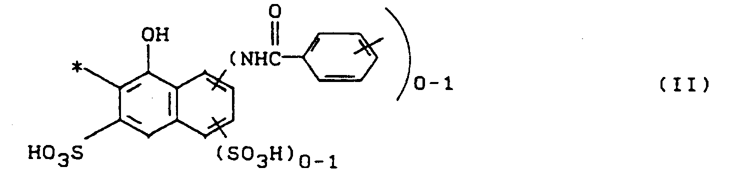 wherein the radical of the formula II and the azo group are linked to one another via the bond marked with *,
X = a radical of the formula 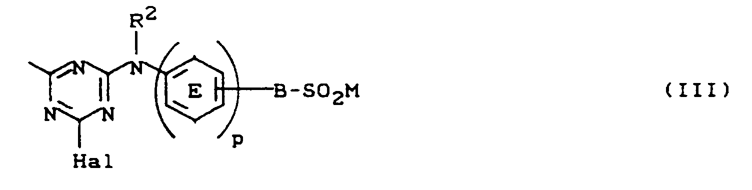 and the benzene ring E is optionally further substituted,
Z = a heterocyclic fibre-reactive radical which differs from X,
R and R¹ = independently of one another H or optionally substituted C₁-C₆-alkyl,
R² = C₁-C₄-alkyl or optionally substituted phenyl,
Hal = halogen,
p = 0 or 1,
B = -(CH₂)ₘ or -(CH₂)₂-O-(CH₂)₂-,
m = a number from 1 to 6
M = CH=CH₂ or CH₂CH₂-V,
V = OH or a radical which can be split off under alkaline conditions.

2. Reactive dyestuffs according to Claim 1, characterized in that
K denotes a bivalent radical of a coupling component of the general formula 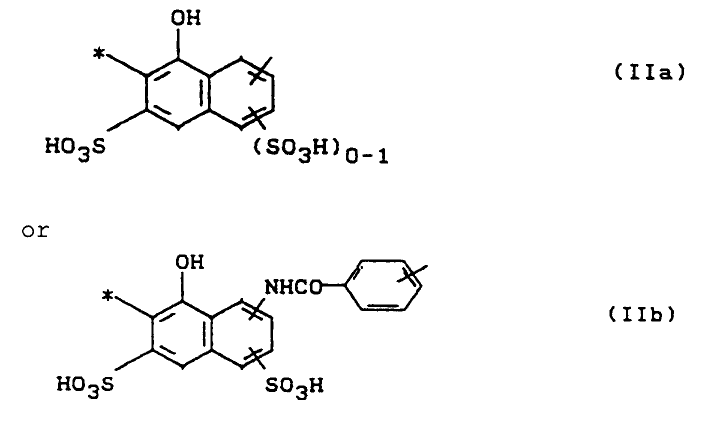 wherein the radical (IIa) or (IIb) and the azo group are linked to one another via the bond marked with *,
D denotes a radical of a diazo component of the general formula 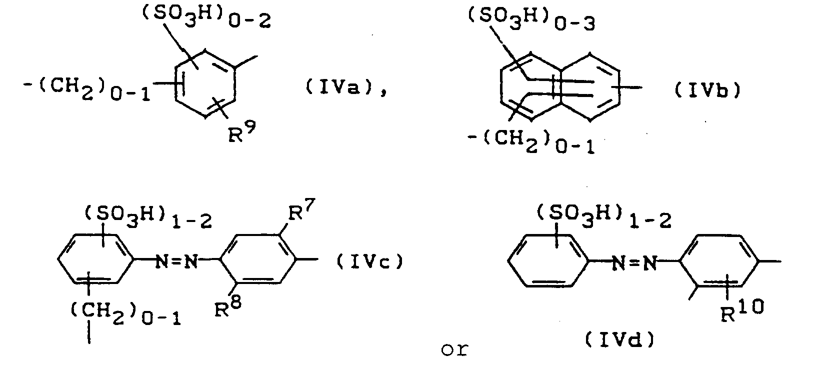 and
R⁷ = H, C₁-C₄-alkyl, C₁-C₄-alkoxy, OH or SO₃H,
R⁸ represents H, C₁-C₄-alkyl, C₁-C₄-alkoxy or acylamino and
R⁹ and R¹⁰ independently of one another represent H, CH₃, C₂H₅ or OCH₃.

3. Reactive dyestuffs according to Claim 1 of the formula (Ia) 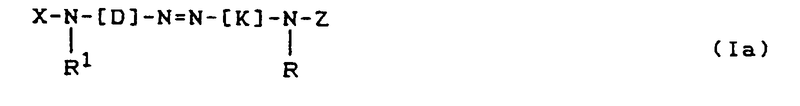 wherein
K denotes a radical of the formula (IIc) 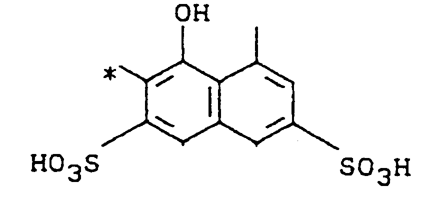 wherein the radical of the formula (IIc) and the azo group are linked to one another via the bond marked with *,
R represents hydrogen,
Z denotes a radical of the formula 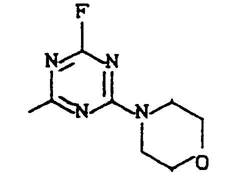 and D, R¹ and X have the meanings according to Claim 1.

4. Reactive dyestuffs according to Claim 1, characterized in that
X denotes a radical of the formula 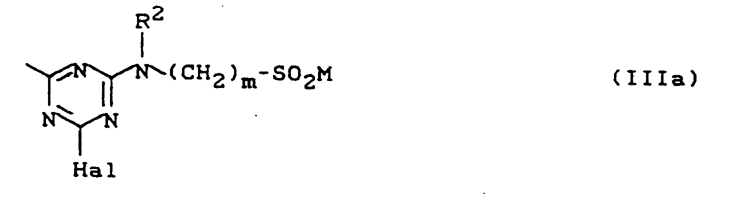
wherein
R² = optionally substituted phenyl,
m = 2 or 3,
Hal = F or Cl,
M = CH=CH₂ or CH₂CH₂V and
V = Cl or OSO₃H.

5. Reactive dyestuffs according to Claim 1, wherein
Z denotes a fibre-reactive, fluorine-containing pyrimidin-6-yl radical or a radical of the formula 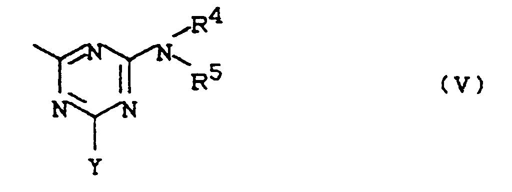
wherein
Y represents Cl, F or an optionally substituted pyridinium radical and
R⁴ and R⁵ independently of one another denote H, optionally substituted C₁-C₄-alkyl, C₆-C₁₀-aryl or C₅-C₆-cycloalkyl or, together with the amine nitrogen atom, form the radical of a morpholino, piperidino or piperazino ring.

6. Reactive dyestuffs according to Claim 4, wherein
m = 2,
M = CH=CH₂ or CH₂CH₂OSO₃H and
R² = phenyl.

7. Reactive dyestuffs according to Claim 1 of the formulae (2) - (12) 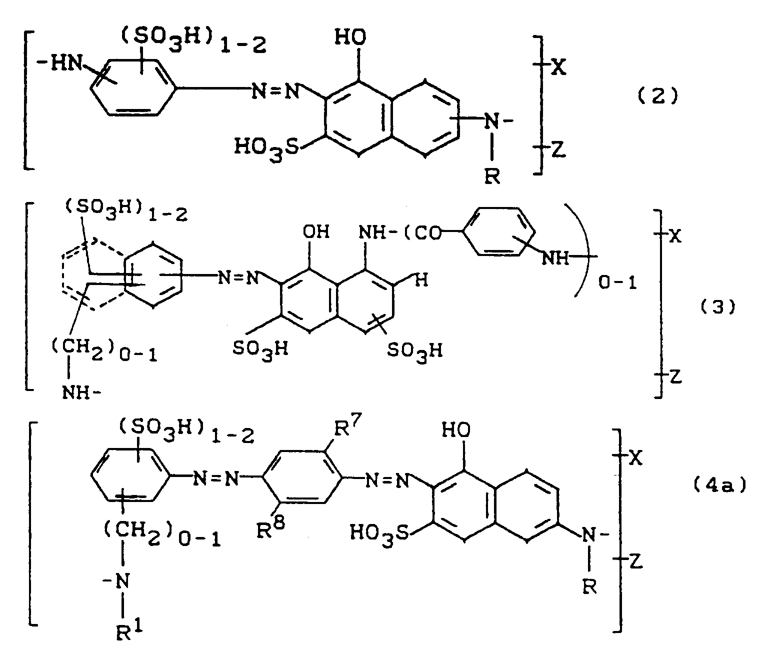 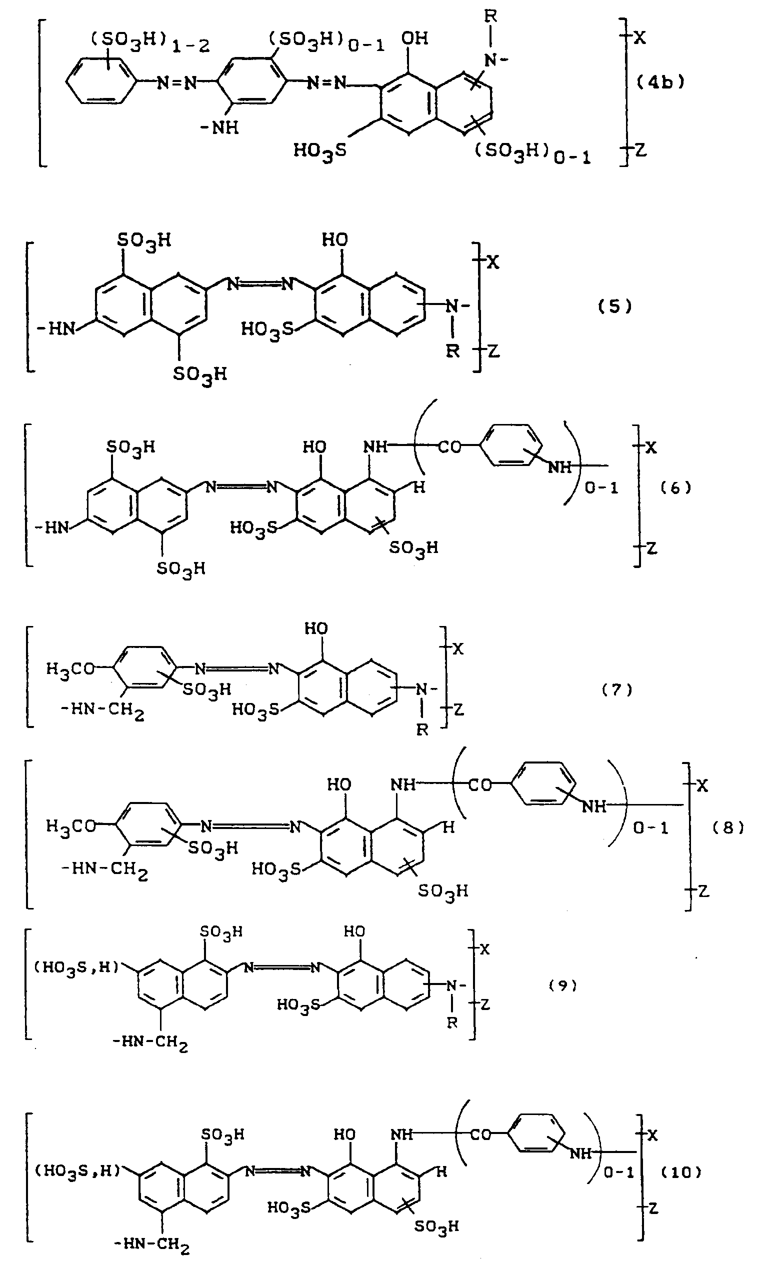 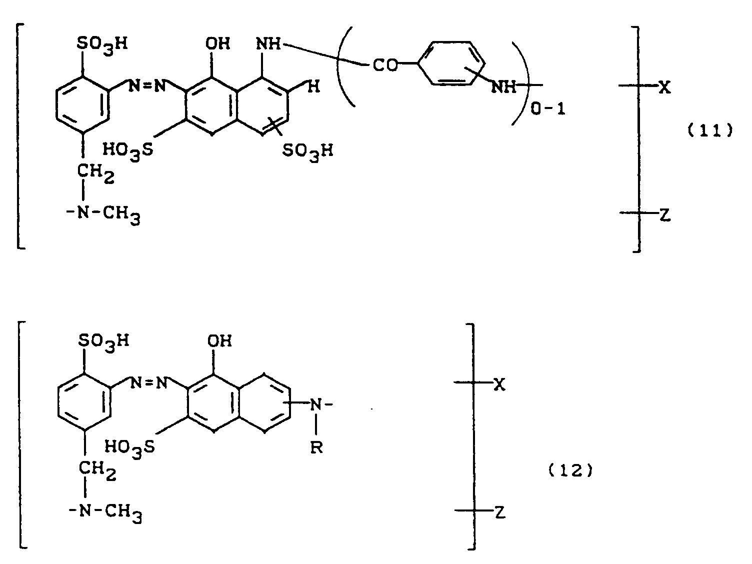 wherein
R = H, CH₃ or C₂H₅,
R⁷ = H, C₁-C₄-alkyl, C₁-C₄-alkoxy, OH or SO₃H,
R⁸ = H, C₁-C₄-alkyl, C₁-C₄-alkoxy or acylamino, and X and Z have the meaning given in Claim 1.

8. Reactive dyestuffs according to Claim 1 of the formula 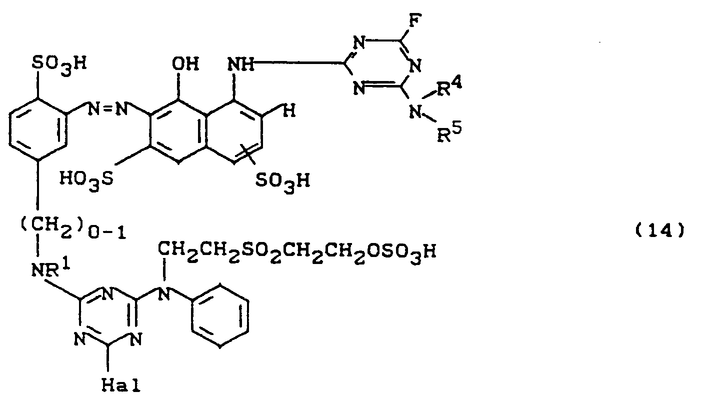 wherein
Hal = Cl or F,
R¹ = H, CH₃ or C₂H₅ and
R⁴ and R⁵ have the meaning according to Claim 5.

9. Process for the preparation of reactive dyestuffs of the formula (I) according to Claim 1, characterized in that dyestuffs of the formula 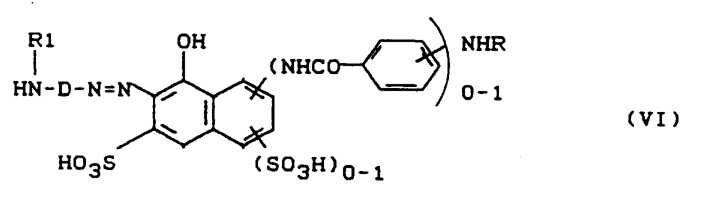 are reacted in any desired sequence with in each case one molar equivalent of the reactive component of the formula 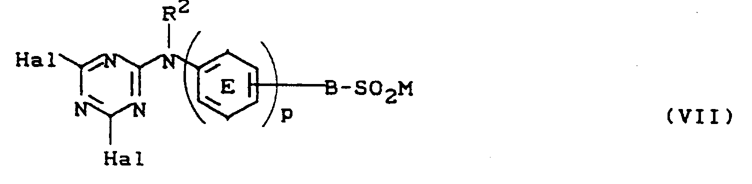 and the reactive component of the formula
Z-Hal (VIII)
or in that the corresponding dyestuff precursors of the formulae
R¹-NH-D-NH₂ and
H-K-NHR
are each reacted with in each case one molar equivalent of the reactive component of the formula (VII) or (VIII) and the products are converted into the reactive dyestuffs of the formula (I) by diazotization and coupling and if appropriate further conversion reactions, Z, X, D, K, R, R¹, Hal, E, p, B and M having the meaning given in Claim 1.

10. Use of the reactive dyestuffs according to Claim 1 for dyeing and printing naturally occurring or synthetic materials containing hydroxyl or amide groups.

11. Textile products which are dyed or printed with dyestuffs of the formula I according to Claim 1.

## Revendications

1. Colorants réactifs de formule 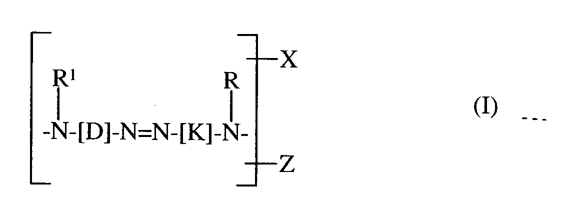 où
D = le reste d'un composant diazoïque de la série du benzène ou du naphtalène,
K = le reste d'un composant de couplage de formule 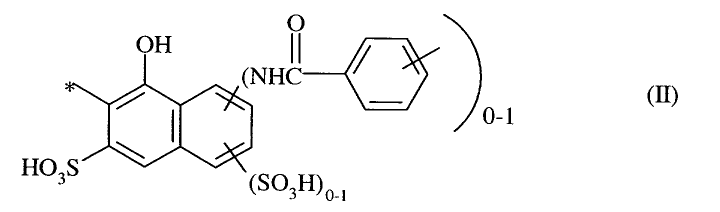 où le reste de formule II et le composant azoïque sont reliés l'un à l'autre par la liaison désignée par *,
X = un reste de formule 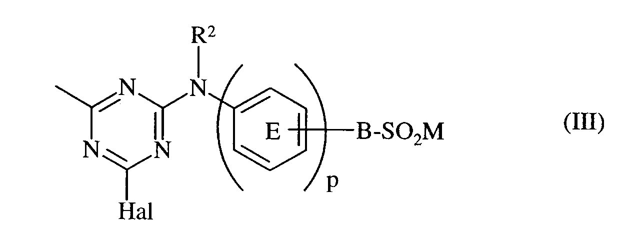 et le cycle benzénique E est éventuellement substitué encore,
Z = un reste hétérocyclique réactif avec les fibres qui est différent de X,
R, R¹ = indépendamment l'un de l'autre H, alkyle en C₁-C₆ éventuellement substitué
R² = alkyle en C₁-C₄ ou phényle éventuellement substitué
Hal = halogène,
p = 0 ou 1
B = -(CH₂)ₘ- ou -(CH₂)₂-O-(CH₂)₂-
m= un nombre de 1 à 6 et
M = CH = CH₂ ou CH₂CH₂-V,
V = OH ou un reste clivable dans des conditions alcalines.

2. Colorants réactifs selon la revendication 1, caractérisés en ce que
K est un reste divalent d'un composant de couplage de formule générale 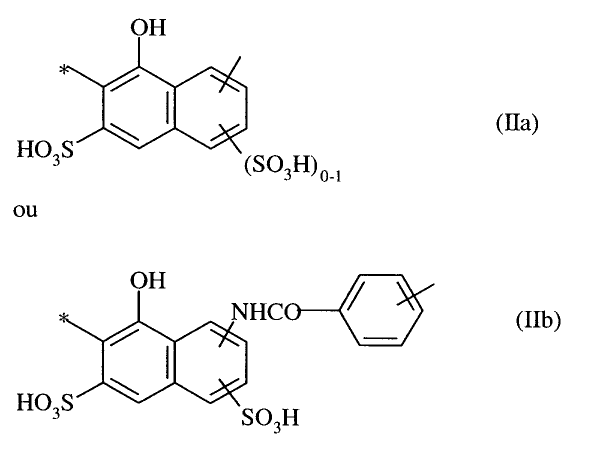 où le reste (IIa) ou (IIb) et le groupe azoïque sont liés l'un à l'autre par la liaison désignée par *,
D représente un reste d'un composant diazoïque de formule générale 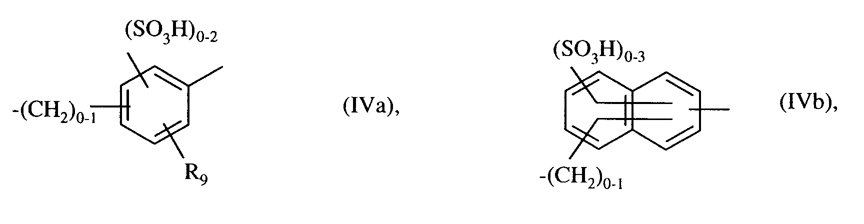 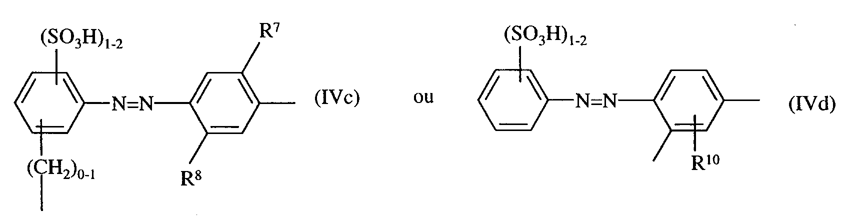 et
R⁷ = H, alkyle en C₁-C₄, alcoxy en C₁-C₄, OH ou SO₃H,
R⁸ = H, alkyle en C₁-c₄, alcoxy en C₁-C₄, acylamino, et
R⁹ et R¹⁰ = indépendamment l'un de l'autre H, CH₃, C₂H₅ ou OCH₃.

3. Colorants réactifs selon la revendication 1, de formule (Ia) 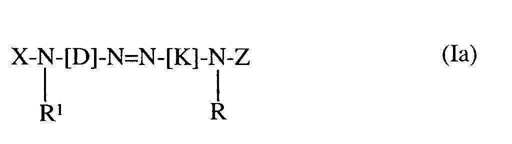 où
K représente un reste de formule (IIc) 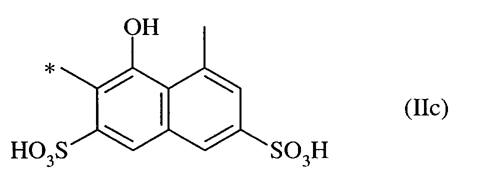 où le reste de formule (IIc) et le groupe azoïque sont liés l'un à l'autre par la liaison désignée par *,
R représente l'hydrogène,
Z représente un reste de formule 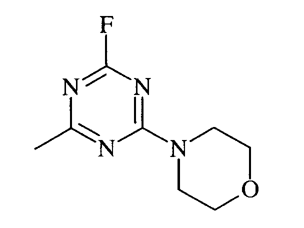 et D, R¹ et X possèdent les significations selon la revendication 1.

4. Colorants réactifs selon la revendication 1, caractérisés en ce que
X représente un reste de formule 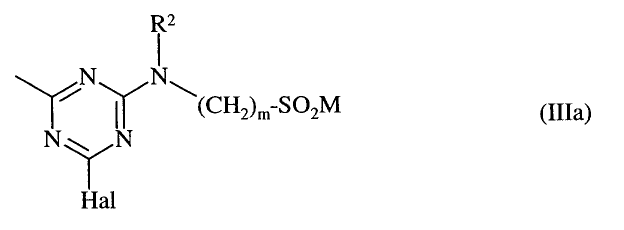
où
R² = phényle éventuellement substitué,
m= 2 ou 3,
Hal = F ou Cl,
M = CH=CH₂ ou CH₂CH₂V et
V = Cl ou OSO₃H.

5. Colorants réactifs selon la revendication 1, où
Z représente un reste pyrimidin-6-yle fluoré réactif avec les fibres ou un reste de formule 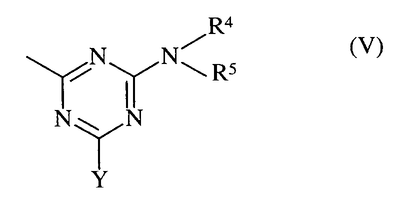
où
Y représente Cl, F ou un reste pyridinium éventuellement substitué,
R⁴ et R⁵ représentent indépendamment l'un de l'autre H, alkyle en C₁-C₄, aryle en C₆-C₁₀ et cycloalkyle en C₅-C₆ éventuellement substitués ou forment avec l'atome d'azote de l'amine le reste d'un cycle morpholino, pipéridino ou pipérazino.

6. Colorants réactifs selon la revendication 4, où
m = 2,
M = CH=CH₂ ou CH₂CH₂OSO₃H et
R² = phényle.

7. Colorants réactifs selon la revendication 1 des formules (2)-(12) 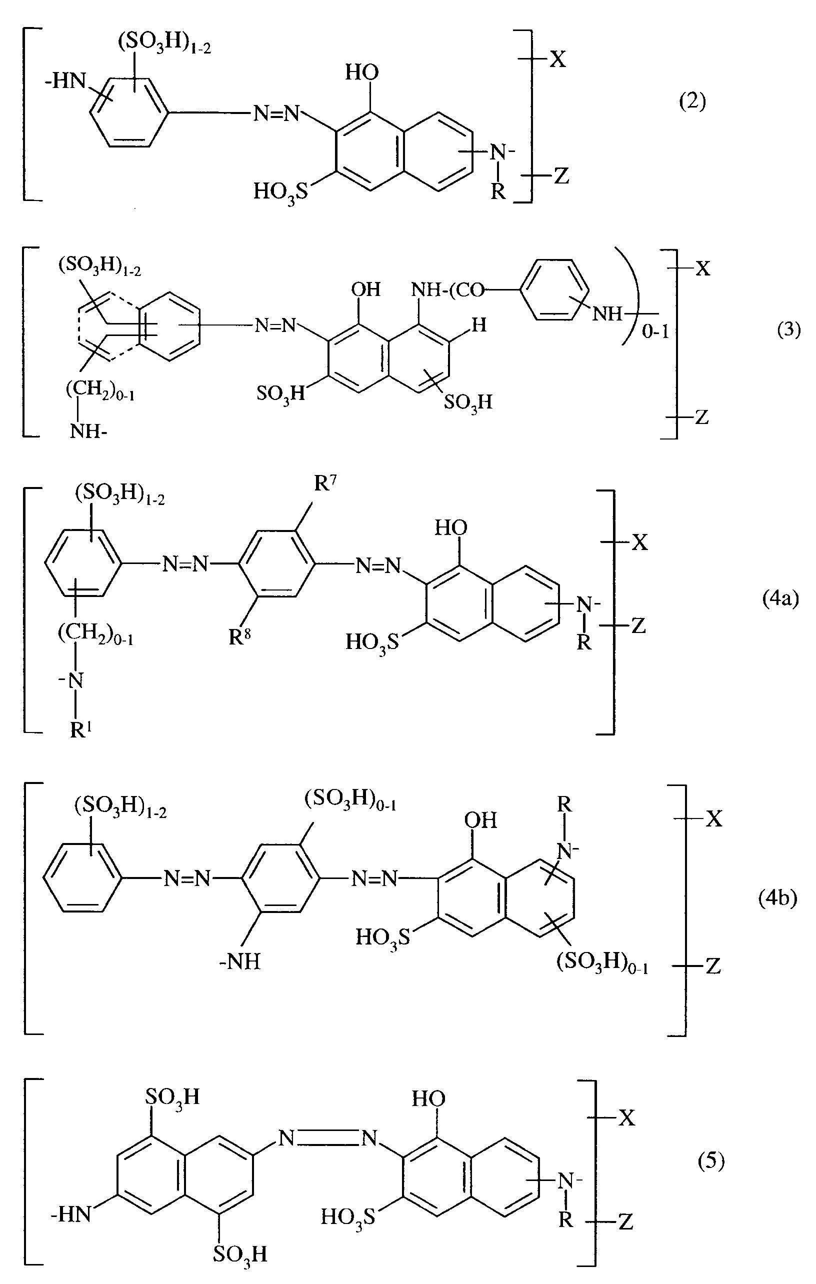 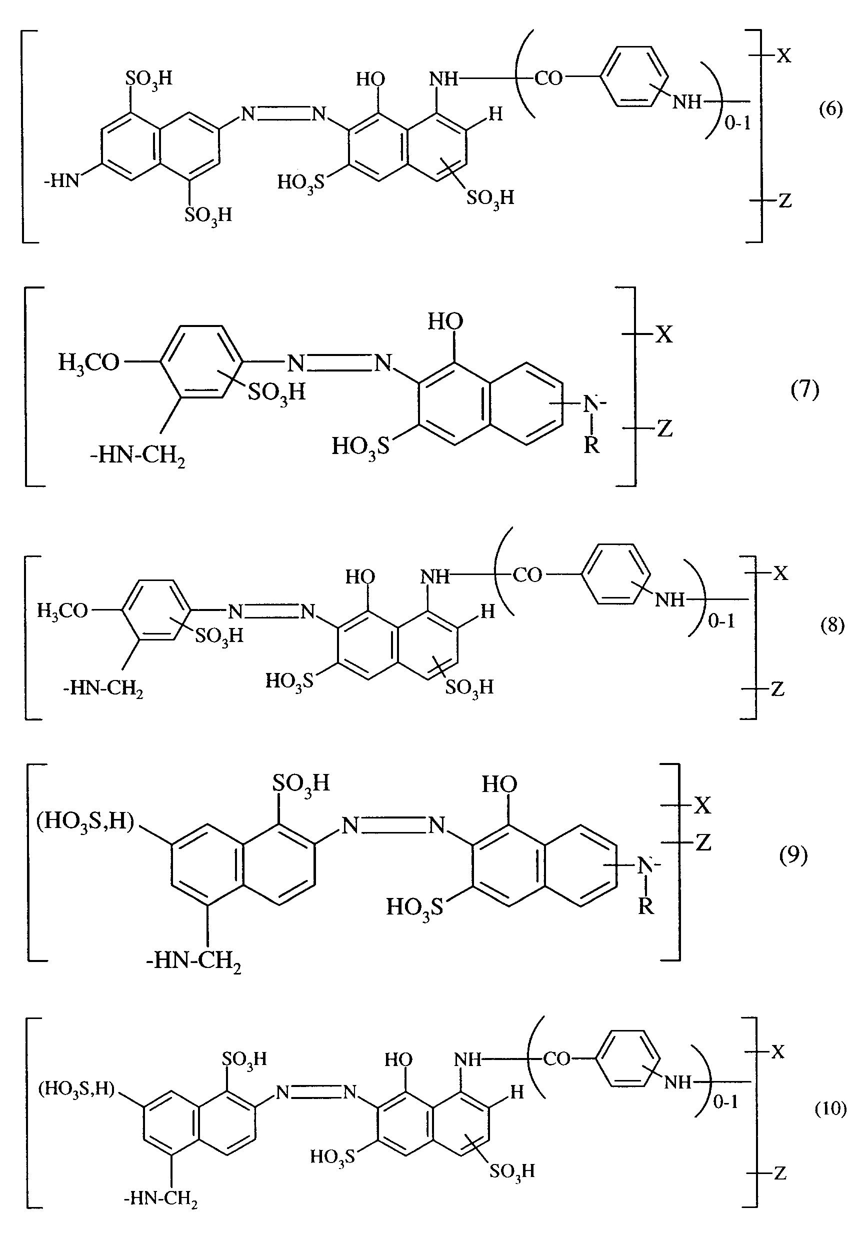 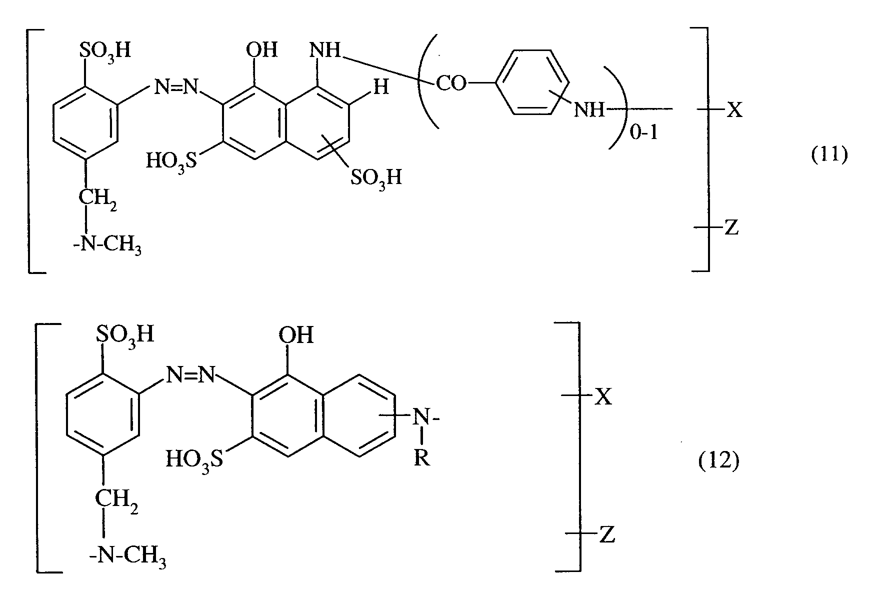 où
R = H, CH₃ ou C₂H₅,
R⁷ = H, alkyle en C₁-C₄, alcoxy en C₁-C₄, OH ou SO₃H,
R⁸ = H, alkyle en C₁-C₄, alcoxy en C₁-C₄ ou acylamino et X et Z possèdent la signification indiquée dans la revendication 1.

8. Colorants réactifs selon la revendication 1 de formule 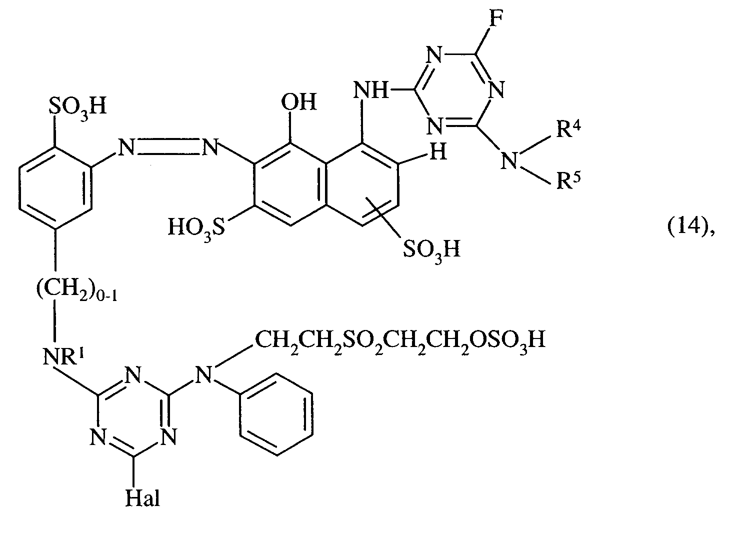 où
Hal = Cl ou F,
R¹ = H, CH₃ ou C₂H₅ et
R⁴ et R⁵ ont la signification selon la revendication 5.

9. Procédé de préparation de colorants réactifs de formule (1) selon la revendication 1, caractérisé en ce que l'on fait réagir des colorants de formule 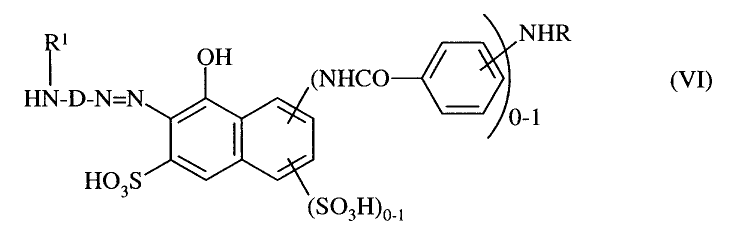 dans un ordre quelconque avec un équivalent molaire du composant réactif de formule 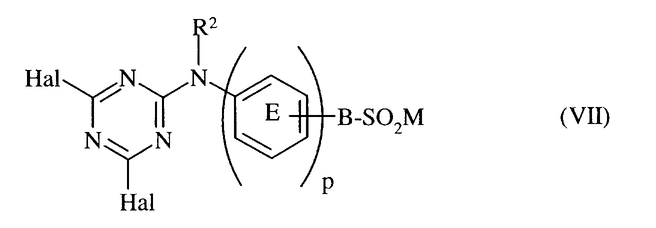 et un équivalent molaire du composant réactif de formule
Z-Hal (VIII)
ou en ce que l'on fait réagir les précurseurs de colorants correspondants des formules
R¹-NH-D-NH₂ et
H-K-NHR
avec un équivalent molaire du composant réactif de formule (VII) ou (VIII) et on les convertit en les colorants réactifs de formule (1) par diazotation et couplage et éventuellement par d'autres réactions de conversion, Z, X, D, K, R, R¹, Hal, E, p. B et M possédant la signification indiquée dans la revendication 1.

10. Utilisation des colorants réactifs selon la revendication 1 pour la teinture et l'impression de matières naturelles ou synthétiques contenant des groupes hydroxyle ou amide.

11. Produits textiles qui sont teints ou imprimés avec des colorants de formule I selon la revendication 1.
